# EUROPEAN PATENT APPLICATION

(11) **EP 4 712 428 A1**
(43) Date of publication of application: **18.03.2026**
(21) Application number: 24813880.2
(22) Date of filing: 02.04.2024
(51) Int. Cl.: H04L 43/0852

(54) **DELAY MEASUREMENT METHOD AND COMMUNICATION APPARATUS**

(30) Priority: 31.05.2023 CN 202310647514
(71) Applicant: Huawei Technologies Co., Ltd., Shenzhen, Guangdong 518129 (CN)
(72) Inventor: HU, Xingxing, Shenzhen, Guangdong 518129 (CN)
(74) Representative: Epping - Hermann - Fischer
(86) International application number: PCT/CN2024/085421
(87) International publication number: WO 2024/244674

(57) **Abstract**

This application discloses a latency measurement method and a communication apparatus. A core network device can collect time information of a first packet in a first protocol data unit PDU set at a transmit end and time information of a last packet at a receive end, and determine a transmission latency (for example, an air interface downlink latency, an air interface uplink latency, a downlink latency at an interface between an access network device and the core network device, and an uplink latency at the interface between the access network device and the core network device) of the first PDU set between the transmit end and the receive end based on the time information of the first packet at the transmit end and the time information of the last packet at the receive end. Therefore, a problem in the conventional technology that the core network device cannot obtain a transmission latency of a PDU set is resolved, helping optimize a transmission resource based on a transmission latency of a PDU set, and improving network transmission performance.

## Description

This application claims priority to Chinese Patent Application No. 202310647514.5, filed with the China National Intellectual Property Administration on May 31, 2023 and entitled "LATENCY MEASUREMENT METHOD AND COMMUNICATION APPARATUS", which is incorporated herein by reference in its entirety.

### TECHNICAL FIELD

Embodiments of this application relate to the communication field, and in particular, to a latency measurement method and a communication apparatus.

### BACKGROUND

With development of communication requirements, increasingly more services need to ensure low latency performance. For example, an ultra-reliable low-latency communication (ultra-reliable low-latency communication, URLLC) service requires a latency within 0.5 ms. To ensure service performance, an operator needs to know latency performance of a current network. Currently, a function of quality of service (quality of service, QoS) monitoring (QoS monitoring) for a quality of service flow level is introduced in a communication standard. The function is used to measure a transmission latency of a data packet corresponding to a QoS flow between a user plane of an access network device and a user plane of a core network device and a transmission latency between the access network device and a terminal device. A control plane of the core network device can notify the access network device to enable the latency measurement function (for example, specifying to measure an uplink latency and/or a downlink latency in control plane signaling). After the access network device receives the control plane signaling, the access network device can send, to the core network device, latency measurement information for a data packet between the access network device and the terminal device and latency measurement information for a data packet between the access network device and the core network device. Then, the core network device can calculate a transmission latency for a data packet (that is, a transmission latency at a packet granularity) between the terminal device and the core network device based on the received latency measurement information.

The foregoing function of the quality of service monitoring for the QoS flow level is used to measure a transmission latency of a data packet (for example, a protocol data unit (protocol data unit, PDU) packet in a PDU set) in the user plane. In a service such as virtual reality (Virtual Reality, VR) with a requirement of a low latency, a transmission latency of only one data packet is not sufficient enough to reflect quality of a service. For example, the PDU set is a video frame. Only when all data packets of a video frame are correctly received within an expected latency, a decoder of the terminal device can correctly decode this frame of image; otherwise, the terminal device cannot display this frame of image, that is, a frame loss occurs. A frame loss may cause video stuttering, further affecting user viewing experience. Therefore, a transmission latency of a video frame is an important network performance indicator. A service such as VR that needs to ensure low latency performance has a high requirement on a transmission latency of at least one PDU set.

How to obtain the transmission latency of the PDU set is a problem that needs to be resolved urgently.

### SUMMARY

This application provides a latency measurement method and a communication apparatus to measure a latency of a PDU set, so as to obtain a transmission latency of the PDU set between interfaces of a receive end and a transmit end.

According to a first aspect, this application provides a latency measurement method. The latency measurement method may be performed by a core network device, or may be performed by a component (for example, a processor, a chip, or a chip system) of a core network device. The core network device is used as an example. The core network device obtains time information of a first packet in a first protocol data unit PDU set at a transmit end, and obtains time information of a last packet in the first PDU set at a receive end. Then, the core network device determines a transmission latency of the first PDU set between the transmit end and the receive end based on the time information of the first packet at the transmit end and the time information of the last packet at the receive end.

For example, if the transmit end is the core network device and the receive end is an access network device, the transmission latency of the first PDU set between the transmit end and the receive end is a downlink latency of the first PDU set at an interface (for example, a next generation (next generation, NG) interface) between the core network device and the access network device.

For example, if the transmit end is the access network device and the receive end is the core network device, the transmission latency of the first PDU set between the transmit end and the receive end is an NG interface uplink latency of the first PDU set.

For example, if the transmit end is the access network device and the receive end is the terminal device, the transmission latency of the first PDU set between the transmit end and the receive end is an air interface downlink latency of the first PDU set.

For example, if the transmit end is the terminal device and the receive end is the access network device, the transmission latency of the first PDU set between the transmit end and the receive end is an air interface uplink latency of the first PDU set.

In this application, the core network device can collect latency measurement information (that is, the time information of the first packet at the transmit end) of the first packet in the first PDU set and latency measurement information (that is, the time information of the last packet at the receive end) of the last packet, and determine the transmission latency (for example, the air interface downlink latency, the air interface uplink latency, an NG interface downlink latency, or an NG interface uplink latency) of the first PDU set between the transmit end and the receive end based on the time information of the first packet at the transmit end and the time information of the last packet at the receive end. Therefore, a problem in the conventional technology that the core network device cannot obtain a transmission latency of a PDU set is resolved, helping optimize a transmission resource based on a transmission latency of a PDU set, and improving network transmission performance.

In a possible implementation, that the core network device determines the transmission latency of the first PDU set between the transmit end and the receive end based on the time information of the first packet at the transmit end and the time information of the last packet at the receive end includes: The core network device determines a difference between the time information of the last packet at the receive end and the time information of the first packet at the transmit end as the transmission latency of the first PDU set between the transmit end and the receive end.

In this implementation, determining the difference between the time information of the last packet at the receive end and the time information of the first packet at the transmit end as the transmission latency of the first PDU set between the transmit end and the receive end is determining a time interval between a moment at which the transmit end starts to transmit the first packet in the first PDU set and a moment at which the receive end receives the last packet in the first PDU set as the transmission latency of the first PDU set between the transmit end and the receive end. Because the first packet and the last packet in the first PDU set are considered instead of only several packets in the first PDU set, an accurate transmission latency of the first PDU set from the transmit end to the receive end is obtained.

In a possible implementation, if the transmit end is the access network device and the receive end is the terminal device, or the transmit end is the terminal device and the receive end is the access network device, an interface between the transmit end and the receive end is an air interface. In this case, the time information of the first packet at the transmit end indicates a moment at which a first protocol layer at the transmit end receives the first packet from an upper layer of the first protocol layer, and the time information of the last packet at the receive end indicates a moment at which a first protocol layer at the receive end uploads the last packet to an upper layer of the first protocol layer.

Optionally, the first protocol layer is a packet data convergence protocol (packet data convergence protocol, PDCP) layer or a service data adaptation protocol (service data adaptation protocol, SDAP) layer. For example, the first protocol layer is a PDCP layer, and the upper layer of the first protocol layer is an SDAP layer. For another example, the first protocol layer is an SDAP layer, and the upper layer of the first protocol layer is an application layer.

In an example, if the transmit end is the access network device and the receive end is the terminal device, the transmission latency of the first PDU set between the transmit end and the receive end is an air interface downlink latency of the first PDU set. In this case, the time information of the first packet at the transmit end includes first time information, and the first time information indicates a moment at which a first protocol layer of the access network device receives the first packet from an upper layer of the first protocol layer; and the time information of the last packet at the receive end includes second time information, and the second time information indicates a moment at which a first protocol layer of the terminal device uploads the last packet to an upper layer of the first protocol layer.

In this example, first, a specific implementation in which the core network device obtains the time information of the first packet in the first PDU set at the transmit end may be: The core network device receives the first time information from the access network device. In addition, a specific implementation in which the core network device obtains the time information of the last packet in the first PDU set at the receive end may be: The core network device obtains a moment at which the access network device receives the last packet in the first PDU set from the core network device and an air interface downlink latency of the last packet in the first PDU set, and determines the second time information based on a sum of the moment at which the access network device receives the last packet in the first PDU set from the core network device and the air interface downlink latency of the last packet in the first PDU set; or the core network device receives the second time information from the access network device, where the second time information is determined based on a sum of a moment at which the access network device receives the last packet in the first PDU set from the core network device and an air interface downlink latency of the last packet in the first PDU set. Then, after the core network device obtains the first time information and the second time information, the core network device determines a difference between the moment indicated by the second time information and the moment indicated by the first time information as the air interface downlink latency of the first PDU set.

In this example, the core network device can obtain the moment (namely, the first time information) at which the first protocol layer of the access network device receives the first packet from the upper layer of the first protocol layer and the moment (namely, the second time information) at which the first protocol layer of the terminal device uploads the last packet to the upper layer of the first protocol layer, and determine the difference between the second time information and the first time information as the air interface downlink latency of the first PDU set. Therefore, a problem in the conventional technology that the core network device cannot obtain a downlink transmission latency of a PDU set at an air interface is resolved, helping optimize a transmission resource between the access network device and the terminal device based on the air interface downlink latency of the first PDU set, and improving air interface transmission performance.

In another example, if the transmit end is the terminal device and the receive end is the access network device, the transmission latency of the first PDU set between the transmit end and the receive end is an air interface uplink latency of the first PDU set. In this case, the time information of the first packet at the transmit end includes third time information, and the third time information indicates a moment at which a first protocol layer of the terminal device receives the first packet from an upper layer of the first protocol layer; and the time information of the last packet at the receive end includes fourth time information, and the fourth time information indicates a moment at which a first protocol layer of the access network device uploads the last packet to an upper layer of the first protocol layer.

In this example, first, a specific implementation in which the core network device obtains the time information of the first packet in the first PDU set at the transmit end may be: The core network device receives, from the access network device, the third time information from the terminal device. In addition, a specific implementation in which the core network device obtains the time information of the last packet in the first PDU set at the receive end may be: The core network device receives the fourth time information from the access network device. Then, the core network device determines a difference between the moment indicated by the fourth time information and the moment indicated by the third time information as the air interface uplink latency of the first PDU set.

In this example, the core network device can obtain the moment (namely, the third time information) at which the first protocol layer of the terminal device receives the first packet from the upper layer of the first protocol layer and the moment (namely, the fourth time information) at which the first protocol layer of the access network device uploads the last packet to the upper layer of the first protocol layer, and determine the difference between the fourth time information and the third time information as the air interface uplink latency of the first PDU set. Therefore, a problem in the conventional technology that the core network device cannot obtain an uplink transmission latency of a PDU set at an air interface is resolved, helping optimize a transmission resource between the access network device and the terminal device based on the air interface uplink latency of the first PDU set, and improving air interface transmission performance.

In a possible implementation, if the transmit end is the core network device and the receive end is the access network device, or the transmit end is the access network device and the receive end is the core network device, an interface between the transmit end and the receive end is an NG interface. In this case, the time information of the first packet at the transmit end indicates the moment at which the transmit end sends the first packet, and the time information of the last packet at the receive end indicates the moment at which the receive end receives the last packet.

Optionally, the first protocol layer is a PDCP layer or an SDAP layer. For example, the first protocol layer is a PDCP layer, and the upper layer of the first protocol layer is an SDAP layer. For another example, the first protocol layer is an SDAP layer, and the upper layer of the first protocol layer is an application layer.

In an example, if the transmit end is the core network device and the receive end is the access network device, the transmission latency of the first PDU set between the transmit end and the receive end is an NG interface downlink latency of the first PDU set. In this case, the time information of the first packet at the transmit end includes fifth time information, and the fifth time information indicates a moment at which the core network device sends the first packet; and the time information of the last packet at the receive end includes sixth time information, and the sixth time information indicates a moment at which the access network device receives the last packet.

In this example, a specific implementation in which the core network device obtains the time information of the last packet in the first PDU set at the receive end may be: The core network device receives the sixth time information from the access network device. In addition, the core network device can record the fifth time information when sending the first PDU set. Then, the core network device determines a difference between the moment indicated by the sixth time information and the moment indicated by the fifth time information as the NG interface downlink latency of the first PDU set.

In this example, the core network device can record the moment (namely, the fifth time information) at which the core network device sends the first packet, and can obtain, from the access network device, the moment (namely, the sixth time information) at which the access network device receives the last packet. Further, the core network device determines the difference between the moment indicated by the sixth time information and the moment indicated by the fifth time information as the NG interface downlink latency of the first PDU set. Therefore, a problem in the conventional technology that the core network device cannot obtain a downlink transmission latency of a PDU set at the NG interface is resolved, helping optimize a transmission resource between the access network device and the core network device based on the NG interface downlink latency of the first PDU set, and improving NG interface transmission performance.

In another example, if the transmit end is the access network device and the receive end is the core network device, the transmission latency of the first PDU set between the transmit end and the receive end is an NG interface uplink latency of the first PDU set. In this case, the time information of the first packet at the transmit end includes seventh time information, and the seventh time information indicates a moment at which the access network device sends the first packet; and the time information of the last packet at the receive end includes eighth time information, and the eighth time information indicates a moment at which the core network device receives the last packet.

In this example, a specific implementation in which the core network device obtains the time information of the first packet in the first PDU set at the transmit end may be: The core network device receives the seventh time information from the access network device. In addition, the core network device can record the eighth time information when receiving the first PDU set. Then, the core network device determines a difference between the moment indicated by the eighth time information and the moment indicated by the seventh time information as the NG interface uplink latency of the first PDU set.

In this example, the core network device can record the moment (namely, the eighth time information) at which the core network device receives the last packet, and can obtain, from the access network device, the moment (namely, the seventh time information) at which the access network device sends the first packet. Further, the core network device determines the difference between the moment indicated by the eighth time information and the moment indicated by the seventh time information as the NG interface uplink latency of the first PDU set. Therefore, a problem in the conventional technology that the core network device cannot obtain an uplink transmission latency of a PDU set at the NG interface is resolved, helping optimize a transmission resource between the access network device and the core network device based on the NG interface uplink latency of the first PDU set, and improving NG interface transmission performance.

In a possible implementation, the latency measurement method further includes: The core network device sends first indication information to the access network device, where the first indication information indicates to measure only a first packet and a last packet in a PDU set. It may also be understood as that the first indication information indicates to measure a transmission latency at a PDU set granularity. After the access network device receives the first indication information, the access network device enables a function of measuring the transmission latency at the PDU set granularity.

Optionally, the first indication information is carried in control plane signaling, or may be carried in a user plane data packet.

In an example, the core network device notifies, by using a control plane, the access network device to enable latency measurement at the PDU set granularity. Optionally, the control plane signaling may be a latency measurement request message, or may be another message. Optionally, the core network device further sends identification information of the first PDU set to the access network device to indicate the access network device to perform latency measurement at the PDU set granularity on the first PDU set.

In another example, the core network device notifies, by using a user plane, the access network device to enable latency measurement at the PDU set granularity. For example, the core network device separately adds the first indication information to the first packet and the last packet in the first PDU set, and does not add the first indication information to another packet in the first PDU set. The access network device triggers, based on the first indication information in the first packet and the last packet in the first PDU set, measurement on the first packet and the last packet in the first PDU set. Optionally, the first indication information may alternatively be carried in a user plane of GTP (User Plane Part of GTP, GTP-U) header of a packet. For example, a GTP-U header of the first packet and a GTP-U header of the last packet in the first PDU set each carry the first indication information. In this implementation, the first packet and the last packet in the first PDU set may not carry a latency measurement indication in the conventional technology, but carry only the first indication information.

In this implementation, the core network device can indicate, by using the first indication information, the access network device to enable latency measurement at the PDU set granularity, so that the access network device feeds back latency measurement information for a PDU set to the core network device. Therefore, this helps the core network device calculate a latency of the PDU set based on the latency measurement information fed back by the access network device.

In a possible implementation, the latency measurement method further includes: The core network device receives identification information of the first PDU set and an air interface downlink latency of the first PDU set from the access network device.

In this implementation, when the access network device can calculate the air interface downlink latency of the first PDU set, the access network device can send the air interface downlink latency of the first PDU set to the core network device. Because the access network device can calculate an air interface latency and signaling overheads used by the access network device to feed back air interface latency measurement information to the core network device can be reduced, this helps improve latency measurement efficiency of the PDU set.

In a possible implementation, the latency measurement method further includes: The core network device determines an uplink latency and/or a downlink latency of the first PDU set between the terminal device and the core network device based on the identification information of the first PDU set, the air interface downlink latency of the first PDU set, the air interface uplink latency of the first PDU set, the NG interface downlink latency of the first PDU set, and the NG interface uplink latency of the first PDU set.

For example, the core network device determines a sum of the air interface downlink latency of the first PDU set and the NG interface downlink latency of the first PDU set as the downlink latency of the first PDU set between the terminal device and the core network device.

For example, the core network device determines a sum of the air interface uplink latency of the first PDU set and the NG interface uplink latency of the first PDU set as the uplink latency of the first PDU set between the terminal device and the core network device.

In this implementation, the core network device can determine a latency between the terminal device and the core network device based on a latency of the air interface and a latency of the NG interface, helping optimize a transmission resource between the terminal device and the core network device based on the uplink latency and the downlink latency of the first PDU set between the terminal device and the core network device.

According to a second aspect, this application provides a latency measurement method. The latency measurement method may be performed by an access network device, or may be performed by a component (for example, a processor, a chip, or a chip system) of an access network device. The access network device is used as an example. The access network device obtains time information of a first packet in a first PDU set at a transmit end, and obtains time information of a last packet in the first PDU set at a receive end. Then, the access network device determines a transmission latency of the first PDU set between the transmit end and the receive end based on the time information of the first packet at the transmit end and the time information of the last packet at the receive end.

For example, if the transmit end is the access network device and the receive end is a terminal device, the transmission latency of the first PDU set between the transmit end and the receive end is an air interface downlink latency of the first PDU set.

For example, if the transmit end is the terminal device and the receive end is the access network device, the transmission latency of the first PDU set between the transmit end and the receive end is an air interface uplink latency of the first PDU set.

In this application, the access network device can collect latency measurement information (that is, the time information of the first packet at the transmit end) of the first packet in the first PDU set and latency measurement information (that is, the time information of the last packet at the receive end) of the last packet, and determine the transmission latency (for example, the air interface downlink latency or the air interface uplink latency) of the first PDU set between the transmit end and the receive end based on the time information of the first packet at the transmit end and the time information of the last packet at the receive end. Therefore, a problem in the conventional technology that the access network device cannot obtain an air interface transmission latency of a PDU set is resolved, helping optimize a transmission resource based on a transmission latency of a PDU set, and improving network transmission performance.

In a possible implementation, that the access network device determines the transmission latency of the first PDU set between the transmit end and the receive end based on the time information of the first packet at the transmit end and the time information of the last packet at the receive end includes: The access network device determines a difference between the time information of the last packet at the receive end and the time information of the first packet at the transmit end as the transmission latency of the first PDU set between the transmit end and the receive end.

In this implementation, determining the difference between the time information of the last packet at the receive end and the time information of the first packet at the transmit end as the transmission latency of the first PDU set between the transmit end and the receive end is determining a time interval between a moment at which the transmit end starts to transmit the first packet in the first PDU set and a moment at which the receive end receives the last packet in the first PDU set as the transmission latency of the first PDU set between the transmit end and the receive end. Because the first packet and the last packet in the first PDU set are considered instead of only several packets in the first PDU set, an accurate transmission latency of the first PDU set from the transmit end to the receive end is obtained.

In a possible implementation, if the transmit end is the access network device and the receive end is the terminal device, or the transmit end is the terminal device and the receive end is the access network device, an interface between the transmit end and the receive end is an air interface. In this case, the time information of the first packet at the transmit end indicates a moment at which a first protocol layer at the transmit end receives the first packet from an upper layer of the first protocol layer, and the time information of the last packet at the receive end indicates a moment at which a first protocol layer at the receive end uploads the last packet to an upper layer of the first protocol layer.

Optionally, the first protocol layer is a PDCP layer or an SDAP layer. For example, the first protocol layer is a PDCP layer, and the upper layer of the first protocol layer is an SDAP layer. For another example, the first protocol layer is an SDAP layer, and the upper layer of the first protocol layer is an application layer.

In an example, if the transmit end is the access network device and the receive end is the terminal device, the transmission latency of the first PDU set between the transmit end and the receive end is an air interface downlink latency of the first PDU set. In this case, the time information of the first packet at the transmit end includes first time information, and the first time information indicates a moment at which a first protocol layer of the access network device receives the first packet from an upper layer of the first protocol layer; and the time information of the last packet at the receive end includes second time information, and the second time information indicates a moment at which a first protocol layer of the terminal device uploads the last packet to an upper layer of the first protocol layer.

In this example, a specific implementation in which the access network device obtains the time information of the last packet in the first PDU set at the receive end may be: The access network device receives the second time information from the terminal device. In addition, when sending the first PDU set, the access network device can record the moment (namely, the first time information) at which the first protocol layer of the access network device receives the first packet from the upper layer of the first protocol layer. Then, the access network device determines a difference between the moment indicated by the second time information and the moment indicated by the first time information as the air interface downlink latency of the first PDU set.

In this example, the access network device can obtain the moment (namely, the first time information) at which the first protocol layer of the access network device receives the first packet from the upper layer of the first protocol layer and the moment (namely, the second time information) at which the first protocol layer of the terminal device uploads the last packet to the upper layer of the first protocol layer, and determine the difference between the second time information and the first time information as the air interface downlink latency of the first PDU set. Therefore, a problem in the conventional technology that the access network device cannot obtain a downlink transmission latency of a PDU set at an air interface is resolved, helping optimize a transmission resource between the access network device and the terminal device based on the air interface downlink latency of the first PDU set, and improving air interface transmission performance.

In another example, if the transmit end is the terminal device and the receive end is the access network device, the transmission latency of the first PDU set between the transmit end and the receive end is an air interface uplink latency of the first PDU set. In this case, the time information of the first packet at the transmit end includes third time information, and the third time information indicates a moment at which a first protocol layer of the terminal device receives the first packet from an upper layer of the first protocol layer; and the time information of the last packet at the receive end includes fourth time information, and the fourth time information indicates a moment at which a first protocol layer of the access network device uploads the last packet to an upper layer of the first protocol layer.

In this example, a specific implementation in which the access network device obtains the time information of the first packet in the first PDU set at the transmit end may be: The access network device receives the third time information from the terminal device. In addition, the access network device can further record the fourth time information when receiving the first PDU set. Then, the access network device determines a difference between the moment indicated by the fourth time information and the moment indicated by the third time information as the air interface uplink latency of the first PDU set.

In this example, the access network device can obtain the moment (namely, the third time information) at which the first protocol layer of the terminal device receives the first packet from the upper layer of the first protocol layer and the moment (namely, the fourth time information) at which the first protocol layer of the access network device uploads the last packet to the upper layer of the first protocol layer, and determine the difference between the fourth time information and the third time information as the air interface uplink latency of the first PDU set. Therefore, a problem in the conventional technology that the access network device cannot obtain an uplink transmission latency of a PDU set at an air interface is resolved, helping optimize a transmission resource between the access network device and the terminal device based on the air interface uplink latency of the first PDU set, and improving air interface transmission performance.

In a possible implementation, the latency measurement method further includes: The access network device configures a first timestamp in the first packet in the first PDU set to be sent to the terminal device, where the first timestamp indicates a moment at which a first protocol layer of the access network device receives the first packet from an upper layer of the first protocol layer; and the access network device receives an air interface downlink latency of the first PDU set from the terminal device.

In this implementation, the access network device indicates, to the terminal device in a manner of configuring the first timestamp in the first packet in the first PDU set, the moment at which the access network device sends the first packet (that is, the moment at which the first protocol layer of the access network device receives the first packet from the upper layer of the first protocol layer). If the terminal device can record the moment at which the last packet in the first PDU set is received, the terminal device can determine the air interface downlink latency of the first PDU set and feed back the air interface downlink latency of the first PDU set to the access network device. Because the terminal device can calculate the air interface downlink latency of the first PDU set, overheads used by the access network device to calculate the latency can be reduced, and efficiency of obtaining the air interface latency of the first PDU set by the access network device can be improved.

In a possible implementation, the third time information includes a second timestamp configured by the terminal device in the first packet in the first PDU set. That the access network device obtains the time information of the first packet in the first PDU set at the transmit end includes: The access network device obtains the second timestamp from the first packet in the first PDU set from the terminal device.

In this implementation, the terminal device indicates, to the access network device in a manner of configuring the second timestamp in the first packet in the first PDU set, the moment at which the terminal device sends the first packet (that is, the moment at which the first protocol layer of the terminal device receives the first packet from the upper layer of the first protocol layer, namely, the third time information). Because the terminal device does not need to separately notify the access network device of the third time information by using other signaling, signaling overheads used by the terminal device to feed back the latency measurement information to the access network device are reduced.

In a possible implementation, the first packet in the first PDU set sent by the transmit end to the receive end includes a timestamp configured by the transmit end, and the timestamp indicates the moment at which the first protocol layer at the transmit end receives the first packet from the upper layer of the first protocol layer.

For example, in air interface downlink transmission, the transmit end is the access network device and the receive end is the terminal device. The first packet in the first PDU set sent by the access network device to the terminal device carries a timestamp configured by the access network device, and the timestamp configured by the access network device indicates the moment at which the first protocol layer of the access network device receives the first packet from the upper layer of the first protocol layer.

For example, in air interface uplink transmission, the transmit end is the terminal device and the receive end is the access network device. The first packet in the first PDU set sent by the terminal device to the access network device carries a timestamp configured by the terminal device, and the timestamp configured by the terminal device indicates the moment at which the first protocol layer of the terminal device receives the first packet from the upper layer of the first protocol layer.

In this implementation, the transmit end indicates, to the receive end in a manner of configuring, in the first packet in the first PDU set, a timestamp for sending the first packet, the moment at which the transmit end sends the first packet. Because the transmit end does not need to separately notify, by using other signaling, the receive end of the moment at which the transmit end sends the first packet, signaling overheads used by the transmit end to feed back the latency measurement information to the receive end are reduced.

In an implementation 1, the first packet in the first PDU set sent by the transmit end includes the timestamp configured by the transmit end and identification information of the first PDU set, the last packet in the first PDU set includes the identification information of the first PDU set, and another packet in the first PDU set does not include the identification information of the first PDU set.

In this implementation 1, the receive end determines the first packet in the first PDU set based on the timestamp and the identification information of the first PDU set, and the receive end determines the last packet in the first PDU set based on the identification information of the first PDU set.

For example, if a packet #1 received by the receive end has both the identification information of the first PDU set and a timestamp #1, the receive end determines the packet #1 as the first packet in the first PDU set, and determines the moment at which the transmit end sends the first packet in the first PDU set as a moment indicated by the timestamp #1. If a packet #2 received by the receive end has only the identification information of the first PDU set but does not have a timestamp, the receive end determines the packet #2 as the last packet in the first PDU set, and the receive end records the moment at which the last packet in the first PDU set is received.

In this implementation 1, by determining whether the identification information of the first PDU set is carried, the receive end can identify whether a received packet is the first packet or the last packet. Further, by determining whether the packet carries a timestamp, the receive end can identify whether the packet is the first packet. Only the first packet and the last packet in the first PDU set carry newly added information (that is, the identification information of the first PDU set and/or the timestamp), another packet in the first PDU set may not be processed, helping reduce processing overheads in a packet sending process of the transmit end.

In another implementation 2, each packet in the first PDU set includes the identification information of the first PDU set. The first packet in the first PDU set further includes the timestamp configured by the transmit end and initial packet indication information, and the initial packet indication information indicates that a packet carrying the initial packet indication information is the initial packet in the first PDU set. The last packet in the first PDU set further includes tail packet indication information, and the tail packet indication information indicates that a packet carrying the tail packet indication information is the tail packet in the first PDU set.

In this implementation 2, the receive end determines the first packet in the first PDU set based on the identification information of the first PDU set and the initial packet indication information, and the receive end determines the last packet in the first PDU set based on the identification information of the first PDU set and the tail packet indication information.

For example, if a packet #3 received by the receive end carries the initial packet indication information and the identification information of the first PDU set, the receive end determines the packet #1 as the first packet in the first PDU set, and determines the moment at which the transmit end sends the first packet in the first PDU set as a moment indicated by a timestamp #2 carried in the packet #3. If a packet #4 received by the receive end carries initial and tail packet indication information and the identification information of the first PDU set, the receive end determines the packet #4 as the last packet in the first PDU set, and the receive end records the moment at which the last packet in the first PDU set is received.

In this implementation 2, the receive end identifies, by using an initial packet indication and a tail packet indication, whether a received packet is the first packet or the last packet, further enabling to obtain the moment at which the transmit end sends the first packet. This helps the receive end accurately determine the first packet and the last packet in the first PDU set, and helps improve efficiency of measuring the first packet and the last packet by the receive end.

Optionally, each packet in the first PDU set further includes a sequence number of each packet in the first PDU set. The sequence number is used to reflect a sequence in which an application layer generates a packet. The sequence number may be added at the application layer of the transmit end, or may be added at another layer of the transmit end.

In another implementation 3, each packet in the first PDU set includes the identification information of the first PDU set and the timestamp configured by the transmit end, and the timestamp in each packet indicates the moment at which the first protocol layer at the transmit end receives the packet from the upper layer of the first protocol layer. The first packet in the first PDU set further includes initial packet indication information, and the initial packet indication information indicates that a packet carrying the initial packet indication information is the initial packet in the first PDU set. The last packet in the first PDU set further includes tail packet indication information, and the tail packet indication information indicates that a packet carrying the tail packet indication information is the tail packet in the first PDU set.

In this implementation 3, the receive end determines the first packet in the first PDU set based on the identification information of the first PDU set and the initial packet indication information, and the receive end determines the last packet in the first PDU set based on the identification information of the first PDU set and the tail packet indication information. Compared with the implementation 2, the implementation 3 differs in that each packet in the first PDU set in the implementation 3 includes a timestamp that is configured by the transmit end and that is for sending a packet.

In another possible implementation, the last packet in the first PDU set sent by the transmit end to the receive end includes a timestamp of the first packet in the first PDU set sent by the transmit end to the receive end, and the timestamp indicates the moment at which the first protocol layer at the transmit end receives the first packet from the upper layer of the first protocol layer. Another packet in the first PDU set does not carry a timestamp.

In this example, the receive end determines that the packet carrying the timestamp is the last packet in the first PDU set, determines the moment at which the receive end receives the last packet, and determines the timestamp as the moment at which the first packet is received.

In this implementation, the transmit end only needs to configure a timestamp in the last packet in the first PDU set, helping simplify preprocessing (for example, configuring the timestamp in the last packet) performed by the transmit end on a packet in the first PDU set before the transmit end sends the first PDU set. In addition, the receive end determines only the last packet in the first PDU set and does not need to determine the first packet in the first PDU set, in other words, the receive end can obtain the latency measurement information of the first packet and the latency measurement information of the last packet by monitoring the last packet, helping reduce processing overheads of the receive end.

In a possible implementation, the latency measurement method further includes: The access network device sends second indication information to the terminal device, where the second indication information indicates to measure a transmission latency at a PDU set granularity. After the terminal device receives the second indication information, the terminal device enables a function of measuring the transmission latency at the PDU set granularity. For example, the access network device adds the second indication information to control plane signaling (for example, an RRC message) and sends the control plane signaling to the terminal device.

Optionally, signaling (for example, the control plane signaling) carrying the second indication information further includes the identification information of the first PDU set. The identification information of the first PDU set may be received by the access network device from the core network device, or may be determined by the access network device.

In a possible implementation, before the access network device sends the second indication information to the terminal device, the method further includes: The access network device receives first indication information from a core network device, where the first indication information indicates to measure only a first packet and a last packet in a PDU set. It may also be understood as that the first indication information indicates to measure a transmission latency at a PDU set granularity. After the access network device receives the first indication information, the access network device enables a function of measuring the transmission latency at the PDU set granularity.

According to a third aspect, this application provides a latency measurement method. The latency measurement method may be performed by a terminal device, or may be performed by a component (for example, a processor, a chip, or a chip system) of a terminal device. The terminal device is used as an example. The terminal device receives second indication information from an access network device, where the second indication information indicates to measure a transmission latency of a first PDU set. The terminal device sends latency measurement information of the first PDU set to the access network device.

In a possible implementation, the second indication information includes identification information of the first PDU set.

In a possible implementation, the latency measurement information of the first PDU set includes the air interface downlink latency of the first PDU set. The latency measurement method further includes: The terminal device obtains first time information, where the first time information indicates a moment at which a first protocol layer of the access network device receives the first packet from an upper layer of the first protocol layer; the terminal device obtains second time information, where the second time information indicates a moment at which a first protocol layer of the terminal device uploads the last packet to an upper layer of the first protocol layer; and the terminal device determines a difference between the moment indicated by the second time information and the moment indicated by the first time information as the air interface downlink latency of the first PDU set.

In a possible implementation, the first time information includes a first timestamp configured by the access network device in the first packet in the first PDU set.

In a possible implementation, the terminal device configures a second timestamp in the first packet in the first PDU set to be sent to the access network device, where the second timestamp indicates a moment at which a first protocol layer of the terminal device receives the first packet from an upper layer of the first protocol layer.

In a possible implementation, the latency measurement information of the first PDU set includes second time information and/or third time information, the second time information indicates a moment at which a first protocol layer of the terminal device uploads the last packet to an upper layer of the first protocol layer, and the third time information indicates a moment at which the first protocol layer of the terminal device receives the first packet from the upper layer of the first protocol layer.

In a possible implementation, the first packet in the first PDU set sent by the transmit end to the receive end includes a timestamp configured by the transmit end, and the timestamp indicates the moment at which the first protocol layer at the transmit end receives the first packet from the upper layer of the first protocol layer.

In a possible implementation, the first packet in the first PDU set further includes identification information of the first PDU set, the last packet in the first PDU set includes the identification information of the first PDU set, and another packet in the first PDU set does not include the identification information of the first PDU set.

In a possible implementation, each packet in the first PDU set includes the identification information of the first PDU set. The first packet in the first PDU set further includes initial packet indication information, and the initial packet indication information indicates that a packet carrying the initial packet indication information is the initial packet in the first PDU set. The last packet in the first PDU set includes tail packet indication information, and the tail packet indication information indicates that a packet carrying the tail packet indication information is the tail packet in the first PDU set.

In a possible implementation, each packet in the first PDU set further includes a sequence number of each packet in the first PDU set.

In a possible implementation, each packet in the first PDU set carries a timestamp configured by the transmit end, and the timestamp in each packet indicates the moment at which the first protocol layer of the terminal device receives a packet from the upper layer of the first protocol layer.

In a possible implementation, the last packet in the first PDU set sent by the transmit end to the receive end includes a timestamp of the first packet in the first PDU set sent by the transmit end to the receive end, and the timestamp indicates the moment at which the first protocol layer at the transmit end receives the first packet from the upper layer of the first protocol layer. Another packet in the first PDU set does not carry a timestamp.

It should be noted that there are further a plurality of other specific implementations in this embodiment of this application. For details, refer to the specific implementations of the second aspect and beneficial effects thereof. Details are not described herein again.

According to a fourth aspect, this application provides a latency measurement method. The latency measurement method may be performed by a core network device, or may be performed by a component (for example, a processor, a chip, or a chip system) of a core network device. The core network device is used as an example. The core network device obtains time information of two PDU sets. The time information of each PDU set is used to determine a moment at which an association packet in the PDU set arrives at the receive end. The core network device determines synchronization performance information of the two PDU sets based on the time information of the two PDU sets. The synchronization performance information indicates a time deviation between a time at which an association packet in one PDU set arrives at the receive end and a time at which an association packet in the other PDU set arrives at the receive end.

In this application, the core network device can determine synchronization performance information of two PDU sets based on time information of the two PDU sets. This resolves a problem in the conventional technology that the core network device cannot obtain synchronization performance between PDU sets, and helps the core network device optimize data transmission of two PDU sets having an association relationship, improving user service experience.

In a possible implementation, the two PDU sets include a first PDU set and a second PDU set, the synchronization performance information includes the downlink synchronization deviation, the time information of the first PDU set includes latency measurement information of the association packet in the first PDU set, and the time information of the second PDU set includes latency measurement information of the association packet in the second PDU set. That the core network device determines the synchronization performance information of the two PDU sets based on the time information of the two PDU sets includes: The core network device determines, based on the latency measurement information of the association packet in the first PDU set, a moment at which the association packet in the first PDU set arrives at the terminal device; the core network device determines, based on the latency measurement information of the association packet in the second PDU set, a moment at which the association packet in the second PDU set arrives at the terminal device; and the core network device determines the downlink synchronization deviation based on a difference between the moment at which the association packet in the first PDU set arrives at the terminal device and the moment at which the association packet in the second PDU set arrives at the terminal device.

In this implementation, the core network device can obtain moments at which the association packets in the two PDU sets separately arrive at the terminal device, and further determine a downlink synchronization deviation based on the moments at which the association packets in the two PDU sets separately arrive at the terminal device. This resolves a problem in the conventional technology that the core network device cannot obtain a downlink synchronization deviation between two PDU sets, and helps the core network device optimize downlink transmission of a service, further improving user service experience.

In a possible implementation, the latency measurement information of the association packet in the first PDU set includes an NG interface downlink latency of the association packet in the first PDU set and an air interface downlink latency of the association packet in the first PDU set. The moment at which the association packet in the first PDU set arrives at the terminal device is equal to a sum of the NG interface downlink latency of the association packet in the first PDU set, the air interface downlink latency of the association packet in the first PDU set, and the moment at which the core network device sends the association packet in the first PDU set. The latency measurement information of the association packet in the second PDU set includes an NG interface downlink latency of the association packet in the second PDU set and an air interface downlink latency of the association packet in the second PDU set. The moment at which the association packet in the second PDU set arrives at the terminal device is equal to a sum of the NG interface downlink latency of the association packet in the second PDU set, the air interface downlink latency of the association packet in the second PDU set, and the moment at which the core network device sends the association packet in the second PDU set.

In this implementation, it is proposed that a moment at which an association packet arrives at the terminal device is determined based on latency measurement information (for example, an NG interface downlink latency and an air interface downlink latency) of a packet granularity of the association packet and a moment at which the core network device sends the association packet. Because the core network device may be beneficial to the existing latency measurement information of the association packet at the packet granularity, efficiency of obtaining, by the core network device, the moment at which the association packet arrives at the terminal device is improved.

In a possible implementation, the two PDU sets include the first PDU set and the second PDU set, the synchronization performance information includes the uplink synchronization deviation, the time information of the first PDU set includes the moment at which the core network device receives the association packet in the first PDU set, and the time information of the second PDU set includes the moment at which the core network device receives the association packet in the second PDU set. That the core network device determines the synchronization performance information of the two PDU sets based on the time information of the two PDU sets includes: The core network device determines the uplink synchronization deviation based on a difference between the moment at which the association packet in the first PDU set is received and the moment at which the association packet in the second PDU set is received.

In this implementation, the core network device can separately record the moments at which the association packets in the two PDU sets are received, and further determine the uplink synchronization deviation based on the moments at which the association packets in the two PDU sets separately arrive at the core network device. This resolves a problem in the conventional technology that the core network device cannot obtain the uplink synchronization deviation between the two PDU sets, and helps the core network device optimize uplink transmission of a service, further improving user service experience.

In a possible implementation, before the core network device obtains the time information of the two PDU sets, the method further includes: The core network device sends third indication information to an access network device, where the third indication information indicates the access network device to trigger synchronization performance measurement of the two PDU sets.

In a possible implementation, the association packet in the second PDU set includes the last packet in the second PDU set, and the association packet in the first PDU set includes the last packet in the first PDU set.

In this implementation, it is proposed that a last packet in a PDU set be configured as an association packet in the PDU set. A process of measuring a transmission latency of a PDU set involves measurement of a last packet in the PDU set. Therefore, configuring the last packet in the PDU set as the association packet in the PDU set helps reuse latency measurement information for measuring a transmission latency of the PDU set, further improving the efficiency of measuring the synchronization performance of the two PDU sets by the core network device.

According to a fifth aspect, this application provides a latency measurement method. The latency measurement method may be performed by an access network device, or may be performed by a component (for example, a processor, a chip, or a chip system) of an access network device. The access network device is used as an example. The access network device sends fourth indication information to a terminal device, where the fourth indication information indicates the terminal device to trigger synchronization performance measurement of two PDU sets. The access network device determines synchronization performance information of the two PDU sets based on latency measurement information of the two PDU sets, where the synchronization performance information indicates a time deviation between a time at which an association packet in one PDU set arrives at a receive end and a time at which an association packet in the other PDU set arrives at the receive end.

In this application, the access network device can indicate, by using the fourth instruction information, the terminal device to trigger synchronization performance measurement of the two PDU sets, and determine the synchronization performance information of the two PDU sets based on the latency measurement information of the two PDU sets. Therefore, this helps the access network device evaluate, based on the synchronization performance information, transmission performance of services corresponding to the two PDU sets, and further helps optimize a network.

In a possible implementation, the latency measurement method further includes: The access network device obtains an association relationship between the two PDU sets.

In an example, the access network device obtains the association relationship between the two PDU sets by using a user plane data packet. Optionally, an association packet in one PDU set carries association information indicating another PDU set, and the association information indicates that one PDU set has an association relationship with the another PDU set. For example, the two PDU sets are a first PDU set and a second PDU set. An association packet in the first PDU set received by the access network device from a core network device carries first association information, and the first association information indicates that a PDU set having an association relationship with the first PDU set is the second PDU set. For another example, the two PDU sets are a first PDU set and a second PDU set. An association packet in the second PDU set received by the access network device from a core network device carries second association information, and the second association information indicates that a PDU set having an association relationship with the second PDU set is the first PDU set.

Optionally, the first association information is identification information of the second PDU set, or the first association information is a sequence number of the association packet in the second PDU set. Optionally, the second association information is identification information of the first PDU set, or the second association information is a sequence number of the association packet in the first PDU set.

In another example, the access network device obtains an association relationship between the two PDU sets by using a control plane. For example, the access network device receives the identification information of the first PDU set and the identification information of the second PDU set from the core network device to trigger the access network device to measure synchronization performance between the first PDU set and the second PDU set, in other words, the first PDU set has an association relationship with the second PDU set.

In this implementation, the access network device can obtain an association relationship between two PDU sets by using a user plane or a control plane. Therefore, the access network device can clearly measure synchronization performance of two specific PDU sets, or the access network device measures synchronization performance of any two PDU sets. This helps the access network device measure the synchronization performance information more pertinently (that is, measure synchronization performance of two PDU sets), and does not necessarily require the access network device to measure synchronization performance of a plurality of PDU sets, helping reduce measurement overheads of the access network device.

In a possible implementation, the latency measurement method further includes: The access network device notifies the terminal device of the association relationship between the two PDU sets.

In an example, the access network device notifies the terminal device of the association relationship between the two PDU sets by using the user plane. For example, the access network device adds, to an association packet in one PDU set, association information indicating another PDU set, and the association information indicates that one PDU set has an association relationship with another PDU set. For example, the two PDU sets are a first PDU set and a second PDU set. An association packet in the first PDU set received by the terminal device from the access network device carries first association information, and the first association information indicates that a PDU set having an association relationship with the first PDU set is the second PDU set. For another example, the two PDU sets are a first PDU set and a second PDU set. An association packet in the second PDU set received by the terminal device from the access network device carries second association information, and the second association information indicates that a PDU set having an association relationship with the second PDU set is the first PDU set.

Optionally, the first association information is identification information of the second PDU set, or the first association information is a sequence number of the association packet in the second PDU set. Optionally, the second association information is identification information of the first PDU set, or the second association information is a sequence number of the association packet in the first PDU set.

In another example, the access network device notifies the terminal device of the association relationship between the two PDU sets by using the control plane. For example, the access network device sends the identification information of the first PDU set and the identification information of the second PDU set to the terminal device to indicate the terminal device to measure synchronization performance between the first PDU set and the second PDU set, in other words, the first PDU set has an association relationship with the second PDU set.

In this implementation, the access network device can notify the terminal device of an association relationship between two PDU sets by using a user plane or a control plane. Therefore, the terminal device can clearly measure synchronization performance of two specific PDU sets, or the terminal device measures synchronization performance of any two PDU sets. This helps the terminal device measure the synchronization performance information more pertinently (that is, measure synchronization performance of two PDU sets), and does not necessarily require the terminal device to measure synchronization performance of a plurality of PDU sets, helping reduce measurement overheads of the terminal device.

In a possible implementation, the association packet in the second PDU set includes the last packet in the second PDU set, and the association packet in the first PDU set includes the last packet in the first PDU set.

In this implementation, it is proposed that a last packet in a PDU set be configured as an association packet in the PDU set. A process of measuring a transmission latency of a PDU set involves measurement of a last packet in the PDU set. Therefore, configuring the last packet in the PDU set as the association packet in the PDU set helps reuse latency measurement information for measuring a transmission latency of the PDU set, further improving the efficiency of measuring the synchronization performance of the two PDU sets by the core network device.

In a possible implementation, the synchronization performance information includes an uplink synchronization deviation. The latency measurement information of the two PDU sets includes ninth time information and tenth time information. The ninth time information indicates a moment at which a first protocol layer of the access network device uploads the association packet in the first PDU set to an upper layer of the first protocol layer. The tenth time information indicates a moment at which the first protocol layer of the access network device uploads the association packet in the second PDU set to the upper layer of the first protocol layer. That the access network device determines the synchronization performance information of the two PDU sets based on the latency measurement information of the two PDU sets includes: The access network device determines a difference between the ninth time information and the tenth time information as the uplink synchronization deviation.

In this implementation, the access network device can determine moments at which the association packets in the two PDU sets separately arrive at the access network device. Further, the access network device can determine the uplink synchronization deviation. Therefore, this helps the access network device evaluate, based on the uplink synchronization deviation, transmission performance of services corresponding to the two PDU sets, and further helps optimize a network.

In a possible implementation, the latency measurement method further includes: The access network device receives the synchronization performance information from the terminal device, where the synchronization performance information includes a downlink synchronization deviation, and the downlink synchronization deviation indicates a time deviation between a time at which a packet in one of the two PDU sets arrives at the terminal device and a time at which a packet in the other of the two PDU sets arrives at the terminal device.

In this embodiment, the terminal device can determine the downlink synchronization deviation and feed back the downlink synchronization deviation to the access network device. Therefore, this helps the access network device evaluate, based on the downlink synchronization deviation, transmission performance of services corresponding to the two PDU sets, and further helps optimize a network.

In a possible implementation, before the access network device sends the fourth indication information to the terminal device, the latency measurement method further includes: The access network device receives third indication information from the core network device, where the third indication information indicates the access network device to trigger synchronization performance measurement of the two PDU sets.

According to a sixth aspect, this application provides a latency measurement method. The latency measurement method may be performed by a terminal device, or may be performed by a component (for example, a processor, a chip, or a chip system) of a terminal device. The terminal device is used as an example. The terminal device receives fourth indication information from an access network device, where the fourth indication information indicates the terminal device to trigger synchronization performance measurement of two PDU sets. The terminal device determines synchronization performance information of the two PDU sets based on latency measurement information of the two PDU sets, where the synchronization performance information indicates a time deviation between a time at which an association packet in one PDU set arrives at a receive end and a time at which an association packet in the other PDU set arrives at the receive end. The terminal device sends the synchronization performance information to the access network device.

In this application, the terminal device triggers synchronization performance measurement of the two PDU sets under an action of the fourth indication information, determines the synchronization performance information of the two PDU sets based on the latency measurement information of the two PDU sets, and further feeds back the synchronization performance information of the two PDU sets to the access network device. Therefore, this helps the access network device evaluate, based on the synchronization performance information, transmission performance of services corresponding to the two PDU sets, and further helps optimize a network.

In a possible implementation, the latency measurement method further includes: The terminal device obtains an association relationship between the two PDU sets.

In a possible implementation, an association packet in one PDU set carries association information indicating another PDU set, and the association information indicates that one PDU set has an association relationship with the another PDU set.

In a possible implementation, the two PDU sets include a first PDU set and a second PDU set. The association information includes first association information of the first PDU set and second association information of the second PDU set. The first association information includes a sequence number of an association packet in the second PDU set. The second association information includes a sequence number of an association packet in the first PDU set.

In a possible implementation, the association packet in the second PDU set includes the last packet in the second PDU set, and the association packet in the first PDU set includes the last packet in the first PDU set.

In a possible implementation, the synchronization performance information includes a downlink synchronization deviation. The downlink synchronization deviation indicates a time deviation between a time at which a packet in one of the two PDU sets arrives at the terminal device and a time at which a packet in the other of the two PDU sets arrives at the terminal device. The latency measurement information of the two PDU sets includes eleventh time information and twelfth time information. The eleventh time information indicates a moment at which a first protocol layer of the terminal device uploads the association packet in the first PDU set to an upper layer of the first protocol layer. The twelfth time information indicates a moment at which the first protocol layer of the terminal device uploads the association packet in the second PDU set to the upper layer of the first protocol layer. That the terminal device determines the synchronization performance information of the two PDU sets based on the latency measurement information of the two PDU sets includes: The terminal device determines a difference between the eleventh time information and the twelfth time information as the downlink synchronization deviation.

In this embodiment, the terminal device can determine the downlink synchronization deviation and feed back the downlink synchronization deviation to the access network device. Therefore, this helps the access network device evaluate, based on the downlink synchronization deviation, transmission performance of services corresponding to the two PDU sets, and further helps optimize a network.

It should be noted that there are further a plurality of other specific implementations in this embodiment of this application. For details, refer to the specific implementations of the fifth aspect and beneficial effects thereof. Details are not described herein again.

According to a seventh aspect, an embodiment of this application provides a communication apparatus. The communication apparatus may be the terminal device in the foregoing implementations, or may be a chip in the terminal device. The communication apparatus may include a processing module and a transceiver module. When the communication apparatus is the terminal device, the processing module may be a processor, and the transceiver module may be a transceiver. The terminal device may further include a storage module, and the storage module may be a memory. The storage module is configured to store instructions. The processing module executes the instructions stored in the storage module to enable the terminal device to perform the method according to any one of the third aspect or the implementations of the third aspect, or perform the method according to any one of the sixth aspect or the implementations of the sixth aspect. When the communication apparatus is a chip in the terminal device, the processing module may be a processor, and the transceiver module may be an input/output interface, a pin, a circuit, or the like. The processing module executes instructions stored in a storage module to enable the terminal device to perform the method according to any one of the third aspect or the implementations of the third aspect, or perform the method according to any one of the sixth aspect or the implementations of the sixth aspect. The storage module may be a storage module (for example, a register or a cache) in the chip, or may be a storage module (for example, a read-only memory or a random access memory) that is in the terminal device and that is located outside the chip.

According to an eighth aspect, an embodiment of this application provides a communication apparatus. The communication apparatus may be the access network device in the foregoing implementations, or may be a chip in the access network device. The communication apparatus may include a processing module and a transceiver module. When the communication apparatus is the access network device, the processing module may be a processor, and the transceiver module may be a transceiver. The access network device may further include a storage module, and the storage module may be a memory. The storage module is configured to store instructions. The processing module executes the instructions stored in the storage module to enable the access network device to perform the method according to any one of the second aspect or the implementations of the second aspect, or to enable the access network device to perform the method according to any one of the fifth aspect or the implementations of the fifth aspect. When the communication apparatus is the chip in the access network device, the processing module may be a processor, and the transceiver module may be an input/output interface, a pin, a circuit, or the like. The processing module executes instructions stored in a storage module to enable the access network device to perform the method according to any one of the second aspect or the implementations of the second aspect, or to enable the access network device to perform the method according to any one of the fifth aspect or the implementations of the fifth aspect. The storage module may be a storage module (for example, a register or a cache) in the chip, or may be a storage module (for example, a read-only memory or a random access memory) that is in the access network device and that is located outside the chip.

According to a ninth aspect, an embodiment of this application provides a communication apparatus. The communication apparatus may be the core network device in the foregoing implementations, or may be a chip in the core network device. The communication apparatus may include a processing module and a transceiver module. When the communication apparatus is the core network device, the processing module may be a processor, and the transceiver module may be a transceiver. The core network device may further include a storage module, and the storage module may be a memory. The storage module is configured to store instructions. The processing module executes the instructions stored in the storage module to enable the core network device to perform the method according to any one of the first aspect or the implementations of the first aspect, or perform the method according to any one of the fourth aspect or the implementations of the fourth aspect. When the communication apparatus is a chip in the core network device, the processing module may be a processor, and the transceiver module may be an input/output interface, a pin, a circuit, or the like. The processing module executes instructions stored in a storage module to enable the core network device to perform the method according to any one of the first aspect or the implementations of the first aspect, or perform the method according to any one of the fourth aspect or the implementations of the fourth aspect. The storage module may be a storage module (for example, a register or a cache) in the chip, or may be a storage module (for example, a read-only memory or a random access memory) that is in the core network device and that is located outside the chip.

According to a tenth aspect, this application provides a communication apparatus. The apparatus may be an integrated circuit chip. The integrated circuit chip includes a processor. The processor is coupled to a memory. The memory is configured to store a program or instructions. When the program or the instructions are executed by the processor, the communication apparatus is enabled to perform the method according to any one of the implementations of the foregoing aspects.

According to an eleventh aspect, an embodiment of this application provides a computer program product including instructions. When the computer program product runs on a computer, the computer is enabled to perform the method according to any one of the implementations of the foregoing aspects.

According to a twelfth aspect, an embodiment of this application provides a computer-readable storage medium, including instructions. When the instructions are run on a computer, the computer is enabled to perform the method according to any one of the implementations of the foregoing aspects.

According to a thirteenth aspect, an embodiment of this application provides a communication system. The communication system includes the core network device performing any one of the first aspect or the implementations of the first aspect, the access network device performing any one of the second aspect or the implementations of the second aspect, and the terminal device performing any one of the third aspect or the implementations of the third aspect.

According to a fourteenth aspect, an embodiment of this application provides a communication system. The communication system includes the core network device performing any one of the fourth aspect or the implementations of the fourth aspect, the access network device performing any one of the fifth aspect or the implementations of the fifth aspect, and the terminal device performing any one of the sixth aspect or the implementations of the sixth aspect.

### BRIEF DESCRIPTION OF DRAWINGS

To describe technical solutions in embodiments of this application more clearly, the following briefly describes the accompanying drawings for describing embodiments. It is clear that the accompanying drawings in the following descriptions show merely some embodiments of this application.
FIG. 1 is an example diagram of a system architecture of a latency measurement method according to this application;
FIG. 2 is a flowchart of a latency measurement method according to this application;
FIG. 3 is another flowchart of a latency measurement method according to this application;
FIG. 4 is another flowchart of a latency measurement method according to this application;
FIG. 5 is another flowchart of a latency measurement method according to this application;
FIG. 6 is another flowchart of a latency measurement method according to this application;
FIG. 7 is another flowchart of a latency measurement method according to this application;
FIG. 8 is another flowchart of a latency measurement method according to this application;
FIG. 9 is a diagram of an embodiment of a communication apparatus according to this application;
FIG. 10 is a diagram of another embodiment of a communication apparatus according to this application;
FIG. 11 is a diagram of another embodiment of a communication apparatus according to this application; and
FIG. 12 is a diagram of another embodiment of a communication apparatus according to this application.

### DESCRIPTION OF EMBODIMENTS

The following clearly and completely describes technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and the like (if existent) are intended to distinguish between similar objects but do not necessarily indicate a specific order or sequence. It should be understood that the terminology termed in such a way are interchangeable in proper circumstances, so that embodiments described herein can be implemented in an order other than the order illustrated or described herein. In addition, the terms "include" and "have" and any other variants thereof are intended to cover the non-exclusive inclusion. For example, a process, method, system, product, or device that includes a series of steps or units is not necessarily limited to those expressly listed steps or units, but may include other steps or units not expressly listed or inherent to such a process, method, product, or device.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

The following first describes a system architecture and an application scenario to which a latency measurement method provided in this application is applicable.

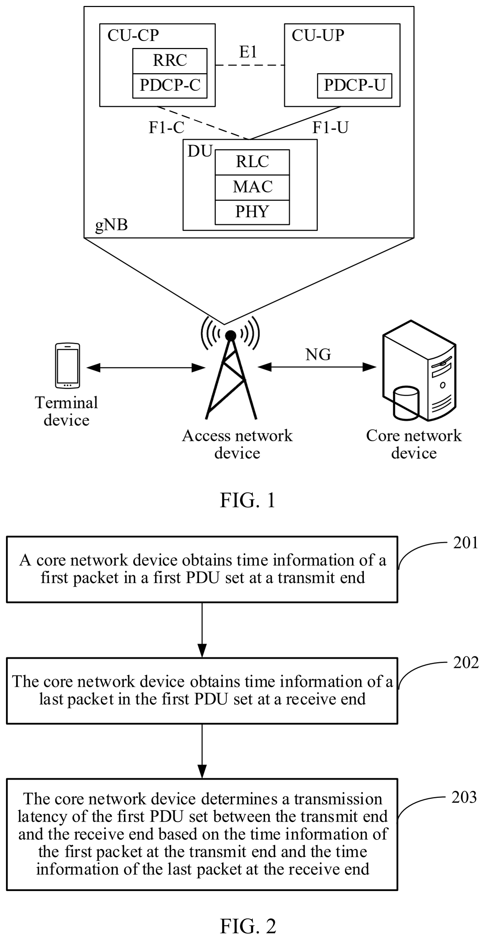

The communication method provided in this application may be applied to a 4^{th} generation mobile communication technology (the 4^{th} generation mobile communication technology, 4G) system, or may be applied to a 5^{th} generation mobile communication technology (the 5^{th} generation mobile communication technology, 5G) system, or may be applied to a 6^{th} generation mobile communication technology (the 6^{th} generation mobile communication technology, 6G) and a subsequently evolved standard. This is not limited in this application. As shown in FIG. 1, the communication system includes a terminal device, an access network device, and a core network device.

The terminal device includes a device providing voice and/or data connectivity for a user. For example, the terminal device may include a handheld device having a wireless connection function, or a processing device connected to a wireless modem. The terminal device may communicate with a core network (for example, a 4G core network (evolved packet core, EPC) or a 5G core network (5^{th} generation core, 5GC)) by using a radio access network (radio access network, RAN), and may exchange a voice and/or data with the RAN. The terminal device may also be referred to as a terminal (Terminal), user equipment (user equipment, UE), a wireless terminal device, a mobile terminal (mobile terminal, MT) device, a subscriber unit (subscriber unit), a subscriber station (subscriber station), a mobile station (mobile station, MS), a mobile (mobile) console, a remote station (remote station), an access point (access point, AP), a remote terminal (remote terminal) device, an access terminal (access terminal) device, a user terminal (user terminal) device, a user agent (user agent), a user device (user device), or the like. In addition, the terminal device may be a mobile phone (mobile phone), a tablet computer (Pad), a computer with a wireless transceiver function, a virtual reality (virtual reality, VR) device, an augmented reality (augmented reality, AR) device, an extended reality (extended reality, XR) service terminal, a cloud gaming (cloud gaming, CG) service terminal, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. It should be understood that a specific technology for and a specific device form of the terminal device are not limited in embodiments of this application. The terminal device in this application may be any one of the foregoing devices or chips. This is not specifically limited herein. Regardless of being used as the device or the chip, the terminal device can be manufactured, sold, or used as an independent product. In this embodiment and subsequent embodiments, the terminal device is used as an example for description.

The access network device may be any device with a wireless transceiver function, and may be configured to be responsible for a function related to an air interface, for example, a radio link maintenance function, a radio resource management function, and some mobility management functions. In addition, the access network device may be further configured with a baseband unit (baseband unit, BBU), and has a baseband signal processing function. For example, the access network device may be an access network device (radio access network, RAN) currently providing a service for the terminal device. Currently, some common examples of the access network device are a NodeB (NodeB, NB), an evolved NodeB (evolved NodeB, eNB or eNodeB), a next generation NodeB (next generation NodeB, gNB) in a 5G new radio (new radio, NR) system, a node (for example, an xNodeB) in a 6G system, a transmission reception point (transmission reception point, TRP), a radio network controller (radio network controller, RNC), a base station controller (base station controller, BSC), a base transceiver station (base transceiver station, BTS), a home base station (for example, a home evolved NodeB (home evolved NodeB) or a home NodeB (home NodeB, HNB)), and the like. In addition, in a network structure such as a cloud radio access network (cloud radio access network, CloudRAN) or an open radio access network (open radio access network, ORAN), the access network device may be a device including a central unit (central unit, CU) (also referred to as a control unit) and/or a distributed unit (distributed unit, DU). The RAN device including the CU and the DU splits protocol layers of a gNB in the NR system. Functions of some protocol layers are centrally controlled by the CU. Functions of some or all of remaining protocol layers are distributed in the DU, and the CU centrally controls the DU. Further, as shown in FIG. 1, the CU may further be divided into a control plane (CU-CP) and a user plane (CU-UP). The CU-CP is responsible for a control plane function, and mainly includes radio resource control (radio resource control, RRC) and a packet data convergence protocol (packet data convergence protocol, PDCP) that corresponds to the control plane (that is, PDCP-C). The PDCP-C is mainly responsible for encryption, decryption, integrity protection, data transmission, and the like of control plane data. The CU-UP is responsible for a user plane function, and mainly includes a service data adaptation protocol (service data adaptation protocol, SDAP) and a PDCP that corresponds to the user plane (that is, PDCP-U). The SDAP is mainly responsible for processing data of a core network and mapping a flow (flow) to a bearer. The PDCP-U is mainly responsible for encryption, decryption, integrity protection, header compression, serial number maintenance, data transmission, and the like on a data plane. The CU-CP is connected to the CU-UP through an E1 interface. The CU-CP represents that the gNB is connected to the core network through an NG interface, and the CU-CP is connected to the DU through an F1 interface-control plane (that is, F1-C). The CU-UP is connected to the DU through an F1 interface-user plane (that is, F1-U). In another possible implementation, the PDCP-C is also in the CU-UP. It should be understood that the access network device in embodiments of this application may be any one of the foregoing devices or a chip in the foregoing device. This is not specifically limited herein. Regardless of being used as the device or the chip, the access network device can be manufactured, sold, or used as an independent product. In this embodiment and subsequent embodiments, the access network device is used as an example for description.

The core network device is a device, in a core network (core network, CN), that provides service support for a terminal device. The core network device is connected to the access network device through an interface (for example, a next generation (next generation, NG) interface) between the core network device and the access network device. Currently, some common examples of the core network device are an access and mobility management function (access and mobility management function, AMF) entity, a session management function (session management function, SMF) entity, a user plane function (user plane function, UPF) entity, and the like. Details are not enumerated one by one herein. The AMF entity and the SMF entity are also referred to as control plane entities of the core network, and are configured to perform functions related to the control plane of the core network. For example, the AMF entity may be responsible for access management and mobility management of the terminal device; and the SMF entity may be responsible for session management, for example, session establishment of a user. The UPF entity is also referred to as a user plane entity of a core network, and is configured to perform a function related to a user plane of the core network. For example, the UPF entity is mainly responsible for connection to an external network and transmission of service data. It should be noted that an entity in this application may also be referred to as a network element or a functional entity. For example, the AMF entity may also be referred to as an AMF network element or an AMF functional entity. For another example, the SMF entity may also be referred to as an SMF network element or an SMF functional entity.

In a current standard, a function of quality of service monitoring (QoS monitoring) for a quality of service (quality of service, QoS) flow level can be used to measure a transmission latency of a data packet in a QoS flow between an access network device and a user plane of a core network device and a transmission latency between the access network device and a terminal device. For example, the core network device can notify, by using a control plane, the access network device to enable the latency measurement function (for example, specifying to measure an uplink latency and/or a downlink latency in control plane signaling). After the access network device receives the control plane signaling, the access network device can send latency measurement information (for, a measurement result of the uplink latency and/or a measurement result of the downlink latency) between the access network device and the terminal device and latency measurement information between the access network device and the core network device to the core network device. Then, the core network device can calculate a transmission latency between the terminal device and the core network device based on the received latency measurement information.

However, in the conventional technology, a transmission latency measured for a data packet in a PDU set cannot reflect a transmission status of a PDU set between a terminal device, an access network device, and a core network device. Therefore, this application provides a latency measurement method and a communication apparatus to obtain a transmission latency of a PDU set, so that a transmission status of a PDU set between the terminal device, the access network device, and the core network device is reflected.

With reference to FIG. 2, the following describes a main procedure of an embodiment of a latency measurement method provided in this application. In this embodiment, an example in which a core network device obtains a transmission latency of a first PDU set is used. The core network device mainly performs the following steps.

Step 201: A core network device obtains time information of a first packet in a first PDU set at a transmit end.

A PDU set is a set including a plurality of PDU packets (also referred to as data packets, which are referred to as packets for short below). A PDU packet in the PDU set carries a payload (payload) or content of an information unit (for example, a frame or a video slice) generated by an application layer. All PDU packets in a same PDU set are transmitted in a same QoS flow. A data burst (data burst) is one or more PDU sets generated by the application layer in a short time. A plurality of packets in a PDU set have an association relationship. For example, the association relationship may be that packets in the PDU set are used to transmit a same information unit or service. A receive end can successfully provide or present an information unit or a service for a user only after the receive end receives all packets included in the PDU set sent by the transmit end. Cloud VR (Cloud VR) or cloud gaming (Cloud gaming) is used as an example. When basic experience (35 Mbps, 60 fps) is met, a device generates a video frame every 16.7 ms. A video frame (approximately 583 KB) is divided into 50 IP packets (1500 bytes) for transmission. In this example, a video frame may be understood as a PDU set, and 50 IP packets included in a video frame may be understood as 50 PDU packets included in the PDU set. A user terminal serving as the receive end can parse out a picture of a video frame only after receiving all 50 PDU packets in the PDU set. It should be noted that in some scenarios, one PDU set is also referred to as one media stream, one media stream includes a plurality of packets, and the plurality of packets are used to transmit a same service. In this embodiment and subsequent embodiments, only a PDU set is used as an example for description, and an example in which a PDU set whose transmission latency needs to be determined by the core network device is a first PDU set is used for description.

In addition, a first packet in the first PDU set is a packet that is first sent or generated by the transmit end in the first PDU set. For example, the transmit end is a core network device and the receive end is an access network device. The first packet in the first PDU set is a downlink packet that is first sent by the core network device to the access network device and that belongs to the first PDU set or a downlink packet that is first generated and that belongs to the first PDU set. For example, the transmit end is a terminal device and the receive end is an access network device. The first packet in the first PDU set is an uplink packet that is first sent by the terminal device to the access network device and that belongs to the first PDU set or an uplink packet that is first generated by the terminal device and that belongs to the first PDU set.

It should be noted that, in a process of sending a packet, the transmit end transmits the packet from an upper layer of a first protocol layer to the first protocol layer, and then transmits the packet to a physical layer for sending. Therefore, the first packet in the first PDU set may also be a packet that is first received by the first protocol layer at the transmit end from the upper layer of the first protocol layer and that belongs to the first PDU set. For example, the transmit end is an access network device and the receive end is a terminal device. The first packet in the first PDU set is a downlink packet that is first received by a first protocol layer of the access network device from an upper layer of the first protocol layer and that belongs to the first PDU set. For example, the transmit end is a terminal device and the receive end is an access network device. The first packet in the first PDU set is an uplink packet that is first received by the first protocol layer of the terminal device from the upper layer of the first protocol layer and that belongs to the first PDU set. Optionally, the first protocol layer is a PDCP layer or an SDAP layer. For example, the first protocol layer is a PDCP layer, and the upper layer of the first protocol layer is an SDAP layer. For another example, the first protocol layer is an SDAP layer, and the upper layer of the first protocol layer is an application layer. When the transmit end is an access network device and the receive end is a terminal device, the upper layer of the first protocol layer may further be a GPRS tunneling protocol (GPRS tunneling protocol, GTP). This is not limited herein. The following uses the first protocol layer and the upper layer of the first protocol layer as an example for description.

Optionally, each packet in the first PDU set has a sequence number, and the sequence number indicates a sequence in which the transmit end generates a packet. For ease of description, a packet with a smallest sequence number in the first PDU set generated by the transmit end is referred to as an initial packet. Generally, the transmit end sends packets in ascending order of sequence numbers of the packets, that is, the transmit end preferentially sends a first generated packet, and the transmit end first sends the initial packet in the first PDU set. It should be noted that each packet in the first PDU set has a sequence number, but this does not mean that the transmit end needs to carry the sequence numbers when sending these packets. The transmit end may carry or may not carry the sequence numbers. In this embodiment, the first packet in the first PDU set may be an initial packet in the first PDU set. In this embodiment and subsequent embodiments, only the first packet in the first PDU set is used as an example for description.

In addition, the time information of the first packet at the transmit end is a moment at which the transmit end successfully sends the first packet, that is, a moment of the packet first sent by the transmit end, or a moment at which the transmit end generates or processes the first packet, or a moment at which the transmit end receives the first packet from another device. The following describes in detail the time information of the first packet at the transmit end with reference to specific implementations of the transmit end and the receive end.

In a possible implementation, an interface between the transmit end and the receive end is an air interface, that is, an interface between the terminal device and the access network device. The time information of the first packet at the transmit end indicates a moment at which the first protocol layer at the transmit end receives the first packet from the upper layer of the first protocol layer.

In air interface downlink transmission, the transmit end is the access network device and the receive end is the terminal device. The time information of the first packet at the transmit end includes first time information. The first time information indicates the moment at which the first protocol layer of the access network device receives the first packet from the upper layer of the first protocol layer. For example, in this step, the core network device receives the first time information from the access network device. For example, when the access network device sends the first PDU set to the terminal device, the access network device records a time (namely, the first time information) at which the first packet in the first PDU set is sent. Then, the access network device feeds back latency measurement information (including the first time information) of the first packet to the core network device. For another example, when the access network device sends the first PDU set to the terminal device, the access network device records a time (including the first time information) at which each packet is sent. Then, the access network device feeds back the latency measurement information (including the first time information) of the first packet to the core network device.

In air interface uplink transmission, the transmit end is the terminal device, and the receive end is the access network device. The time information of the first packet at the transmit end includes third time information. The third time information indicates the moment at which the first protocol layer of the terminal device receives the first packet from the upper layer of the first protocol layer. For example, in this step, the core network device receives, from the access network device, the third time information fed back by the terminal device to the access network device. For example, when the terminal device sends the first PDU set to the access network device, the terminal device records a time (namely, the third time information) at which the first packet is sent, and feeds back the third time information to the access network device. Then, the access network device feeds back the latency measurement information (including the third time information) of the first packet to the core network device. For another example, when the terminal device sends the first PDU set to the access network device, the terminal device records a time (including the third time information) at which each packet is sent, and feeds back the third time information to the access network device. Then, the access network device feeds back the latency measurement information (including the third time information) of the first packet to the core network device.

It should be noted that in a downlink transmission process, the first PDU set sent by the access network device to the terminal device is a downlink first PDU set, that is, the downlink first PDU set includes a downlink packet. In an uplink transmission process, the first PDU set sent by the terminal device to the access network device is an uplink first PDU set, and the uplink first PDU set includes an uplink packet. The uplink packet and the downlink packet are different data packets, and the uplink first PDU set and the downlink first PDU set are different PDU sets. However, both the uplink packet and the downlink packet are used to transmit service data corresponding to the first PDU set. For example, both the uplink packet and the downlink packet carry identification information of the first PDU set, or both the uplink packet and the downlink packet carry identification information of a service.

In another possible implementation, an interface between the transmit end and the receive end is an NG interface, that is, an interface between the access network device and the core network device. The time information of the first packet at the transmit end indicates the moment at which the transmit end sends the first packet.

In NG interface downlink transmission, the transmit end is the core network device, and the receive end is the access network device. The time information of the first packet at the transmit end includes fifth time information, and the fifth time information indicates the moment at which the core network device sends the first packet. For example, in this step, the core network device records a time (namely, the fifth time information) at which the core network device sends the first packet in the first PDU set.

In NG interface uplink transmission, the transmit end is the access network device, and the receive end is the core network device. The time information of the first packet at the transmit end includes seventh time information, and the seventh time information indicates the moment at which the access network device sends the first packet. For example, in this step, the core network device receives the seventh time information from the access network device. For example, when the access network device sends the first PDU set to the core network device, the access network device records a time (namely, the seventh time information) at which the first packet is sent, and feeds back the seventh time information to the core network device. For another example, when the access network device sends the first PDU set to the core network device, the access network device records a time (including the seventh time information) at which each packet is sent, and feeds back the seventh time information to the core network device.

Step 202: The core network device obtains time information of a last packet in the first PDU set at the receive end.

The last packet in the PDU set is a packet that finally arrives at the receive end in the PDU set sent by the transmit end, or a packet that is finally correctly received by the receive end in the PDU set sent by the transmit end, or a packet that is finally correctly received by the first protocol layer in the PDU set sent by the transmit end, or a packet that is finally generated when the transmit end generates the PDU set, or a packet that is finally sent by the transmit end in the PDU set. For example, the transmit end is the core network device and the receive end is the access network device. The last packet in the first PDU set is a downlink packet that is sent by the core network device and that finally arrives at the access network device and that belongs to the first PDU set, or a downlink packet that is sent by the core network device and that is finally correctly received by the access network device and that belongs to the first PDU set, or a packet that is finally generated when the core network device generates the first PDU set, or a packet that is finally sent by the core network device. For example, the transmit end is the access network device and the receive end is the core network device. The last packet in the first PDU set is an uplink packet that is sent by the access network device and that finally arrives at the core network device and that belongs to the first PDU set, or an uplink packet that is sent by the access network device and that is finally correctly received by the core network device and that belongs to the first PDU set, or a packet that is finally sent by the access network device in the first PDU set. For example, the transmit end is the access network device and the receive end is the terminal device. The last packet in the first PDU set is a downlink packet that is sent by the access network device and that finally arrives at the terminal device and that belongs to the first PDU set, or a downlink packet that is sent by the access network device and that is finally correctly received by the terminal device and that belongs to the first PDU set, or a downlink packet that is sent by the access network device and that is finally correctly received by the first protocol layer of the terminal device and that belongs to the first PDU set, or a packet that is finally sent by the access network device in the first PDU set. For example, the transmit end is the terminal device and the receive end is the access network device. The last packet in the first PDU set is an uplink packet that is sent from the terminal device and that finally arrives at the access network device and that belongs to the first PDU set, or an uplink packet that is sent from the terminal device and that is finally correctly received by the access network device and that belongs to the first PDU set, or an uplink packet that is sent from the terminal device and that is finally correctly received by the first protocol layer of the access network device and that belongs to the first PDU set, or a packet that is finally generated by the terminal device when the terminal device generates the first PDU set, or a packet that is finally sent from the terminal device in the first PDU set.

Optionally, if each packet in a PDU set has a sequence number, the sequence number indicates a sequence in which the transmit end generates a packet. Because the transmit end sends packets in ascending order of sequence numbers of the packets, that is, the transmit end preferentially sends a first generated packet, the last packet in the PDU may be a packet with a largest sequence number. For ease of description, a packet with a smallest sequence number is referred to as an initial packet, and a packet with a largest sequence number is referred to as a tail packet. It should be noted that each packet in the first PDU set has a sequence number, but this does not mean that the transmit end needs to carry the sequence numbers when sending these packets. The transmit end may carry or may not carry the sequence numbers. The following examples are used for description.

In a possible implementation, a plurality of packets in a PDU set are transmitted from the transmit end to the receive end in a sequence corresponding to sequence numbers, to be specific, the transmit end sends the packets in the sequence of the sequence numbers, and the receive end receives the packets in the sequence of the sequence numbers. In this case, a last packet in the PDU set is the packet with a largest sequence number (that is, a tail packet) in the PDU set. For example, the transmit end generates a PDU set including 100 packets, and sequence numbers of the 100 packets are sequentially 1, 2, 3, ..., and 100 in a generation sequence. If the transmit end performs sending in the sequence of the sequence numbers, no disorder occurs in a transmission process, and the receive end performs receiving in the sequence of the sequence numbers, the last packet in the PDU set is a packet with a sequence number of 100 (that is, the tail packet).

In another possible implementation, a plurality of packets in a PDU set are transmitted from the transmit end in a sequence of sequence numbers. However, disorder occurs in a transmission process (that is, some packets with larger sequence numbers are transmitted before some packets with smaller sequence numbers). Consequently, the receive end receives the packets in a sequence of arrival of the packets. In this case, the last packet in the PDU set may not be the packet with the largest sequence number in the PDU set. For example, the transmit end generates a PDU set including 100 packets, and sequence numbers of the 100 packets are sequentially 1, 2, 3, ..., and 100 in a generation sequence. If the transmit ends performs sending in the sequence of the sequence numbers, a packet with the sequence number 100 arrives at the receive end earlier than a packet with the sequence number 99 due to a disorder in a transmission process, and the packet with the sequence number 99 finally arrives at the receiver, the last packet in the PDU set is the packet with the sequence number 99, and the packet with the largest sequence number (that is, the tail packet) in the PDU set is the packet with the sequence number 100.

For ease of description, in this application, a last packet generated when the transmit end generates the PDU set, a last packet sent from the transmit end in the PDU set, and a packet with a largest sequence number in the PDU set are collectively referred to as a tail packet. The tail packet represents a packet that is finally generated or sent from a perspective of the transmit end. It can be learned that the last packet in the first PDU set may be the tail packet in the first PDU set, or may not be the tail packet in the first PDU set. In this embodiment and subsequent embodiments, the last packet in the first PDU set is mainly used as an example for description, and it indicates that the last packet may be a tail packet or may not be a tail packet. In some special implementations or examples, if there is a relatively high probability that the last packet is implemented by using the tail packet, the tail packet is used as an example for illustration.

In addition, the time information of the last packet at the receive end may be understood as a moment at which the receive end successfully receives the last packet, that is, a moment at which the receive end receives the packet finally arriving at the receive end. The following describes in detail the time information of the last packet at the receive end with reference to specific implementations of the transmit end and the receive end.

In a possible implementation, an interface between the transmit end and the receive end is an air interface, that is, an interface between the terminal device and the access network device. The time information of the last packet at the receive end indicates the moment at which the first protocol layer at the receive end uploads the last packet to the upper layer of the first protocol layer.

In air interface downlink transmission, the transmit end is the access network device and the receive end is the terminal device. The time information of the last packet at the receive end includes second time information, and the second time information indicates the moment at which the first protocol layer of the terminal device uploads the last packet to the upper layer of the first protocol layer. In an example, the core network device obtains the air interface downlink latency of the last packet in the first PDU set and the moment (for example, the moment at which the first protocol layer of the access network device receives the last packet from the upper layer of the first protocol layer, or the moment (namely, the sixth time information) at which the access network device receives the last packet in the first PDU set from the core network device) at which the access network device receives the last packet in the first PDU set, and determines the second time information based on a sum of the moment at which the access network device receives the last packet and the air interface downlink latency of the last packet in the first PDU set. In another example, the access network device determines the second time information based on the sum of the air interface downlink latency of the last packet in the first PDU set and the moment (for example, the moment at which the first protocol layer of the access network device receives the last packet from the upper layer of the first protocol layer, or the moment (namely, the sixth time information) at which the access network device receives the last packet in the first PDU set from the core network device) at which the access network device receives the last packet in the first PDU set. The core network device receives the second time information from the access network device.

In air interface uplink transmission, the transmit end is the terminal device, and the receive end is the access network device. The time information of the last packet at the receive end includes fourth time information, and the fourth time information indicates the moment at which the first protocol layer of the access network device uploads the last packet to the upper layer of the first protocol layer. For example, in this step, the core network device receives the fourth time information from the access network device. For example, when the access network device receives the first PDU set from the terminal device, the access network device records a time (namely, the fourth time information) at which the last packet in the first PDU set is received. Then, the access network device feeds back the fourth time information to the core network device. For another example, when the access network device receives the first PDU set from the terminal device, the access network device records a time (including the fourth time information) at which each packet is received. Then, the access network device feeds back the fourth time information to the core network device.

In a possible implementation, an interface between the transmit end and the receive end is an NG interface, that is, an interface between the core network device and the access network device. The time information of the last packet at the receive end indicates the moment at which the receive end receives the last packet.

In NG interface downlink transmission, the transmit end is the core network device, and the receive end is the access network device. The time information of the last packet at the receive end includes sixth time information, and the sixth time information indicates the moment at which the access network device receives the last packet. For example, in this step, the core network device receives the sixth time information from the access network device. For example, when the access network device receives the first PDU set from the core network device, the access network device records a time (namely, the sixth time information) at which the last packet in the first PDU set is received, and feeds back the sixth time information to the core network device. For another example, when the access network device receives the first PDU set from the core network device, the access network device records a time (including the sixth time information) at which each packet is received, and feeds back the sixth time information to the core network device.

In NG interface uplink transmission, the transmit end is the access network device, and the receive end is the core network device. The time information of the last packet at the receive end includes eighth time information, and the eighth time information indicates the moment at which the core network device receives the last packet. For example, when receiving an uplink data packet from the access network device, the core network device can record a moment (namely, the eighth time information) at which the last packet is received.

It should be noted that, in some scenarios, if the last packet is not the tail packet, and a moment at which the receive end submits the last packet to another device or the first protocol layer of the receive end submits the last packet to the upper layer is very close to a moment at which the tail packet is submitted, the time information of the last packet at the receive end may also be understood as a moment at which the receive end correctly receives the tail packet and sends the tail packet to the another device, or may be understood as a moment at which the first protocol layer of the receive end correctly receives the tail packet and submits the tail packet to the upper layer of the first protocol layer. For example, the receive end correctly receives a data packet from the transmit end, and the receive end submits the data packet to another device or the first protocol layer of the receive end submits the data packet to the upper layer of the first protocol layer only when other data packets before the data packet are all correctly received. In this scenario, data packets are sequentially submitted. Optionally, the time information of the last packet at the receive end may further include a moment at which the receive end correctly receives the tail packet and sends the tail packet to another device and a moment at which the receive end correctly receives the last packet and sends the last packet to another device. Alternatively, the time information of the last packet at the receive end may include a moment at which the first protocol layer of the receive end correctly receives the tail packet and submits the tail packet to the upper layer of the first protocol layer and a moment at which the first protocol layer of the receive end correctly receives the last packet and submits the last packet to the upper layer of the first protocol layer.

Step 203: The core network device determines a transmission latency of the first PDU set between the transmit end and the receive end based on the time information of the first packet at the transmit end and the time information of the last packet at the receive end.

For example, the core network device determines a difference between the time information of the last packet at the receive end and the time information of the first packet at the transmit end as the transmission latency of the first PDU set between the transmit end and the receive end.

In an example, the transmit end is the access network device and the receive end is the terminal device, and the transmission latency that is of the first PDU set, that is determined by the core network device, and that is between the transmit end and the receive end is an air interface downlink latency of the first PDU set. For example, the core network device determines the difference between the moment indicated by the second time information and the moment indicated by the first time information as the air interface downlink latency of the first PDU set.

In an example, the transmit end is the terminal device and the receive end is the access network device; and the transmission latency that is of the first PDU set, that is determined by the core network device, and that is between the transmit end and the receive end is an air interface uplink latency of the first PDU set. For example, the core network device determines a difference between the moment indicated by the fourth time information and the moment indicated by the third time information as the air interface uplink latency of the first PDU set.

In an example, the transmit end is the core network device and the receive end is the access network device, and the transmission latency that is of the first PDU set, that is determined by the core network device, and that is between the transmit end and the receive end is an NG interface downlink latency of the first PDU set. For example, the core network device determines a difference between the moment indicated by the sixth time information and the moment indicated by the fifth time information as the NG interface downlink latency of the first PDU set.

In an example, the transmit end is the access network device and the receive end is the core network device, and the transmission latency that is of the first PDU set, that is determined by the core network device, and that is between the transmit end and the receive end is an NG interface uplink latency of the first PDU set. For example, the core network device determines a difference between the moment indicated by the eighth time information and the moment indicated by the seventh time information as the NG interface uplink latency of the first PDU set.

In an example, the core network device determines the transmission latency of the first PDU set between the transmit end and the receive end based on the time information of each packet in the first PDU set at the transmit end and the time information of each packet at the receive end. For example, the transmission latency of the first PDU set between the transmit end and the receive end is a maximum value of transmission latencies of all packets in the first PDU set between the transmit end and the receive end. For example, the transmit end is the access network device and the receive end is the terminal device, and the downlink transmission latency of the first PDU set between the access network device and the terminal device is a maximum value of transmission latencies of all downlink packets in the first PDU set between the access network device and the terminal device.

In this embodiment, the core network device can collect latency measurement information (that is, the time information of the first packet at the transmit end) of the first packet in the first PDU set and latency measurement information (that is, the time information of the last packet at the receive end) of the last packet, and determine the transmission latency (for example, the air interface downlink latency, the air interface uplink latency, the NG interface downlink latency, or the NG interface uplink latency) of the first PDU set between the transmit end and the receive end based on the time information of the first packet at the transmit end and the time information of the last packet at the receive end. Therefore, a problem in the conventional technology that the core network device cannot obtain a transmission latency of a PDU set is resolved, helping optimize a transmission resource based on a transmission latency of a PDU set, and improving network transmission performance.

It should be noted that in some embodiments, the access network device can determine the air interface downlink latency of the first PDU set and/or the air interface uplink latency of the first PDU set. Then, the access network device feeds back the air interface downlink latency of the first PDU set and/or the air interface uplink latency of the first PDU set to the core network device. For example, the access network device can record the first time information and the fourth time information, and can obtain the second time information and the third time information from the terminal device. Then, the access network device determines a difference between the moment indicated by the second time information and the moment indicated by the first time information as the air interface downlink latency of the first PDU set, and determines a difference between the moment indicated by the fourth time information and the moment indicated by the third time information as the air interface uplink latency of the first PDU set. In such an implementation, the access network device can determine the air interface downlink latency of the first PDU set and the air interface uplink latency of the first PDU set based on the time information (for example, the first time information and the third time information) of the first packet at the transmit end and the time information (for example, the second time information and the fourth time information) of the last packet at the receive end. In addition, the core network device can determine the NG interface downlink latency of the first PDU set and the NG interface uplink latency of the first PDU set based on the time information (for example, the fifth time information and the seventh time information) of the first packet at the transmit end and the time information (for example, the sixth time information and the eighth time information) of the last packet at the receive end. Therefore, a problem in the conventional technology that the core network device cannot obtain a transmission latency of a PDU set is resolved. Furthermore, the access network device can calculate an air interface latency, reducing signaling overheads used by the access network device to feed back an air interface measurement result to the core network device, and improving latency measurement efficiency of the PDU set.

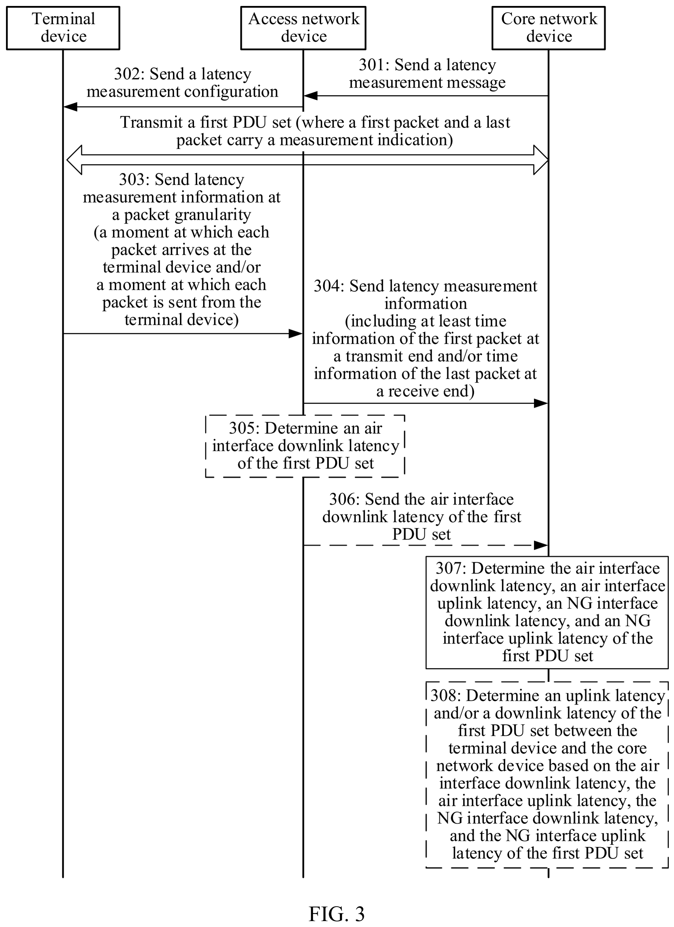

The following further describes a latency measurement method provided in this application with reference to FIG. 3. In the embodiment shown in FIG. 3, an access network device and a terminal device perform latency measurement at a packet granularity, and feed back latency measurement information to a core network device. Then, the core network device determines a transmission latency of a first PDU set between a transmit end and a receive end based on the latency measurement information. Specifically, the core network device, the access network device, and the terminal device separately perform the following steps.

Step 301: The core network device sends a latency measurement message to the access network device.

Correspondingly, the access network device receives the latency measurement message from the core network device.

The latency measurement message is control plane signaling, and indicates the access network device to perform latency measurement at the packet granularity on a packet carrying a latency measurement indication (briefly referred to as a measurement packet).

In addition, a user plane of the core network device adds a latency measurement indication to a downlink packet in the first PDU set to be sent to the access network device, to indicate packets in the first PDU set that are to be measured.

In an implementation, the user plane of the core network device indicates the access network device to perform latency measurement on each packet in the first PDU set, in other words, each packet in the first PDU set sent by the user plane of the core network carries the latency measurement indication. In this implementation, the access network device does not need to sense which packet is a first packet and which packet is a last packet in the first PDU set. In addition, the access network device feeds back latency measurement information of each packet in the first PDU set to the core network device.

In another implementation, the user plane of the core network device indicates the access network device to perform latency measurement only on the first packet and the last packet (for example, a tail packet) in the first PDU set, in other words, in the first PDU set sent by the user plane of the core network, only the first packet and the last packet (for example, the tail packet) carry the latency measurement indication. In this implementation, the access network device can sense which packet is the first packet and which packet is the last packet in the first PDU set. In addition, the access network device feeds back only the latency measurement information of the first packet and the last packet in the first PDU set to the core network device.

For example, the first PDU set is a QoS flow (QoS flow). A control plane of the core network device sends a message #1 to the access network device. The message #1 includes an identifier of a QoS flow (QFI) on which latency measurement needs to be performed and a QoS monitoring request (QoS Monitoring Request). The message #1 indicates the access network device to measure a transmission latency of a QoS flow of a specified QFI. In addition, the user plane of the core network device adds a latency measurement indication (for example, a quality of service monitoring packet indicator (QoS monitoring packet indicator, QMP indicator)) to a GTP user plane (User Plane Part of GTP, GTP-U) header corresponding to a data packet corresponding to the QoS flow. The latency measurement indication indicates that a packet carrying the latency measurement indication is used for latency measurement. In addition, the core network device adds, to the GTP-U header, time information (for example, a timestamp indicating a local time) of sending the packet by the user plane of the core network device.

In another implementation, the user plane of the core network device indicates, to the access network device, which data packet in the first PDU set is the first packet and which data packet is the last packet (for example, a tail packet). For example, when sending a data packet in the first PDU set to the access network device, the user plane of the core network device also sends an identifier of the first PDU set and a sequence number of the packet in the first PDU set. Therefore, the access network device can determine, by using the identifier of the first PDU set, that the received packet belongs to the first PDU set, and sense, based on the sequence number in the first PDU set, which packet is the first packet and which packet is the last packet in the first PDU set. In addition, the access network device may feed back the latency measurement information of only the first packet and the last packet in the first PDU set to the core network device.

Step 302: The access network device sends a latency measurement configuration to the terminal device.

Correspondingly, the terminal device receives the latency measurement configuration from the access network device.

The latency measurement configuration sent by the access network device to the terminal device indicates the terminal device to perform latency measurement. For example, after the terminal device receives the latency measurement configuration from the access network device, the terminal device enables a function of performing latency measurement at the packet granularity. Optionally, the latency measurement configuration includes at least one of a to-be-measured data radio bearer (data radio bearer, DRB), a to-be-measured service type and service identifier, and the like.

In this embodiment, the terminal device does not sense which packet is the first packet and which packet is the last packet in the first PDU set received from the access network device. After the terminal device enables the function of performing latency measurement at the packet granularity, the terminal device records a moment at which each packet arrives at the terminal device and a moment at which each packet is sent from the terminal device, or the terminal device performs latency measurement at the packet granularity on a particular packet based on an indication of the access network device. For example, the access network device adds indication information to a downlink data packet, to indicate whether the terminal device needs to perform latency measurement on the data packet.

Optionally, the moment at which each packet arrives at the terminal device is a moment at which a first protocol layer of the terminal device uploads each packet to an upper layer of the first protocol layer, and the moment at which each packet is sent from the terminal device is a moment at which the first protocol layer of the terminal device receives each packet from the upper layer of the first protocol layer. Optionally, the first protocol layer is a PDCP layer or an SDAP layer. For example, the first protocol layer is a PDCP layer, and the upper layer of the first protocol layer is an SDAP layer. For another example, the first protocol layer is an SDAP layer, and the upper layer of the first protocol layer is an application layer.

For example, the first protocol layer is a PDCP layer. A moment at which a packet arrives at the terminal device is a moment at which the PDCP layer of the terminal device submits a PDCP SDU corresponding to the PDCP PDU to an upper layer (for example, an SDAP layer) of the PDCP layer, and a moment at which the packet is sent from the terminal device is a moment at which the PDCP layer of the terminal device receives, from the upper layer (for example, the SDAP layer) of the PDCP layer, the PDCP SDU corresponding to the PDCP PDU.

Step 303: The terminal device sends latency measurement information at a packet granularity to the access network device.

Correspondingly, the access network device receives the latency measurement information at the packet granularity from the terminal device.

The latency measurement information at the packet granularity includes at least one of a moment at which a packet arrives at the terminal device (that is, time information of the data packet at the receive end), a moment at which a packet is sent from the terminal device (that is, time information of the data packet at the transmit end), and a transmission latency (for example, a downlink air interface latency), calculated by the terminal device, of the packet between the terminal device and the access network device. Optionally, the latency measurement information at the packet granularity further includes a sequence number of a packet at the first protocol layer. For example, for a downlink, the access network device determines, based on a sequence number of the first protocol layer in the received latency measurement information at the packet granularity and a sequence number of a first protocol layer of each downlink measurement packet recorded in the access network device, time information (that is, time information of the transmit end, a moment at which the transmit end successfully sends the packet, a moment at which the transmit end generates the packet, or a moment at which the transmit end receives the packet from another device) corresponding to the packet corresponding to the received latency measurement information at the packet granularity in the access network device. For specific descriptions, refer to the time information of the first packet at the transmit end in step 201. It is not limited to the first packet herein. Further, if the access network device can sense which packet is the first packet and which packet is the last packet in the first PDU set, in other words, if the access network device can determine a sequence number of a first protocol layer of the first packet and a sequence number of a first protocol layer of the last packet in the first PDU set, the access network device can determine, from a plurality of pieces of received latency measurement information at the packet granularity, latency measurement information (for example, third time information) of the first packet in the first PDU set and latency measurement information (for example, second time information) of the last packet. For explanations of the second time information and the third time information, refer to related descriptions in step 201 and step 202. Details are not described herein again.

For example, if the first protocol layer is a PDCP layer, a sequence number of a packet at the first protocol layer is an SN of a PDCP PDU (PDCP SN for short).

For example, the terminal device sends the latency measurement information of each packet at the packet granularity to the access network device by using control plane signaling (for example, an RRC message). It should be noted that the terminal device may send the latency measurement information of all the packets in the first PDU set to the access network device by using one piece of signaling, or may send the latency measurement information of all the packets in the first PDU set to the access network device by using a plurality of pieces of signaling. This is not limited herein.

For an uplink, the terminal device performs latency measurement on all uplink data packets in the first PDU set. For example, the terminal device sends the latency measurement information of all the uplink data packets at the packet granularity to the access network device.

Step 304: The access network device sends the latency measurement information to the core network device.

Correspondingly, the core network device receives the latency measurement information from the access network device.

In a possible implementation, the access network device does not sense which packet is the first packet and which packet is the last packet in the first PDU set. The access network device sends the latency measurement information at the packet granularity to the core network device. The latency measurement information that is at the packet granularity and that is sent by the access network device to the core network device includes the latency measurement information (for example, a moment at which each packet arrives at the terminal device and/or a moment at which each packet is sent from the terminal device) that is at the packet granularity and that is received from the terminal device, and the latency measurement information (for example, a moment at which each packet arrives at the access network device and/or a moment at which each packet is sent from the access network device) that is at the packet granularity and that is recorded by the access network device. For example, in downlink transmission, when sending each downlink packet, the user plane of the core network device adds a moment T1 (for example, adds, to a GTP-U header of each packet, a timestamp at which the packet is sent) at which the packet is sent; and when receiving each packet, the access network device records a moment T2 (for example, a timestamp at which the access network device receives the packet) at which the access network device receives the packet. In uplink transmission, the access network device adds, to a to-be-sent monitoring response packet, a moment T3 at which the monitoring response packet is sent (for example, adds, to a GTP-U header of the monitoring response packet, a timestamp at which the packet is sent). Latency measurement information of each packet in the first PDU set fed back by the access network device to the core network device includes T1, T2, and T3. In addition, when receiving the monitoring response packet, the core network device records a moment T4 at which the monitoring response packet is received.

In another possible implementation, the access network device can sense which packet is the first packet and which packet is the last packet in the first PDU set. For example, in downlink transmission, the user plane of the core network device adds, to a GTP-U header of the first packet in the first PDU set, a moment t1 at which the first packet is sent; and when receiving the last packet in the first PDU set, the access network device records a moment t2 at which the last packet is received. In uplink transmission, the access network device adds, to the first packet in the first PDU set to be sent to the core network device, a moment t3 at which the first packet is sent; and when receiving the last packet in the first PDU set, the core network device records a moment t4 at which the last packet is received.

In this case, the access network device sends latency measurement information of the first PDU set to the core network device. The latency measurement information of the first PDU set includes the latency measurement information of the first packet and the latency measurement information of the last packet. The latency measurement information of the first packet includes first time information recorded by the access network device, third time information received by the access network device from the terminal device (or third time information determined by the access network device based on an air interface measurement latency fed back by the terminal device), and seventh time information (for example, t3) recorded by the access network device. Optionally, the latency measurement information of the first packet further includes fifth time information (for example, t1) added by the core network device to the downlink packet. The latency measurement information of the last packet includes second time information received by the access network device from the terminal device (or second time information determined by the access network device based on an air interface measurement latency fed back by the terminal device), and fourth time information and sixth time information (for example, t2) that are recorded by the access network device. For descriptions of the first time information, the second time information, the third time information, the fourth time information, the seventh time information, and the sixth time information, refer to related descriptions in step 201 and step 202. Details are not described herein again.

It should be noted that the access network device may use different implementations for an air interface uplink and downlink. For example, for the air interface downlink, the access network device can sense which packet is the first downlink packet and which packet is the last packet in the first PDU set. For the air interface uplink, the access network device does not sense which packet is the first packet and which packet is the last packet in the first PDU set.

Step 305: The access network device determines an air interface downlink latency of the first PDU set.

Step 305 is an optional step. If the access network device can sense which packet is the first packet and which packet is the last packet in the first PDU set, the access network device sequentially performs step 305 and step 306. If the access network device cannot sense which packet is the first packet and which packet is the last packet in the first PDU set, the access network device does not perform step 305 and step 306. Instead, the core network device determines the air interface downlink latency of the first PDU set.

In this step, because the access network device can sense which packet is the first packet and which packet is the last packet in the first PDU set, the access network device can determine the first time information, and can also receive the second time information from the terminal device, so that the access network device can determine a difference between the second time information and the first time information as the air interface downlink latency of the first PDU set. For explanations of the first time information, the second time information, and a manner in which the access network device determines the first time information, refer to related descriptions in step 201 and step 202. Details are not described herein again.

Step 306: The access network device sends the air interface downlink latency of the first PDU set to the core network device.

Correspondingly, the core network device receives the air interface downlink latency of the first PDU set from the access network device.

Optionally, the access network device sends the air interface downlink latency of the first PDU set to the core network device by using control plane signaling or the user plane. Optionally, a message carrying the air interface downlink latency of the first PDU set further includes identification information of the first PDU set. The core network device determines the air interface downlink latency as the air interface downlink latency of the first PDU set based on the identification information of the first PDU set. Therefore, the core network device can determine latency measurement information of a same PDU set based on the identification information of the first PDU set. This further helps the core network device determine a transmission latency of a same PDU set between the terminal device and the core network device.

Step 307: The core network device determines the air interface downlink latency, the air interface uplink latency, the NG interface downlink latency, and the NG interface uplink latency of the first PDU set.

For an air interface latency, the core network device determines the air interface uplink and downlink latencies based on the first time information, the second time information, the third time information, and the fourth time information that are received from the access network device.

For example, the core network device determines a difference between the moment indicated by the second time information and the moment indicated by the first time information as the air interface downlink latency of the first PDU set.

For example, the core network device determines a difference between the moment indicated by the fourth time information and the moment indicated by the third time information as the air interface uplink latency of the first PDU set. Alternatively, the core network device determines an air interface uplink latency of each packet in the first PDU set, and determines a maximum value of the air interface uplink latencies at a plurality of packet granularities as the air interface uplink latency of the first PDU set.

For the NG interface latency, the transmit end may perform NG interface latency measurement on each packet, or may perform NG interface latency measurement only on the first packet and the last packet in the first PDU set. For example, when the transmit end sends a data packet to the receive end, time information (that is, time information of the data packet at the transmit end) of sending the data packet by the transmit end is carried, and the receive end records the time information (that is, time information of the data packet at the receive end) of receiving the data packet. For example, the core network device can record the fifth time information (for example, t1) and the eighth time information (for example, t4), and the sixth time information (for example, t2) and the seventh time information (for example, t3) that can be obtained from the access network device, and the core network device can determine the uplink and downlink latencies of the NG interface.

For example, the core network device determines a difference between the moment indicated by the sixth time information and the moment indicated by the fifth time information as the NG interface downlink latency of the first PDU set. For example, the user plane of the core network device adds, to a GTP-U header of the to-be-sent first packet in the first PDU set, a moment t1 at which the first packet is sent. When receiving the last packet in the first PDU set, the access network device records a moment t2 at which the last packet is received. In this case, the core network device determines that the NG interface downlink latency is (t2 - t1).

For example, the core network device determines a difference between the moment indicated by the eighth time information and the moment indicated by the seventh time information as the NG interface uplink latency of the first PDU set. For example, the access network device adds, to the first packet in the first PDU set to be sent to the core network device, a moment t3 at which the first packet is sent. When receiving the last packet in the first PDU set, the core network device records a moment t4 at which the last packet is received. In this case, the core network device determines that the NG interface uplink latency is (t4 - t3).

Optionally, if the access network device performs step 305 and step 306, after the core network device determines the air interface uplink latency of the first PDU set, the core network device may send the air interface uplink latency of the first PDU set to the access network device. This helps the access network device optimize and adjust air interface transmission based on the air interface uplink and downlink latencies of the first PDU set, improving communication efficiency. For example, the core network device may send an air interface uplink latency of a PDU set to the access network device, or may send an average value of air interface uplink latencies of a plurality of PDU sets, or may send a smallest air interface uplink latency or a maximum air interface uplink latency of a plurality of PDU sets. This is not limited in this application.

Step 308: The core network device determines an uplink latency and/or a downlink latency of the first PDU set between the terminal device and the core network device based on the air interface downlink latency, the air interface uplink latency, the NG interface downlink latency, and the NG interface uplink latency of the first PDU set.

Step 308 is an optional step.

For example, the core network device determines a sum of the air interface downlink latency of the first PDU set and the NG interface downlink latency of the first PDU set as the downlink latency of the first PDU set between the terminal device and the core network device.

For example, the core network device determines a sum of the air interface uplink latency of the first PDU set and the NG interface uplink latency of the first PDU set as the uplink latency of the first PDU set between the terminal device and the core network device.

It should be noted that in this embodiment, statistics about an NG interface latency (for example, the NG interface downlink latency and the NG interface uplink latency) and an air interface latency (for example, the air interface downlink latency and the air interface uplink latency) may be separately collected. There is not necessarily a dependency relationship

In this embodiment, the core network device obtains latency measurement information, at the packet granularity, of the first packet and the last packet in the first PDU set by using a latency measurement procedure at a packet granularity in the conventional technology, and then determines the air interface uplink and downlink latencies and the NG interface uplink and downlink latencies of the first PDU set based on the latency measurement information, at the packet granularity, of the first packet and the last packet in the first PDU set. In a packet granularity-based latency measurement process, the terminal device does not need to sense the first packet and the last packet in the first PDU set, or the access network device is not required to sense the first packet and the last packet in the first PDU set. Therefore, this helps the core network device obtain a latency of the first PDU set while relatively low complexity of the terminal device and the access network device is maintained. This further helps evaluate transmission performance of a service based on a latency of the first PDU set.

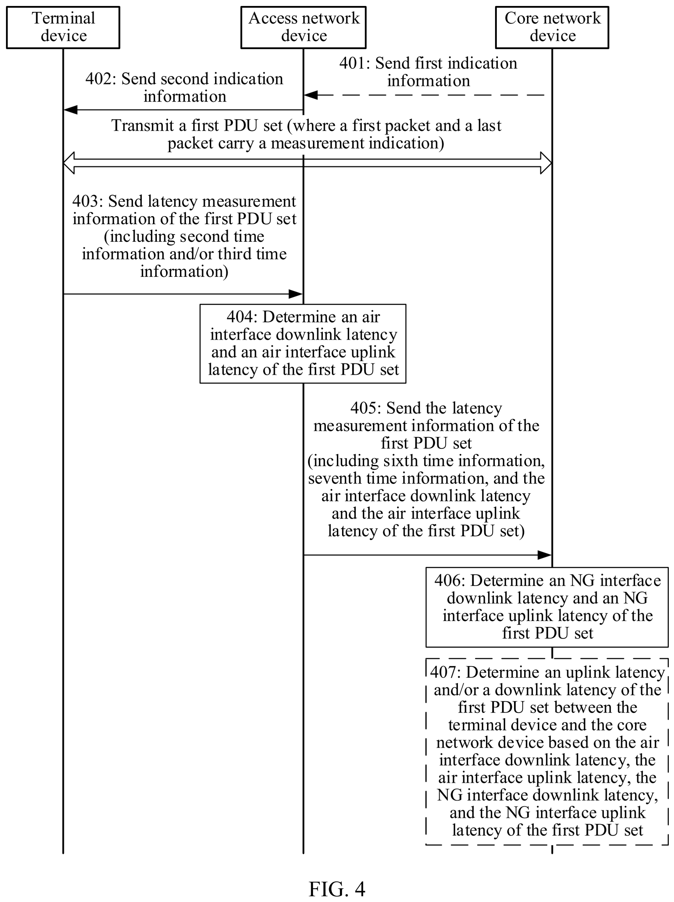

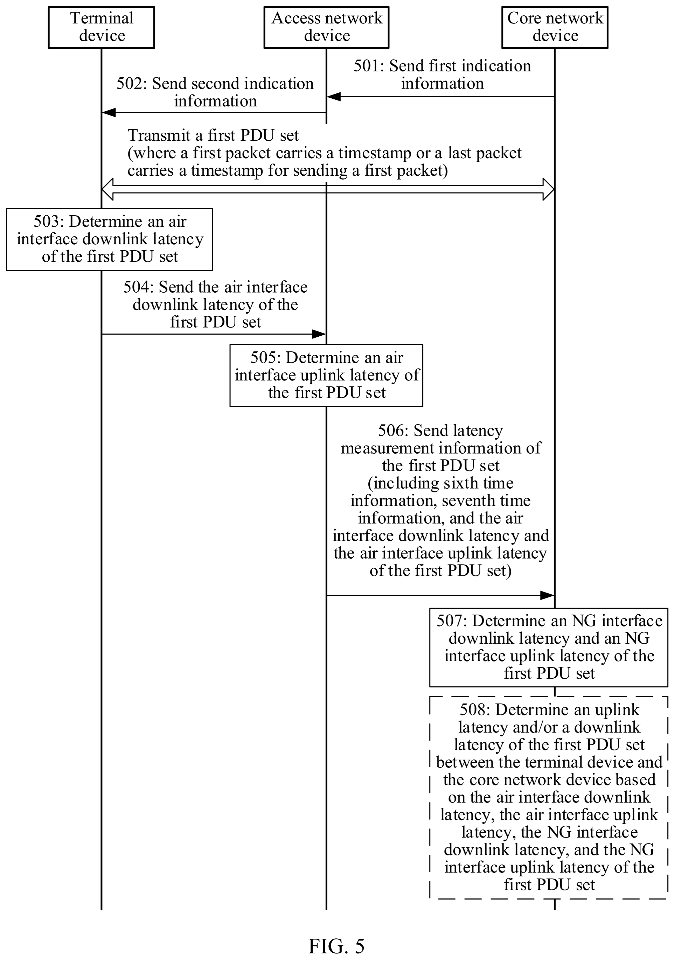

In addition, in another embodiment of the latency measurement method provided in this application, the access network device and the terminal device may perform PDU set granularity-based latency measurement (also referred to as frame granularity-based latency measurement), and feed back PDU set granularity-based latency measurement information to the core network device. The following describes a PDU set granularity-based latency measurement process separately with reference to FIG. 4 and FIG. 5.

FIG. 4 shows a main procedure of another embodiment of a latency measurement method according to this application. In this embodiment, a terminal device feeds back latency measurement information of a first PDU set to an access network device by using a control plane; and the access network device first determines an air interface downlink latency and an air interface uplink latency of the first PDU set based on the latency measurement information of the first PDU set, and then feeds back the air interface downlink latency and the air interface uplink latency of the first PDU set to a core network device. Specifically, the core network device, the access network device, and the terminal device mainly perform the following steps.

Step 401: The core network device sends first indication information to the access network device.

Correspondingly, the access network device receives the first indication information from the core network device.

Step 401 is an optional step.

The first indication information indicates to measure only a first packet and a last packet in a PDU set. It may also be understood as that the first indication information indicates to measure a transmission latency at a PDU set granularity. After the access network device receives the first indication information, the access network device enables a function of measuring the transmission latency at the PDU set granularity.

Optionally, the first indication information is carried in control plane signaling, or may be carried in a user plane data packet.

In a possible implementation, the core network device notifies, by using a control plane, the access network device to enable latency measurement at the PDU set granularity. For example, the core network device sends control plane signaling to the access network device, and the control plane signaling carries the first indication information. Optionally, the control plane signaling may be a latency measurement request message, or may be another message. An example in which the control plane signaling is a latency measurement request message is used. The core network device sends the first indication information by using the latency measurement request message of the control plane. After the access network device receives the first indication information in the latency measurement request message, the access network device may not consider whether the data packet sent by the user plane of the core network device carries a latency measurement indication in the conventional technology, and the access network device performs latency measurement only on the first packet and the last packet in the PDU set.

Optionally, the core network device further sends identification information of the first PDU set to the access network device to indicate the access network device to perform latency measurement at the PDU set granularity on the first PDU set. For example, the core network device sends a latency measurement request message to the access network device, and the latency measurement request message includes first indication information and the identification information of the first PDU set to indicate the access network device to measure only the first packet and the last packet in the first PDU set, that is, to perform latency measurement at the PDU set granularity only on the first PDU set.

In another possible implementation, the core network device notifies, by using a user plane, the access network device to enable latency measurement at the PDU set granularity. For example, if the core network device needs to indicate the access network device to enable latency measurement at the PDU set granularity for the first PDU set, the core network device separately adds the first indication information to the first packet and the last packet in the first PDU set, and does not add the first indication information to another packet in the first PDU set. The access network device triggers, based on the first indication information in the first packet and the last packet in the first PDU set, measurement on the first packet and the last packet in the first PDU set. Optionally, the first indication information may alternatively be carried in a GTP-U header of a packet. For example, a GTP-U header of the first packet and a GTP-U header of the last packet in the first PDU set each carry the first indication information. In this implementation, the first packet and the last packet in the first PDU set may not carry a latency measurement indication in the conventional technology, but carry only the first indication information.

It should be noted that the core network device may notify, by using any one of the foregoing implementations, the access network device to enable the function of measuring a transmission latency at the PDU set granularity, or may notify, in both the foregoing control plane and user plane manners, the access network device to enable the function of measuring the transmission latency at the PDU set granularity. This is not limited herein.

Step 402: The access network device sends second indication information to the terminal device.

Correspondingly, the terminal device receives the second indication information from the access network device.

The second indication information indicates to measure a transmission latency at the PDU set granularity. After the terminal device receives the second indication information, the terminal device enables a function of measuring the transmission latency at the PDU set granularity.

Optionally, the second indication information is carried in control plane signaling, or may be carried in a user plane data packet.

In a possible implementation, the access network device notifies, by using a control plane, the terminal device to enable latency measurement at the PDU set granularity. For example, the access network device sends control plane signaling to the terminal device, and the control plane signaling carries the second indication information. The access network device sends the second indication information by using the control plane signaling. After the terminal device receives the second indication information in the control plane signaling, the terminal device may not consider whether the data packet sent by the user plane of the access network device carries a latency measurement indication in the conventional technology, and the terminal device performs latency measurement only on the first packet and the last packet in the PDU set.

Optionally, the access network device further sends identification information of the first PDU set to the terminal device to indicate the terminal device to perform latency measurement at the PDU set granularity on the first PDU set. For example, the control plane signaling sent by the access network device to the terminal device includes the second indication information and the identification information of the first PDU set to indicate the terminal device to measure only the first packet and the last packet in the first PDU set, that is, to perform latency measurement at the PDU set granularity only on the first PDU set.

In another possible implementation, the access network device notifies, by using a user plane, the terminal device to enable latency measurement at the PDU set granularity. For example, if the access network device needs to indicate the terminal device to enable latency measurement at the PDU set granularity for the first PDU set, the access network device separately adds the second indication information to the first packet and the last packet (for example, a tail packet) in the first PDU set, and does not add the second indication information to another packet in the first PDU set. The terminal device triggers, based on the second indication information in the first packet and the last packet (for example, the tail packet) in the first PDU set, measurement on the first packet and the last packet in the first PDU set. Optionally, the second indication information may alternatively be carried in a GTP-U header of a packet. For example, a GTP-U header of the first packet and a GTP-U header of the last packet (for example, the tail packet) in the first PDU set each carry the second indication information. In this implementation, the first packet and the last packet (for example, the tail packet) in the first PDU set may not carry a latency measurement indication in the conventional technology, but carry only the second indication information.

It should be noted that in this step, the second indication information and the foregoing first indication information may be same indication information, or may be different indication information. This is not limited in this application.

It should be noted that the access network device may notify, by using any one of the foregoing implementations, the terminal device to enable the function of measuring a transmission latency at the PDU set granularity, or may notify, in both the foregoing control plane and user plane manners, the terminal device to enable the function of measuring the transmission latency at the PDU set granularity. This is not limited herein.

In addition, in a process of performing step 401 and step 402, the access network device receives the first PDU set (that is, a downlink first PDU set including a downlink packet) from the core network device, and transmits the downlink packet to the terminal device. In addition, the access network device further receives the first PDU set (that is, an uplink first PDU set including an uplink packet) from the terminal device, and transmits the uplink packet to the core network device. In this embodiment, in downlink transmission, the access network device can sense a first packet and a last packet in a downlink first PDU set. The access network device measures the first packet and the last packet in the downlink first PDU set, in other words, the access network device records a moment at which the first packet in the downlink first PDU set is sent to the terminal device and a moment at which the last packet in the downlink first PDU set is received from the core network device. In uplink transmission, the access network device can sense a first packet and a last packet in an uplink first PDU set. The access network device measures the first packet and the last packet in the uplink first PDU set, in other words, the access network device records a moment at which the last packet in the uplink first PDU set is received from the terminal device and a moment at which the first packet in the uplink first PDU set is sent to the core network device. For example, in air interface downlink transmission, the access network device records a moment (namely, the first time information described in step 201) at which a first protocol layer of the access network device receives the first packet in the first PDU set from an upper layer of the first protocol layer. In air interface uplink transmission, the access network device records a moment (namely, the fourth time information described in step 202) at which the first protocol layer of the access network device uploads the last packet in the first PDU set to the upper layer of the first protocol layer. In NG interface downlink transmission, the access network device records a moment (namely, the sixth time information described in step 202) at which the last packet in the first PDU set is received from the core network device. In NG interface uplink transmission, the access network device records a moment (namely, the seventh time information described in step 201) at which the access network device sends the first packet in the first PDU set.

In addition, the terminal device in this embodiment can also sense the first packet and the last packet in the first PDU set. The terminal device measures the first packet and the last packet in the first PDU set, in other words, the terminal device records a moment at which the first packet in the first PDU set is sent and a moment at which the last packet in the first PDU set is received. For example, in air interface downlink transmission, the terminal device records a moment (namely, the second time information described in step 202) at which a first protocol layer of the terminal device uploads the last packet in the first PDU set to an upper layer of the first protocol layer. In air interface uplink transmission, the terminal device records a moment (namely, the third time information described in step 201) at which the first protocol layer of the terminal device receives the first packet in the first PDU set from the upper layer of the first protocol layer.

After the terminal device measures the first packet and the last packet in the first PDU set, the terminal device feeds back a measurement result to the access network device by using control plane signaling. For details, refer to step 403.

Step 403: The terminal device sends latency measurement information of the first PDU set to the access network device.

Correspondingly, the access network device receives the latency measurement information of the first PDU set from the terminal device.

The latency measurement information of the first PDU set includes the second time information and/or the third time information and/or a transmission latency (for example, an air interface downlink latency) that is of the first PDU set, that is calculated by the terminal device, and that is between the terminal device and the access network device.

Optionally, the latency measurement information of the first PDU set further includes a sequence number (for example, a PDCP SN) of the first protocol layer. For example, the latency measurement information of the first PDU set includes the second time information and a PDCP SN of the last packet in the first PDU set. For another example, the latency measurement information of the first PDU set includes the third time information and a PDCP SN of the first packet in the first PDU set.

Optionally, the latency measurement information of the first PDU set further includes a sequence number of the first PDU set. For example, the latency measurement information of the first PDU set includes the transmission latency (for example, the air interface downlink latency) that is of the first PDU set, that is calculated by the terminal device, and that is between the terminal device and the access network device and the identification information of the first PDU set.

Optionally, the terminal device adds the latency measurement information of the first PDU set to an RRC message, and sends the RRC message to the access network device. The access network device obtains the third time information and/or the second time information from the latency measurement information of the first PDU set.

Step 404: The access network device determines the air interface downlink latency and the air interface uplink latency of the first PDU set.

For example, the access network device determines a difference between the moment indicated by the second time information and the moment indicated by the first time information as the air interface downlink latency of the first PDU set. The access network device determines a difference between the moment indicated by the fourth time information and the moment indicated by the third time information as the air interface uplink latency of the first PDU set.

For example, the latency measurement information of the first PDU set received by the access network device from the terminal device includes a downlink transmission latency of the first PDU set between the terminal device and the access network device, and the access network device directly uses the transmission latency as the air interface downlink latency of the first PDU set.

Step 405: The access network device sends the latency measurement information of the first PDU set to the core network device.

Correspondingly, the core network device receives the latency measurement information of the first PDU set from the access network device.

The latency measurement information of the first PDU set sent by the access network device to the core network device includes the sixth time information, the seventh time information, the air interface downlink latency of the first PDU set, and the air interface uplink latency of the first PDU set.

Optionally, the access network device may separately send the air interface downlink latency of the first PDU set and the air interface uplink latency of the first PDU set to the core network device by using another message. This is not limited herein.

Step 406: The core network device determines an NG interface downlink latency and an NG interface uplink latency of the first PDU set.

When the core network device sends a downlink packet in the first PDU set, the core network device can record a moment (namely, the fifth time information described in step 201) at which the core network device sends the first packet in the first PDU set. When the core network device receives an uplink packet in the first PDU set, the core network device can record a moment (namely, the eighth time information described in step 202) at which the core network device receives the last packet in the first PDU set.

In this step, the core network device determines a difference between the moment indicated by the sixth time information and the moment indicated by the fifth time information as the NG interface downlink latency of the first PDU set. The core network device determines a difference between the moment indicated by the eighth time information and the moment indicated by the seventh time information as the NG interface uplink latency of the first PDU set.

Step 407: The core network device determines an uplink latency and/or a downlink latency of the first PDU set between the terminal device and the core network device based on the air interface downlink latency, the air interface uplink latency, the NG interface downlink latency, and the NG interface uplink latency of the first PDU set.

In this embodiment, step 407 is similar to step 308. For details, refer to related descriptions in step 308. Details are not described herein again.

It should be noted that step 405 to step 407 are optional steps. For example, in some scenarios, only the access network device needs to determine the air interface downlink latency and the air interface uplink latency of the first PDU set, and the core network device does not need to determine the NG interface uplink and downlink latencies.

In an implementation, the access network device determines the air interface downlink latency of the first PDU set and the air interface uplink latency of the first PDU set, and sends the air interface downlink latency of the first PDU set, the air interface uplink latency of the first PDU set, and the identification information of the first PDU set to another entity (for example, a trace collection entity (trace collection entity, TCE)). Optionally, the access network device further sends an identifier of the terminal device to the another entity. The core network device determines the NG interface downlink and uplink latencies of the first PDU set, and sends the NG interface downlink and uplink latencies of the first PDU set and the identification information of the first PDU set to the another entity. Optionally, the access network device further sends an identifier of the terminal device to the another entity. The another entity obtains the uplink latency and/or the downlink latency of the first PDU set between the terminal device and the core network device based on the foregoing information sent by the access network device and the core network device.

In this embodiment, the access network device and the terminal device can sense which packet is a first packet and which packet is a last packet in a PDU set. In addition, after the core network device triggers the access network device and the terminal device to enable a PDU granularity-based latency measurement function, the access network device and the terminal device can measure a first packet and a last packet in only one PDU set. Further, the access network device determines the air interface uplink and downlink latencies of the first PDU set based on the latency measurement information of the first PDU set fed back by the terminal device by using the control plane signaling. Because only the first packet and the last packet are measured, control plane interaction feedback measurement results between the terminal device and the access network device are reduced. Because the terminal device can feed back the latency measurement information of the first PDU set to the access network device by using the control plane signaling, this helps the access network device determine the air interface uplink and downlink latencies of the first PDU set based on the latency measurement information of the first PDU set, and the core network device does not need to determine the air interface uplink and downlink latencies of the first PDU set, helps reduce calculation overheads of the core network device, and also helps the core network device quickly obtain the air interface uplink and downlink latencies of the first PDU set.

FIG. 5 shows a main procedure of another embodiment of a latency measurement method according to this application. In this embodiment, a terminal device exchanges latency measurement information of a first PDU set with an access network device by using a user plane. The terminal device determines an air interface downlink latency of the first PDU set and the access network device determines an air interface uplink latency of the first PDU set. Then the air interface downlink latency and the air interface uplink latency of the first PDU set are fed back to a core network device. Specifically, the core network device, the access network device, and the terminal device mainly perform the following steps.

Step 501: The core network device sends first indication information to the access network device.

Correspondingly, the access network device receives the first indication information from the core network device.

Step 502: The access network device sends second indication information to the terminal device.

Correspondingly, the terminal device receives the second indication information from the access network device.

In this embodiment, step 501 and step 502 are similar to step 401 and step 402. Refer to related descriptions in step 401 and step 402. Details are not described herein again.

In addition, in a process of performing step 501 and step 502, the access network device receives a downlink packet in the first PDU set from the core network device, and transmits the downlink packet to the terminal device. In addition, the access network device further receives an uplink packet in the first PDU set from the terminal device, and transmits the uplink packet to the core network device. In this embodiment, the access network device and the terminal device not only can sense a first packet and a last packet in the first PDU set, but also feed back latency measurement information of the first packet to a receive end by using a user plane. For example, a transmit end can add, to at least one to-be-sent packet in the first PDU set, a moment at which the transmit end sends the first packet in the first PDU set. For example, the first packet in the first PDU set carries a timestamp or the last packet carries a timestamp for sending the first packet. It should be understood that in air interface downlink transmission, the transmit end is the access network device and the receive end is the terminal device; and in air interface uplink transmission, the transmit end is the terminal device and the receive end is the access network device.

The following uses the transmit end and the receive end as examples for description.

In a possible implementation, the first packet in the first PDU set sent by the transmit end carries the timestamp. For example, the first packet in the first PDU set sent by the transmit end to the receive end includes a timestamp configured by the transmit end, and the timestamp indicates a moment at which a first protocol layer at the transmit end receives the first packet from an upper layer of the first protocol layer. For example, in air interface downlink transmission, the access network device configures a first timestamp in the first packet in the first PDU set to be sent to the terminal device. The first timestamp indicates the moment at which a first protocol layer of the access network device receives the first packet from an upper layer of the first protocol layer, that is, a specific implementation of the first time information described above is the first timestamp. For another example, in air interface uplink transmission, the terminal device configures a second timestamp in the first packet in the first PDU set to be sent to the access network device. The second timestamp indicates a moment at which a first protocol layer of the terminal device receives the first packet from an upper layer of the first protocol layer, that is, a specific implementation of the third time information described above is the second timestamp.

In an implementation 1, the first packet in the first PDU set sent by the transmit end includes the timestamp configured by the transmit end and identification information of the first PDU set, the last packet (for example, a tail packet) in the first PDU set includes the identification information of the first PDU set, and another packet in the first PDU set does not include the identification information of the first PDU set. Optionally, the another packet in the first PDU set does not include the timestamp configured by the transmit end either.

In this implementation 1, the receive end determines the first packet in the first PDU set based on the timestamp and the identification information of the first PDU set, and the receive end determines the last packet in the first PDU set based on the identification information of the first PDU set.

For example, if a packet #1 received by the receive end has both the identification information of the first PDU set and a timestamp #1, the receive end determines the packet #1 as the first packet in the first PDU set, and determines the moment at which the transmit end sends the first packet in the first PDU set as a moment indicated by the timestamp #1. If a packet #2 received by the receive end has only the identification information of the first PDU set but does not have a timestamp, the receive end determines the packet #2 as the last packet in the first PDU set, and the receive end records the moment at which the last packet in the first PDU set is received.

In this implementation 1, by determining whether the identification information of the first PDU set is carried, the receive end can identify whether a received packet is the first packet or the last packet. Further, by determining whether the packet carries a timestamp, the receive end can identify whether the packet is the first packet. Only the first packet and the last packet in the first PDU set carry newly added information (that is, the identification information of the first PDU set and/or the timestamp), another packet in the first PDU set may not be processed, helping reduce processing overheads in a packet sending process of the transmit end.

In another implementation 2, each packet in the first PDU set includes the identification information of the first PDU set. The first packet (that is, an initial packet) in the first PDU set further includes the timestamp configured by the transmit end and initial packet indication information, and the initial packet indication information indicates that a packet carrying the initial packet indication information is the initial packet in the first PDU set. The last packet (that is, a tail packet) in the first PDU set further includes tail packet indication information, and the tail packet indication information indicates that a packet carrying the tail packet indication information is the tail packet in the first PDU set. For explanations of the initial packet and the tail packet, refer to related descriptions in step 201 and step 202. Details are not described herein again.

In this implementation 2, the receive end determines the first packet (that is, the initial packet) in the first PDU set based on the identification information of the first PDU set and the initial packet indication information, and the receive end determines the last packet in the first PDU set (that is, the tail packet) based on the identification information of the first PDU set and the tail packet indication information.

For example, if a packet #3 received by the receive end carries the initial packet indication information and the identification information of the first PDU set, the receive end determines the packet #1 as the first packet (that is, the initial packet) in the first PDU set, and determines the moment at which the transmit end sends the first packet in the first PDU set as a moment indicated by a timestamp #2 carried in the packet #3. If a packet #4 received by the receive end carries tail packet indication information and the identification information of the first PDU set, the receive end determines the packet #4 as the last packet (that is, the tail packet) in the first PDU set, and the receive end records the moment at which the last packet in the first PDU set is received.

In this implementation 2, the receive end identifies, by using an initial packet indication and a tail packet indication, whether a received packet is the first packet or the last packet, further enabling to obtain the moment at which the transmit end sends the first packet. This helps the receive end accurately determine the first packet and the last packet in the first PDU set, and helps improve efficiency of measuring the first packet and the last packet by the receive end.

Optionally, each packet in the first PDU set further includes a sequence number of each packet in the first PDU set. The sequence number is used to reflect a sequence in which an application layer generates a packet. The sequence number may be added at the application layer of the transmit end, or may be added at another layer of the transmit end. This is not limited herein. In this case, the receive end determines the last packet in the first PDU set based on the identification information of the first PDU set, the tail packet indication information, and a sequence number in the first PDU set. For example, if a packet carrying the tail packet indication information is not a packet finally arriving at the receive end in the first PDU set, that is, if the packet carrying the tail packet indication information is not the last packet, the receive end continues to receive a packet carrying the identification information of the first PDU set, until all packets in the first PDU set are correctly received.

In another implementation 3, each packet in the first PDU set includes the identification information of the first PDU set and the timestamp configured by the transmit end, and the timestamp in each packet indicates the moment at which the first protocol layer at the transmit end receives the packet from the upper layer of the first protocol layer. The first packet in the first PDU set further includes initial packet indication information, and the initial packet indication information indicates that a packet carrying the initial packet indication information is the initial packet in the first PDU set. The last packet in the first PDU set further includes tail packet indication information, and the tail packet indication information indicates that a packet carrying the tail packet indication information is the tail packet in the first PDU set. For explanations of the initial packet and the tail packet, refer to related descriptions in step 201 and step 202. Details are not described herein again.

In this implementation 3, the receive end determines the first packet (that is, the initial packet) in the first PDU set based on the identification information of the first PDU set and the initial packet indication information, and the receive end determines the last packet in the first PDU set (that is, the tail packet) based on the identification information of the first PDU set and the tail packet indication information. Compared with the implementation 2, the implementation 3 differs in that each packet in the first PDU set in the implementation 3 includes a timestamp that is configured by the transmit end and that is for sending a packet.

Optionally, each packet in the first PDU set further includes a sequence number of each packet in the first PDU set.

In another implementation, the last packet (for example, the tail packet) in the first PDU set sent by the transmit end carries the timestamp of the first packet in the first PDU set, and the timestamp indicates the moment at which the first protocol layer at the transmit end receives the first packet from the upper layer of the first protocol layer. Optionally, another packet in the first PDU set does not carry a timestamp. It may also be understood as that packets in the first PDU set are sequentially sent, and the transmit end includes, in the tail packet in the first PDU set, a timestamp at which the transmit end sends the initial packet. Optionally, the last packet (for example, the tail packet) in the first PDU set further includes the identification information of the first PDU set.

For example, if a packet #5 received by the receive end carries a timestamp #3, the receive end determines the packet #5 is the last packet in the first PDU set, the receive end determines that a moment at which the transmit end sends the first packet in the first PDU set is the timestamp #3, and the receive end records a moment at which the last packet in the first PDU set is received.

In this implementation, only the last packet in the first PDU set needs to carry the timestamp for sending the first packet, so that the receive end can obtain time information of the first packet and time information of the last packet at the same time when receiving the last packet in the first PDU set. Therefore, the transmit end may not need to process another packet in the first PDU set, helping reduce processing overheads in a packet sending process of the transmit end.

It should be noted that in actual application, the terminal device and the access network device may exchange latency measurement information of the first PDU set (that is, latency measurement information of the first packet in the first PDU set and/or latency measurement information of the last packet in the first PDU set) in any one of the foregoing manners by using a PDU of the user plane. For ease of understanding, the following uses the implementation 1 described above as an example for description with reference to a specific example.

For example, the transmit end is the access network device and the receive end is the terminal device (that is, the air interface downlink transmission). If a packet #1 received by the terminal device has both the identification information of the first PDU set and a timestamp #1, the terminal device determines the packet #1 as the first packet in the first PDU set, and determines the moment at which the access network device sends the first packet in the first PDU set as a moment (namely, the first time information described in step 201) indicated by the timestamp #1. If a packet #2 received by the terminal device has only the identification information of the first PDU set but does not have a timestamp, the terminal device determines the packet #2 as the last packet in the first PDU set, and the terminal device records the moment at which the last packet in the first PDU set is received (namely, the second time information described in step 202).

For example, the transmit end is the terminal device and the receive end is the access network device (that is, the air interface uplink transmission). If a packet #3 received by the access network device has both the identification information of the first PDU set and a timestamp #2, the access network device determines the packet #3 as the first packet in the first PDU set, and determines the moment at which the access network device sends the first packet in the first PDU set as a moment (namely, the third time information described in step 201) indicated by the timestamp #2. If a packet #4 received by the access network device has only the identification information of the first PDU set but does not have a timestamp, the access network device determines the packet #4 as the last packet in the first PDU set, and the access network device records the moment at which the last packet in the first PDU set is received (namely, the fourth time information described in step 202).

Step 503: The terminal device determines the air interface downlink latency of the first PDU set.

For example, in air interface downlink transmission, the terminal device obtains, from the first packet or the last packet in the first PDU set, a first timestamp (namely, the first time information) corresponding to the first packet in the first PDU set of the access network device, and the terminal device records the moment (namely, the second time information) at which the last packet in the first PDU set is received. Then, the terminal device determines a difference between the moment indicated by the second time information and the moment indicated by the first time information as the air interface downlink latency of the first PDU set.

Step 504: The terminal device sends the air interface downlink latency of the first PDU set to the access network device.

Correspondingly, the access network device receives an air interface downlink latency of the first PDU set from the terminal device.

Optionally, the terminal device may send the air interface downlink latency of the first PDU set to the access network device by using a control plane. For example, the terminal device sends the identification information of the first PDU set and the air interface downlink latency of the first PDU set to the access network device.

Step 505: The access network device determines the air interface uplink latency of the first PDU set.

For example, in air interface uplink transmission, the access network device obtains, from the first packet or the last packet in the first PDU set, a first timestamp (namely, the third time information) corresponding to the first packet in the first PDU set of the terminal device, and the access network device records the moment (namely, the fourth time information) at which the last packet in the first PDU set is received. Then, the access network device determines a difference between the moment indicated by the fourth time information and the moment indicated by the third time information as the air interface uplink latency of the first PDU set.

It should be noted that step 505 and step 504 may be performed at the same time. This is not limited in this application.

Step 506: The access network device sends the latency measurement information of the first PDU set to the core network device.

Correspondingly, the core network device receives the latency measurement information of the first PDU set from the access network device.

The latency measurement information of the first PDU set includes sixth time information, seventh time information, the air interface downlink latency of the first PDU set, and the air interface uplink latency of the first PDU set.

Optionally, the access network device may send the sixth time information, the seventh time information, the air interface downlink latency of the first PDU set, and the air interface uplink latency of the first PDU set at the same time or at different times, that is, add the foregoing information to a plurality of messages or data plane data packets.

Step 507: The core network device determines an NG interface downlink latency and an NG interface uplink latency of the first PDU set.

Step 508: The core network device determines an uplink latency and/or a downlink latency of the first PDU set between the terminal device and the core network device based on the air interface downlink latency, the air interface uplink latency, the NG interface downlink latency, and the NG interface uplink latency of the first PDU set.

In this embodiment, step 506 to step 508 are similar to step 405 to step 407 in the foregoing embodiment corresponding to FIG. 4. For details, refer to related descriptions in step 405 to step 407. Details are not described herein again.

In this embodiment, the access network device and the terminal device can sense which packet is a first packet and which packet is a last packet in a PDU set. In addition, after the core network device triggers the access network device and the terminal device to enable a PDU granularity-based latency measurement function, the access network device and the terminal device can measure a first packet and a last packet in only one PDU set. Further, the access network device and the terminal device exchange the latency measurement information of the first PDU set by using the user plane, and further separately determine the air interface uplink and downlink latencies of the first PDU set. Because the terminal device and the access network device can separately determine the air interface downlink latency of the first PDU set and the air interface uplink latency of the first PDU set, and the core network device does not need to determine the air interface uplink and downlink latencies of the first PDU set, this helps reduce calculation overheads of the core network device, and also helps the core network device quickly obtain the air interface uplink and downlink latencies of the first PDU set.

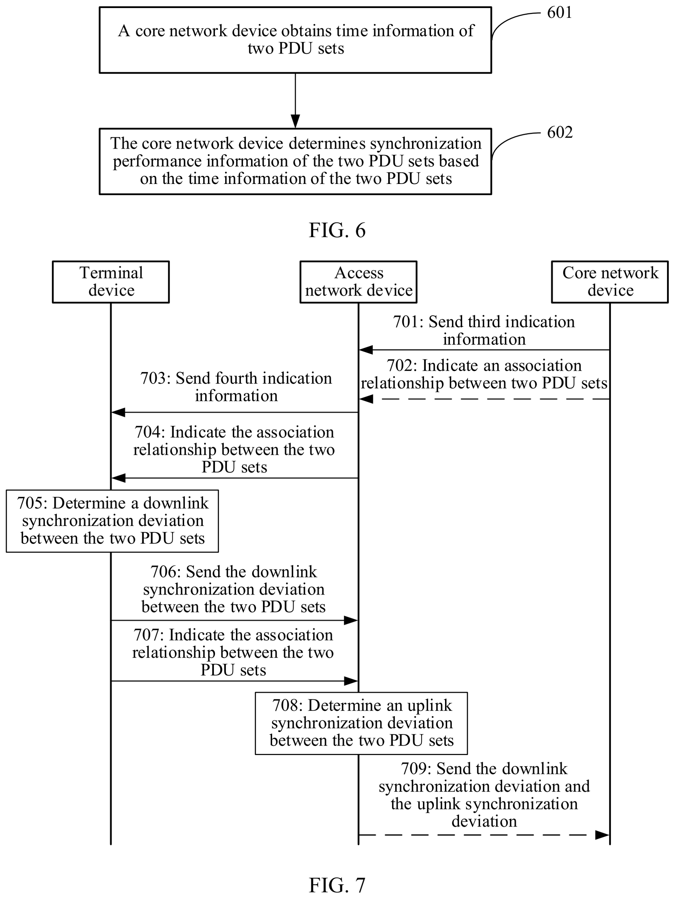

In addition, in another embodiment of the latency measurement method provided in this application, an implementation of measuring synchronization performance information of two PDU sets is further provided. The following describes a process of measuring synchronization performance information of two PDU sets with reference to FIG. 6 and FIG. 7.

FIG. 6 shows a main procedure of another embodiment of a latency measurement method according to this application. In this embodiment, a core network device separately collects latency measurement information at a packet granularity of two PDU sets, and further determines synchronization performance information of the two PDU sets based on the latency measurement information at the packet granularity of the two PDU sets. Specifically, the core network device, an access network device, and a terminal device mainly perform the following steps.

Step 601: The core network device obtains time information of the two PDU sets.

The two PDU sets are determined by the core network device from at least two different PDU sets. The two PDU sets are two PDU sets that are determined by the core network device and for which synchronization performance information needs to be calculated. Optionally, the two PDU sets have an association relationship. For example, there is a synchronization performance requirement for transmission of the two PDU sets. For example, a deviation between moments at which the two PDU sets arrive at a receive end is less than a preset value.

For example, an XR+multi-mode touch sensation service is used as an example. The service requires that synchronization performance between a plurality of media streams (for example, a video, audio, and a touch sensation) meet a specific requirement. A media stream for transmitting video information is a PDU set, a media stream for transmitting audio information is another PDU set, and a media stream for transmitting touch sensation information is another PDU set. A synchronization performance requirement for the audio and the touch sensation is: The audio reaches the receive end within 50 ms at most after the touch sensation, and the touch sensation reaches the receive end within 25 ms at most after the audio. A synchronization performance requirement for the video and the touch sensation is: The video reaches the receive end within 15 ms at most after the touch sensation, and the touch sensation reaches the receive end within 50 ms after the video.

In addition, the two PDU sets may be a set of PDU packets corresponding to two different QoS flows (QoS flow) of a same PDU session (PDU session), or may be two sets of PDU packets corresponding to different PDU sessions.

In addition, time information of a PDU set is time information or latency information obtained by measuring an association packet in the PDU set, and the time information of the PDU set is used to determine a moment at which the association packet in the PDU set arrives at the receive end. For example, in downlink transmission, the time information of the PDU set is used to determine a moment at which the association packet in the PDU set sent by the core network device arrives at the terminal device. In uplink transmission, the time information of the PDU set is used to determine a moment at which an uplink association packet in the PDU set sent by the terminal device arrives at the core network device.

The association packet is a PDU packet used to measure the synchronization performance in the PDU set. Optionally, the association packet carries association packet indication information configured by a transmit end to indicate the receive end to learn that a packet carrying the association packet indication information is the association packet. In downlink transmission, the association packet is specified by the core network device from a downlink PDU set. In uplink transmission, the association packet is specified by the terminal device from an uplink PDU set. Because the synchronization performance of the two PDU sets needs to be measured, the core network device or the terminal device separately determines, from the two PDU sets, an association packet corresponding to each PDU set. For example, if synchronization performance between the first PDU set and a second PDU set needs to be measured, the core network device or the terminal device determines at least one association packet from the first PDU set, and determines at least one association packet from the second PDU set.

Optionally, an association packet in a PDU set includes a last packet in the PDU set (for example, a tail packet in the PDU set). For example, in downlink transmission, the core network device determines the last packet (for example, the tail packet) in the PDU set as the association packet. For example, the synchronization performance between the first PDU set and the second PDU set is measured. The core network device determines a last packet (for example, a tail packet) in a downlink first PDU set as an association packet in the first PDU set (also referred to as a downlink association packet in the first PDU set), and determines a last packet (for example, a tail packet) in a downlink second PDU set as an association packet in the second PDU set (also referred to as a downlink association packet in the second PDU set). For example, in uplink transmission, the terminal device determines the last packet (for example, the tail packet) in the PDU set as the association packet. For example, the synchronization performance between the first PDU set and the second PDU set is measured. The terminal device determines a last packet (for example, a tail packet) in an uplink first PDU set as the association packet in the first PDU set (also referred to as an uplink association packet in the first PDU set), and determines a last packet (for example, a tail packet) in an uplink second PDU set as the association packet in the second PDU set (also referred to as an uplink association packet in the second PDU set).

Specifically, before the core network device obtains the time information of the two PDU sets, the core network device and the access network device measure NG interface synchronization performance of association packets, and the access network device and the terminal device measure air interface synchronization performance of association packets.

In a possible implementation, the terminal device, the access network device, and the core network device perform latency measurement at a packet granularity on each packet in the two PDU sets, and the access network device and the terminal device feed back latency measurement information of each packet to the core network device. The core network device obtains latency measurement information of only the association packets in the two PDU sets, to determine the time information of the two PDU sets. For a latency measurement process at the packet granularity, refer to the foregoing embodiment corresponding to FIG. 3. Details are not described herein again.

In another possible implementation, the terminal device, the access network device, and the core network device perform latency measurement at the packet granularity only on the association packets in the two PDU sets. The access network device and the terminal device feed back latency measurement information of association packets only in two PDU sets to the core network device, so that the core network device determines time information of the two PDU sets based on the latency measurement information of the association packets in the two PDU sets.

For example, the core network device notifies, by using the control plane and/or the user plane, the access network device to measure association packet only in two PDU sets. Then, the access network device notifies, by using the control plane and/or the user plane, the terminal device to measure the association packets only in the two PDU sets.

For example, on the control plane, the core network device notifies, by using control plane signaling (for example, a latency measurement message), the access network device to measure the association packets only in the two PDU sets, and the access network device notifies, by using a control plane signaling latency measurement indication, the terminal device to measure the association packets only in the two PDU sets. The terminal device and the access network device may feed back the latency measurement information (for example, a timestamp at which the terminal device sends an association packet, a timestamp at which the access network device sends an association packet, a downlink air interface latency, or an uplink air interface latency) of the association packets in the two PDU sets to the core network device by using the control plane signaling. In user plane downlink transmission, the core network device adds indication information (for example, the association packet indication information described above) to the association packets in the two PDU sets to indicate the access network device and the terminal device to measure the association packets. In user plane uplink transmission, the terminal device adds the latency measurement information (for example, a timestamp at which the terminal device sends the association packet or the downlink air interface latency) to the association packets in the two PDU sets, and even the terminal device needs to add the latency measurement information only to the association packets in the two PDU sets, and does not need to add the latency measurement information to another packet.

The following further describes the time information of the two PDU sets in downlink transmission and uplink transmission.

In an implementation, in downlink transmission, time information of a PDU set includes latency measurement information of an association packet in the PDU set. An example in which the two PDU sets include a first PDU set and a second PDU set is used. Time information of the first PDU set includes latency measurement information of the association packet in the first PDU set. Time information of the second PDU set includes latency measurement information of the association packet in the second PDU set. The latency measurement information of the association packet in the first PDU set is used to determine a latency required for transmitting the association packet in the first PDU set from the core network device to the terminal device. The latency measurement information of the association packet in the second PDU set is used to determine a latency required for transmitting the association packet in the second PDU set from the core network device to the terminal device.

Further, latency measurement information of an association packet includes an air interface downlink latency and an NG interface downlink latency. An example in which the two PDU sets include a first PDU set and a second PDU set is used. Latency measurement information of an association packet in the first PDU set includes an NG interface downlink latency of the association packet in the first PDU set and an air interface downlink latency of the association packet in the first PDU set. Latency measurement information of the association packet in the second PDU set includes an NG interface downlink latency of the association packet in the second PDU set and an air interface downlink latency of the association packet in the second PDU set. It should be noted that the air interface downlink latency and the NG interface downlink latency may be determined by the access network device and fed back to the core network device, or may be determined by the core network device based on the latency measurement information fed back by the access network device. This is not limited herein.

In addition, because the core network device can record, in a process of sending a PDU set, a moment at which an association packet is sent, the core network device can determine, based on the moment at which the association packet in the PDU set is sent, an NG interface downlink latency of the association packet, and an air interface downlink latency of the association packet, a moment at which the association packet arrives at the terminal device.

For example, the moment at which the association packet in the first PDU set arrives at the terminal device = the NG interface downlink latency of the association packet in the first PDU set + the air interface downlink latency of the association packet in the first PDU set + the moment at which the core network device sends the association packet in the first PDU set.

For example, the moment at which the association packet in the second PDU set arrives at the terminal device = the NG interface downlink latency of the association packet in the second PDU set + the air interface downlink latency of the association packet in the second PDU set + the moment at which the core network device sends the association packet in the second PDU set.

In another implementation, in uplink transmission, time information of a PDU set includes a moment at which the core network device serves as the receive end to receive an association packet in the PDU set. An example in which the two PDU sets include the first PDU set and the second PDU set is used. The time information of the first PDU set includes the moment at which the core network device receives the association packet in the first PDU set. The time information of the second PDU set includes the moment at which the core network device receives the association packet in the second PDU set.

For example, the core network device receives the first PDU set from the access network device and records the moment at which the association packet in the first PDU set is received, and receives the second PDU set from the access network device and records the moment at which the association packet in the second PDU set is received.

Step 602: The core network device determines synchronization performance information of the two PDU sets based on the time information of the two PDU sets.

The synchronization performance information indicates a time deviation between a time at which an association packet in one PDU set arrives at the receive end and a time at which an association packet in another PDU set arrives at the receive end. The synchronization performance information includes a downlink synchronization deviation and/or an uplink synchronization deviation.

In an implementation, in downlink transmission, the core network device determines a downlink synchronization deviation between the two PDU sets based on the time information of the two PDU sets. For example, the two PDU sets includes a first PDU set and a second PDU set. The core network device determines the downlink synchronization deviation based on a difference between a moment at which an association packet in the first PDU set arrives at the terminal device and a moment at which an association packet in the second PDU set arrives at the terminal device.

In another implementation, in uplink transmission, the core network device determines an uplink synchronization deviation between the two PDU sets based on the time information of the two PDU sets. For example, the two PDU sets include a first PDU set and a second PDU set. The core network device determines the uplink synchronization deviation based on a difference between a moment at which an association packet in the first PDU set is received and a moment at which an association packet in the second PDU set is received.

Optionally, after the core network device determines the downlink synchronization deviation and/or the uplink synchronization deviation, the core network device sends the downlink synchronization deviation and/or the uplink synchronization deviation to the access network device.

In this embodiment, the core network device can separately determine moments at which association packets transmitted in a downlink in the two PDU sets arrive at the terminal device, to determine the downlink synchronization deviation. In addition, the core network device separately determines moments at which association packets transmitted in an uplink in the two PDU sets arrive at the core network device, to determine the uplink synchronization deviation. Therefore, this helps the core network device evaluate, based on the downlink synchronization deviation and the uplink synchronization deviation, transmission performance of services corresponding to the two PDU sets, further helping optimize a network.

FIG. 7 shows a main procedure of another embodiment of a latency measurement method according to this application. In this embodiment, a core network device indicates an access network device and a terminal device to perform synchronization performance measurement on two PDU sets, and the terminal device and the access network device separately determine air interface synchronization performance. Specifically, the core network device, the access network device, and the terminal device mainly perform the following steps.

Step 701: The core network device sends third indication information to the access network device.

Correspondingly, the access network device receives the third indication information from the core network device.

The third indication information indicates the access network device to trigger synchronization performance measurement of two PDU sets. For example, after the access network device receives the third indication information from the core network device, the access network device a function of measuring synchronization performance of a PDU set.

In a possible implementation, the core network device adds the third indication information to control plane signaling, and sends the control plane signaling to the access network device. For example, the control plane signaling may be a latency measurement request message, or may be another message. This is not limited herein.

Optionally, a user plane of the core network device adds association packet indication information to association packets in the two PDU sets to indicate the access network device to measure the association packets in the two PDU sets.

For explanations of the association packet and the synchronization performance, refer to related descriptions in step 601 and step 602. Details are not described herein again.

Step 702: The core network device notifies the access network device of an association relationship between the two PDU sets.

Step 702 is an optional step. If the core network device does not perform step 702, it indicates that the core network device only indicates the access network device to trigger synchronization performance measurement on two PDU sets, and does not specify which two PDU sets are to be measured. The access network device may perform synchronization performance measurement on every two PDU sets in a plurality of PDU sets that are being transmitted, or may determine to perform synchronization performance measurement on two PDU sets. If the core network device performs step 702, it indicates that the core network device specifies two PDUs whose synchronization performance needs to be measured.

In a possible implementation, the core network device notifies the access network device of an association relationship between the two PDU set by using the user plane. For example, the core network device adds, to an association packet in one PDU set, association information indicating another PDU set, and the association information indicates that one PDU set has an association relationship with another PDU set. For example, the two PDU sets are a first PDU set and a second PDU set. The core network device adds first association information to a to-be-sent association packet in the first PDU set, and the first association information indicates that a PDU set having an association relationship with the first PDU set is the second PDU set. For another example, the two PDU sets are a first PDU set and a second PDU set. The core network device adds second association information to a to-be-sent association packet in the second PDU set, and the second association information indicates that a PDU set having an association relationship with the second PDU set is the first PDU set.

Optionally, the first association information is identification information of the second PDU set, or the first association information is a sequence number of the association packet in the second PDU set. Optionally, the second association information is identification information of the first PDU set, or the second association information is a sequence number of the association packet in the first PDU set. For example, identification information of a PDU set is a QoS flow SN or an SN of the PDU set. For example, a sequence number of an association packet is an SN in a GTP-U of the association packet.

Optionally, the association packet in the first PDU set includes a last packet in the first PDU set, and the association packet in the second PDU set includes a last packet in the second PDU set.

It should be noted that the core network device may add, to the association packets in the two PDU sets, association information indicating another PDU set, or may add, to an association packet in only one of the two PDU sets, association information indicating another PDU set. This is not limited herein.

In another possible implementation, the core network device notifies the access network device of an association relationship between the two PDU set by using a control plane. For example, the core network device sends the identification information of the first PDU set and the identification information of the second PDU set to the access network device to indicate the access network device to measure synchronization performance between the first PDU set and the second PDU set, in other words, the first PDU set has an association relationship with the second PDU set. For example, the core network device adds the identification information of the first PDU set and the identification information of the second PDU set to the control plane signaling carrying the third indication information. In this example, step 702 and step 701 are performed at the same time.

In actual application, the core network device may notify the access network device of the association relationship between the two PDU sets in any one of the foregoing implementations. This is not limited in this application.

It should be noted that after the access network device enables the function of measuring the synchronization performance of the PDU set and determines two to-be-measured PDU sets, the access network device measures an association packet in the PDU set to obtain latency measurement information. The latency measurement information is used to determine the synchronization performance information of the two PDU sets. The synchronization performance information indicates a time deviation between a time at which an association packet in one PDU set arrives at the receive end and a time at which an association packet in another PDU set arrives at the receive end. The latency measurement information measured by the access network device is used to determine an uplink synchronization deviation. For specific content of the latency measurement information obtained by the access network device and a specific implementation of determining the uplink synchronization deviation by the access network device, refer to step 708 below. Details are not described herein again.

Step 703: The access network device sends fourth indication information to the terminal device.

Correspondingly, the terminal device receives the fourth indication information from the access network device.

The fourth indication information indicates the terminal device to trigger synchronization performance measurement of two PDU sets. For example, after the terminal device receives the fourth indication information from the access network device, the terminal device enables the function of measuring the synchronization performance of the PDU set.

In a possible implementation, the core network device adds the fourth indication information to control plane signaling, and sends the control plane signaling to the terminal device. For example, the control plane signaling may be a latency measurement request message, or may be another message. This is not limited herein.

Step 704: The access network device notifies the terminal device of the association relationship between the two PDU sets.

In a possible implementation, the access network device notifies the terminal device of the association relationship between the two PDU sets by using the user plane. For example, the access network device adds, to an association packet in one PDU set, association information indicating another PDU set, and the association information indicates that one PDU set has an association relationship with another PDU set. For example, the two PDU sets are a first PDU set and a second PDU set. The access network device adds first association information to a to-be-sent association packet in the first PDU set, and the first association information indicates that a PDU set having an association relationship with the first PDU set is the second PDU set. For another example, the two PDU sets are a first PDU set and a second PDU set. The access network device adds second association information to a to-be-sent association packet in the second PDU set, and the second association information indicates that a PDU set having an association relationship with the second PDU set is the first PDU set.

Optionally, the first association information is identification information of the second PDU set, or the first association information is a sequence number of the association packet in the second PDU set. Optionally, the second association information is identification information of the first PDU set, or the second association information is a sequence number of the association packet in the first PDU set. Optionally, the association packet in the first PDU set includes a last packet in the first PDU set, and the association packet in the second PDU set includes a last packet in the second PDU set.

It should be noted that the access network device may add, to the association packets in the two PDU sets, association information indicating another PDU set, or may add, to an association packet in only one of the two PDU sets, association information indicating another PDU set. This is not limited herein.

In another possible implementation, the access network device notifies the terminal device of the association relationship between the two PDU sets by using the control plane. For example, the access network device sends the identification information of the first PDU set and the identification information of the second PDU set to the terminal device to indicate the terminal device to measure synchronization performance between the first PDU set and the second PDU set, in other words, the first PDU set has an association relationship with the second PDU set. For example, the access network device adds the identification information of the first PDU set and the identification information of the second PDU set to the control plane signaling carrying the fourth indication information. In this example, step 703 and step 704 are performed at the same time.

In actual application, the access network device may notify the terminal device of the association relationship between the two PDU sets in any one of the foregoing implementations. This is not limited in this application.

In addition, it should be further noted that the two to-be-measured PDU sets are the first PDU set and the second PDU set, and may be determined by the access network device, in other words, the core network device does not perform step 702; or may be notified by the core network device to the access network device, in other words, the core network device performs step 702. This is not limited herein.

In addition, it should be noted further that after the terminal device enables the function of measuring the synchronization performance of the PDU set and determines two to-be-measured PDU sets, the terminal device measures an association packet in the PDU set to obtain latency measurement information. The latency measurement information measured by the terminal device is used to determine a downlink synchronization deviation. For specific content of the latency measurement information obtained by the terminal device and a specific implementation of determining the downlink synchronization deviation by the terminal device, refer to step 705 below. Details are not described herein again.

Step 705: The terminal device determines a downlink synchronization deviation between the two PDU sets.

Specifically, the terminal device measures the association packets in the two PDU sets to obtain latency measurement information of the two PDU sets. Then, the terminal device determines the downlink synchronization deviation between the two PDU sets based on the latency measurement information of the two PDU sets. The latency measurement information of the two PDU sets includes a moment at which the terminal device receives the association packet in the first PDU set and a moment at which the terminal device receives the association packet in the second PDU set.

In a possible implementation, the latency measurement information of the two PDU sets that is measured by the terminal device includes eleventh time information and twelfth time information. The eleventh time information indicates a moment at which a first protocol layer of the terminal device uploads the association packet in the first PDU set to an upper layer of the first protocol layer. The twelfth time information indicates a moment at which the first protocol layer of the terminal device uploads the association packet in the second PDU set to the upper layer of the first protocol layer. In this example, the terminal device determines a difference between the eleventh time information and the twelfth time information as the downlink synchronization deviation.

Step 706: The terminal device sends the downlink synchronization deviation between the two PDU sets to the access network device.

Correspondingly, the access network device receives the downlink synchronization deviation between the two PDU sets from the terminal device.

Optionally, a message carrying the downlink synchronization deviation between the two PDU sets further includes identification information of the two PDU sets. For example, if the downlink synchronization deviation is the downlink synchronization deviation between the first PDU set and the second PDU set, the message may carry the identification information of the first PDU set and the identification information of the second PDU set. For example, identification information of a PDU set is a QoS flow SN or an SN of the PDU set.

Optionally, a message carrying the downlink synchronization deviation between the two PDU sets further includes sequence numbers of the association packets in the two PDU sets. For example, if the downlink synchronization deviation is the downlink synchronization deviation between the first PDU set and the second PDU set, the message may carry a sequence number of the association packet in the first PDU set and a sequence number of the association packet in the second PDU set. For example, the message may carry an SN in a GTP-U of the association packet in the first PDU set and an SN in a GTP-U of the association packet in the second PDU set.

Step 707: The terminal device notifies the access network device of the association relationship between the two PDU sets.

In a possible implementation, the terminal device notifies the access network device of the association relationship between the two PDU set by using the user plane. For example, the terminal device adds, to a to-be-sent association packet in one PDU set, association information indicating another PDU set, and the association information indicates that one PDU set has an association relationship with another PDU set. For example, the two PDU sets are a first PDU set and a second PDU set. The terminal device adds first association information to a to-be-sent association packet in the first PDU set, and the first association information indicates that a PDU set having an association relationship with the first PDU set is the second PDU set. For another example, the two PDU sets are a first PDU set and a second PDU set. The terminal device adds second association information to a to-be-sent association packet in the second PDU set, and the second association information indicates that a PDU set having an association relationship with the second PDU set is the first PDU set.

Optionally, the first association information is identification information of the second PDU set, or the first association information is a sequence number of the association packet in the second PDU set. Optionally, the second association information is identification information of the first PDU set, or the second association information is a sequence number of the association packet in the first PDU set. Optionally, the association packet in the first PDU set includes a last packet in the first PDU set, and the association packet in the second PDU set includes a last packet in the second PDU set.

It should be noted that the terminal device may add, to the association packets in the two PDU sets, association information indicating another PDU set, or may add, to an association packet in only one of the two PDU sets, association information indicating another PDU set. This is not limited herein.

In another possible implementation, the terminal device notifies the access network device of the association relationship between the two PDU set by using the control plane. For example, the terminal device sends the identification information of the first PDU set and the identification information of the second PDU set to the access network device to indicate the access network device to measure synchronization performance between the first PDU set and the second PDU set in uplink transmission, in other words, the first PDU set has an association relationship with the second PDU set.

In actual application, the terminal device may notify the access network device of the association relationship between the two PDU sets in any one of the foregoing implementations. This is not limited in this application.

Step 708: The access network device determines the uplink synchronization deviation between the two PDU sets.

Specifically, the access network device measures the association packets in the two PDU sets based on the association information carried in the association packet of the terminal device in the PDU set, to obtain the latency measurement information of the two PDU sets. Then, the access network device determines the uplink synchronization deviation between the two PDU sets based on the latency measurement information of the two PDU sets. The latency measurement information of the two PDU sets includes a moment at which the access network device receives the association packet in the first PDU set and a moment at which the access network device receives the association packet in the second PDU set.

In a possible implementation, the latency measurement information of the two PDU sets that is measured by the access network device includes ninth time information and tenth time information. The ninth time information indicates a moment at which a first protocol layer of the access network device uploads the association packet in the first PDU set to an upper layer of the first protocol layer. The tenth time information indicates a moment at which the first protocol layer of the access network device uploads the association packet in the second PDU set to the upper layer of the first protocol layer. In this example, the access network device determines a difference between the ninth time information and the tenth time information as the uplink synchronization deviation.

Step 709: The access network device sends the downlink synchronization deviation and the uplink synchronization deviation to the core network device.

Correspondingly, the core network device receives the downlink synchronization deviation and the uplink synchronization deviation from the access network device.

Step 709 is an optional step.

In this embodiment, the access network device and the terminal device can measure the association packets in the two PDU sets. The terminal device can determine moments at which the association packets in the two PDU sets separately arrive at the terminal device. Further, the terminal device can determine the downlink synchronization deviation and feed back the downlink synchronization deviation to the access network device. The access network device can determine moments at which the association packets in the two PDU sets separately arrive at the access network device. Further, the access network device can determine the uplink synchronization deviation. Therefore, this helps the access network device evaluate, based on the downlink synchronization deviation and the uplink synchronization deviation, transmission performance of services corresponding to the two PDU sets, further helping optimize a network.

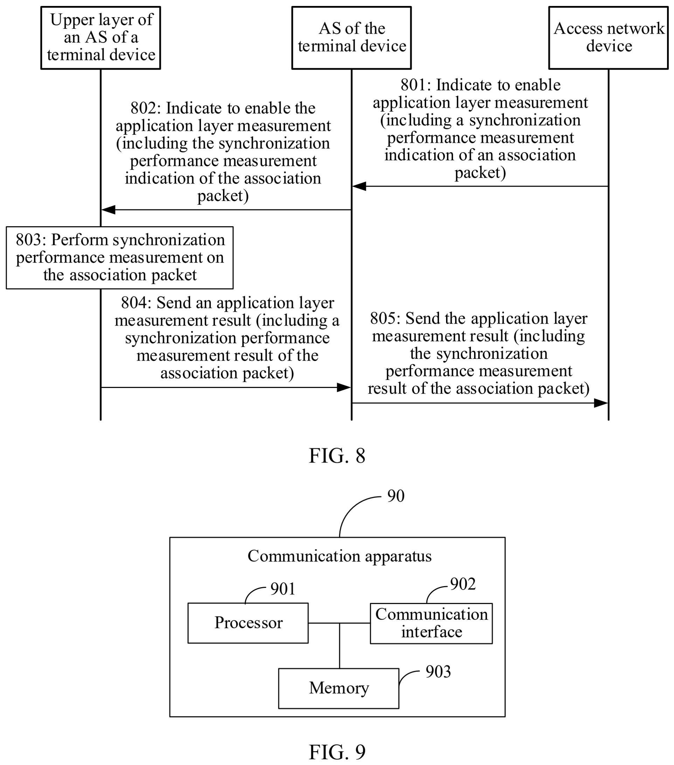

FIG. 8 shows a main procedure of another embodiment of a latency measurement method according to this application. In this embodiment, an access network device triggers, by using an application layer measurement configuration, an upper layer (for example, an application layer of a terminal device) of an access stratum (access stratum, AS) of the terminal device to perform synchronization performance measurement on an association packet. Further, the upper layer of the AS of the terminal device feeds back air interface synchronization performance. Specifically, the access network device and the terminal device mainly perform the following steps.

Step 801: The access network device notifies the terminal device to enable application layer measurement.

For example, the access network device sends the application layer measurement configuration to the terminal device. The application layer measurement configuration indicates the terminal device to measure synchronization performance of the association packet, or the application layer measurement configuration includes a synchronization performance measurement indication of the association packet, so that the terminal device measures or reports a synchronization performance measurement result of the association packet. The synchronization performance measurement result includes the latency measurement information that is of the association packet and that is described above (for example, a moment at which the upper layer of the AS of the terminal device receives the association packet from the AS of the terminal device and that is described below) and/or synchronization performance information (for example, a downlink synchronization deviation).

In this embodiment, the access network device can obtain application layer measurement configuration information. The application layer measurement configuration information is information that is determined by a network side and that is used by the access network device to configure application layer measurement for the terminal device. In an example, the access network device may receive the application layer measurement configuration information from a network element such as a core network (core network, CN), operation, administration and maintenance (operation, administration and maintenance, OAM), or an element manager (element manager, EM). For example, for signaling-based QoE measurement, the CN sends the application layer measurement configuration information to the access network device; and for management-based QoE measurement, the OAM or the EM sends the application layer measurement configuration information to the access network device. In another example, the access network device can generate the application layer measurement configuration information.

The application layer measurement configuration information includes information such as an application layer measurement configuration, a service type (Service Type), a QoE reference (QoE reference), and an IP address of a measurement collection entity.

The application layer measurement configuration may be in a form of a container. For example, the application layer measurement configuration is a container for application layer measurement configuration (container for application layer measurement configuration). The application layer measurement configuration includes at least one application layer measurement indicator (Metrics), that is, some metrics or indicators that the network side needs the terminal device to measure and report. For example, the application layer measurement indicator includes at least one of the following: an average throughput, which is a total quantity of bits received by the application layer of the terminal device in a measurement interval, for example, an average throughput in a streaming media service. For details, refer to a definition in clause 10.2 in the 3^{rd} generation partnership project (3rd generation partnership project, 3GPP) protocol TS 26.247. An initial play latency is an initial play latency at the beginning of streaming media presentation, and for example, may be specifically defined as from a moment at which a first segment of the media is obtained to a moment at which the streaming media is extracted from a client buffer. For details, refer to a definition in clause 10.2 in the 3GPP protocol TS 26.247. A buffer level is duration for which media data is to be continuously played from a current play moment. For details, refer to a definition in clause 10.2 in the 3GPP protocol TS 26.247. Details are not listed one by one herein. Optionally, the application layer measurement configuration further includes a range in which the network side needs the terminal device to perform application layer measurement, for example, a time range, a start time, and duration of performing measurement, and a policy according to which the network side needs the terminal device to perform reporting, for example, a measurement periodicity, a reporting periodicity, a reporting interval, a sampling ratio, or a location filtering configuration. In addition to the foregoing application layer measurement indicator, in this embodiment, the application layer measurement indicator further includes: the latency measurement information (for example, a moment at which the upper layer of the AS of the terminal device receives the association packet from the AS of the terminal device) and/or the synchronization performance information (for example, the downlink synchronization deviation) of the association packet.

The service type indicates a type of a service corresponding to the application layer measurement. The foregoing service may be a service of a type such as a streaming service (streaming service), a voice service, a multimedia telephony service for IP multimedia system (multimedia telephony service for IMS, MTSI), a virtual reality (virtual reality, VR) service, an augmented reality (augmented reality, AR) service, or a multicast and broadcast service (multicast broadcast service, MBS).

The QoE reference is information that is generated by the CN, the OAM, or the EM and that is used to identify application layer measurement, and may alternatively be understood as, used to identify a QoE measurement collection task on the access network device and another network side device (for example, a measurement collection entity (measurement collection entity, MCE)). Therefore, the QoE reference is also referred to as a QoE measurement identifier. Optionally, the QoE reference is a globally unique identifier. For example, the QoE reference includes a public land mobile network (public land mobile network, PLMN) and a QoE measurement collection identifier. The PLMN includes a mobile country code (mobile country code, MCC) and a mobile network code (mobile network code, MNC). The QoE measurement collection identifier is allocated by a management system or an operator.

Optionally, the application layer measurement configuration information further includes an application layer measurement configuration visible to the access network, for example, a QoE measurement amount or a measurement indicator (Available RAN Visible QoE Metrics) visible to a RAN, so that the latency measurement information of the association packet reported by the terminal device to the access network device based on the application layer measurement configuration visible to the access network is in a form visible to the access network device. For example, the application layer measurement configuration visible to the access network further includes indication information indicating to enable synchronization performance measurement, to indicate the terminal device to feed back latency measurement information (for example, a moment at which the upper layer of the AS of the terminal device receives the association packet from the AS of the terminal device) of the association packet visible to the access network device and/or synchronization performance information (for example, a downlink synchronization deviation) visible to the access network device. It should be noted that the application layer measurement configuration visible to the access network may be received by the access network device from a network element such as the CN, the OAM, or the EM, or may be determined by the access network device. For example, the access network device may generate an application layer measurement configuration, such as indication information indicating to enable synchronization performance measurement, visible to the access network, so that the terminal device feeds back the latency measurement information of the association packet visible to the access network device and/or the synchronization performance information visible to the access network device.

It should be noted that, in actual application, the application layer measurement configuration that is of the AS and that is notified by the access network device to the terminal device may be an application layer measurement configuration visible to the access network device, for example, a QoE configuration visible to the access network device (RAN-visible QoE configuration); or may be an application layer measurement configuration invisible to the access network device, for example, a QoE measurement configuration container (QoE measurement configuration container) or a container for application layer measurement configuration (container for application layer measurement configuration); or may include an application layer measurement configuration visible to the access network device and an application layer measurement configuration invisible to the access network device. This is not specifically limited herein.

This step may also be understood as that the access network device indicates the AS of the terminal device to notify the upper layer of the AS of the terminal device to enable synchronization performance measurement of the association packet.

Step 802: The AS of the terminal device notifies the upper layer of the AS of the terminal device to start application layer measurement.

For example, after the AS of the terminal device receives the application layer measurement configuration, the AS of the terminal device sends the application layer measurement configuration to the upper layer of the AS of the terminal device. The application layer measurement configuration indicates the terminal device to measure the synchronization performance of the association packet, or the application layer measurement configuration includes the synchronization performance measurement indication of the association packet. For explanations of the application layer measurement configuration, refer to related descriptions in step 801. Details are not described herein again.

The upper layer of the AS of the terminal device can enable synchronization performance measurement of the association packet based on application layer measurement indicators such as latency measurement information and synchronization performance information of the association packet that are newly added to the application layer measurement configuration. Therefore, this step may also be understood as that the AS of the terminal device notifies the upper layer of the AS of the terminal device to enable synchronization performance measurement of the association packet.

Step 803: The upper layer of the AS of the terminal device performs synchronization performance measurement on the association packet.

The application layer measurement indicator in the application layer measurement configuration received by the upper layer of the AS of the terminal device includes the latency measurement information (for example, the moment at which the first protocol layer of the terminal device uploads the association packet to the upper layer of the first protocol layer) and/or the synchronization performance information (for example, the downlink synchronization deviation) of the association packet. Therefore, in addition to measuring an application layer measurement indicator in the conventional technology, the upper layer of the AS of the terminal device further performs synchronization performance measurement on an association packet in a downlink data packet sent by the access network device, that is, measures latency measurement information and/or synchronization performance information of the association packet.

In a possible implementation, the association packet received by the upper layer of the AS of the terminal device includes service time information. The service time information is used to reflect a time at which the upper layer of the AS of the terminal device executes a service by using the packet. Times indicated by service time information of different packets can reflect a sequence of parsing or using the packets by the receiving end. Service time information of different association packets indicates similar times. For example, if a difference between a time indicated by service time information of a video packet of a service received by the upper layer of the AS of the terminal device and a time indicated by service time information of a voice packet is less than a threshold, the foregoing two packets (to be specific, the video packet and the voice packet) are two association packets. The upper layer of the AS of the terminal device may record a moment at which the video packet is received and a moment at which the voice packet is received, and further determine the downlink synchronization deviation between the two association packets based on a difference between the moment at which the video packet is received and the moment at which the voice packet is received.

In another possible implementation, the upper layer of the AS of the terminal device can determine, by using association packet indication information in a received packet, whether the packet is an association packet, and further determine whether to perform synchronization performance measurement on the packet. For example, the upper layer of the AS of the terminal device records a moment (denoted as time information 1) at which the upper layer of the AS of the terminal device receives an association packet 1. In addition, the upper layer of the AS of the terminal device records a moment (denoted as time information 2) at which the upper layer of the AS of the terminal device receives an association packet 2. Then, the upper layer of the AS of the terminal device determines a difference between the time information 1 and the time information 2 as the downlink synchronization deviation.

Step 804: The upper layer of the AS of the terminal device sends an application layer measurement result to the AS of the terminal device.

The application layer measurement result includes the synchronization performance measurement result of the association packet.

After the upper layer of the AS of the terminal device determines the synchronization performance measurement result of the association packet (for example, the latency measurement information and/or the downlink synchronization deviation of the association packet), the upper layer of the AS of the terminal device sends the synchronization performance measurement result to the AS of the terminal device.

Optionally, a message carrying the synchronization performance measurement result of the association packet further includes a service identifier. The service identifier indicates a service whose synchronization performance is reflected by the synchronization performance measurement result of the association packet. For example, the service identifier may be a QoS flow identifier, a PDU session identifier, or the like.

It should be noted that if the application layer measurement configuration received by the upper layer of the AS of the terminal device may be an application layer measurement configuration visible to the access network device, the upper layer of the AS of the terminal device sends, to the AS of the terminal device, the latency measurement information and/or the downlink synchronization deviation of the association packet visible to the application layer. If the application layer measurement configuration received by the upper layer of the AS of the terminal device may be an application layer measurement configuration (for example, a QoE measurement configuration container (QoE measurement configuration container)) invisible to the access network device, the upper layer of the AS of the terminal device reports the latency measurement information and/or the downlink synchronization deviation of the association packet in a form of a container (container). If the application layer measurement configuration received by the upper layer of the AS of the terminal device includes an application layer measurement configuration visible to the access network device and an application layer measurement configuration invisible to the access network device, the upper layer of the AS of the terminal device reports the latency measurement information and/or the downlink synchronization deviation of the association packet in a form of a container (container), and reports the latency measurement information and/or the downlink synchronization deviation of the association packet in a form visible to the application layer.

Step 805: The AS of the terminal device sends the application layer measurement result to the access network device.

The application layer measurement result includes the synchronization performance measurement result of the association packet.

After the AS of the terminal device receives the synchronization performance measurement result of the association packet (for example, the latency measurement information and/or the downlink synchronization deviation of the association packet) reported by the upper layer of the AS of the terminal device, the AS of the terminal device reports the latency measurement information and/or the downlink synchronization deviation of the association packet to the access network device.

It should be noted that if the application layer measurement configuration received by the AS of the terminal device may be an application layer measurement configuration visible to the access network device, the AS of the terminal device sends, to the access network device, the latency measurement information and/or the downlink synchronization deviation of the association packet visible to the application layer. If the application layer measurement configuration received by the AS of the terminal device may be an application layer measurement configuration invisible to the access network device, the AS of the terminal device reports the latency measurement information and/or the downlink synchronization deviation of the association packet to the access network device in a form of a container (container). If the application layer measurement configuration received by the AS of the terminal device includes an application layer measurement configuration visible to the access network device and an application layer measurement configuration invisible to the access network device, the AS of the terminal device reports the latency measurement information and/or the downlink synchronization deviation of the association packet to the access network device in a form of a container (container), and reports the latency measurement information and/or the downlink synchronization deviation of the association packet to the access network device in a form visible to the application layer.

It should be further noted that if the access network device receives a measurement result (for example, the latency measurement information and/or the downlink synchronization deviation of the association packet encapsulated in a container) reported in a form of a container (container), the access network device may send the measurement result to a measurement collection entity (measurement collection entity, MCE). If the access network device receives a measurement result visible to the access network (for example, the latency measurement information and/or the downlink synchronization deviation of the association packet visible to the access network), the access network device may optimize radio resource scheduling based on the measurement result.

In this embodiment, the access network device adds an indicator (for example, the latency measurement information and/or the synchronization performance information of the association packet) related to synchronization performance measurement of the association packet to an application layer measurement indicator of the application layer measurement configuration, to trigger the upper layer of the AS of the terminal device (for example, the application layer of the terminal device) to perform synchronization performance measurement on the association packet. Further, the upper layer of the AS of the terminal device feeds back the synchronization performance. This helps trigger, by using an application layer measurement configuration procedure in the conventional technology, the upper layer of the AS of the terminal device to perform synchronization performance measurement, so that a network side obtains a measurement result related to synchronization performance to measure transmission performance of a service. In addition, the upper layer of the AS of the terminal device can report the latency measurement information and/or the synchronization performance information of the association packet to the AS of the terminal device in a form visible to the access network. Further, the AS of the terminal device can report the latency measurement information and/or the synchronization performance information of the association packet to the access network device in the form visible to the access network. This helps the access network device obtain a measurement result related to synchronization performance to measure transmission performance of a service, further optimizing a network.

In correspondence to the solutions provided in the foregoing method embodiments, embodiments of this application further provide a corresponding communication apparatus (also referred to as a communication device) and a communication system. The communication apparatus includes a corresponding module or unit configured to perform each part in the foregoing embodiments. The module or unit may be software, hardware, or a combination of software and hardware. The following only briefly describes the communication apparatus and system. For implementation details of the solutions, refer to descriptions of the foregoing method embodiments. Details are not described below again.

FIG. 9 is a diagram of a structure of a communication apparatus 90 according to this application. It should be understood that the core network device in the method embodiment corresponding to FIG. 2, FIG. 3, FIG. 4, FIG. 5, FIG. 6, or FIG. 7 may be based on the structure of the communication apparatus 90 shown in FIG. 9 in this embodiment. As shown in FIG. 9, the communication apparatus 90 may include a processor 901, a memory 903, and a communication interface 902. The processor 901 is coupled and connected to the memory 903, and the processor 901 is coupled and connected to the communication interface 902.

The communication interface 902 is connected to another communication apparatus through a communication link. For example, the communication interface 902 may include a network interface, for example, an S 1 interface, with an access network device (for example, the communication apparatus 90 shown in FIG. 9).

The processor 901 may be a central processing unit (central processing unit, CPU), an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof. The processor 901 may be one processor, or may include a plurality of processors. This is not specifically limited herein.

In addition, the memory 903 is mainly configured to store a software program and data. The memory 903 may exist independently and is connected to the processor 901. Optionally, the memory 903 and the processor 901 may be integrated, for example, integrated into one or more chips. The memory 903 can store program code for executing the technical solutions in embodiments of this application, and the processor 901 controls the execution. Various types of executed computer program code may also be considered as drivers of the processor 901. The memory 903 may include a volatile memory (volatile memory), for example, a random access memory (random-access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory 903 may alternatively include a combination of the foregoing types of memories. The memory 903 may be one memory, or may include a plurality of memories. For example, the memory 903 is configured to store various types of data.

In a design, the communication apparatus 90 is configured to perform the method of the core network device in the embodiment corresponding to FIG. 2 or FIG. 3. The communication interface 902 is configured to: obtain time information of a first packet in a first protocol data unit PDU set at a transmit end, and obtain time information of a last packet in the first PDU set at a receive end. The processor 901 is configured to determine a transmission latency of the first PDU set between the transmit end and the receive end based on the time information of the first packet at the transmit end and the time information of the last packet at the receive end.

In a possible implementation, the processor 901 is specifically used by the core network device to determine a difference between the time information of the last packet at the receive end and the time information of the first packet at the transmit end as the transmission latency of the first PDU set between the transmit end and the receive end.

In a possible implementation, an interface between the transmit end and the receive end is an air interface. The time information of the first packet at the transmit end indicates a moment at which a first protocol layer at the transmit end receives the first packet from an upper layer of the first protocol layer. The time information of the last packet at the receive end indicates a moment at which a first protocol layer at the receive end uploads the last packet to an upper layer of the first protocol layer.

In an example, the transmit end is an access network device, and the receive end is a terminal device; the transmission latency of the first PDU set between the transmit end and the receive end is an air interface downlink latency of the first PDU set; the time information of the first packet at the transmit end includes first time information, and the first time information indicates a moment at which a first protocol layer of the access network device receives the first packet from an upper layer of the first protocol layer; and the time information of the last packet at the receive end includes second time information, and the second time information indicates a moment at which a first protocol layer of the terminal device uploads the last packet to an upper layer of the first protocol layer.

The communication interface 902 is specifically configured to: receive the first time information from the access network device, obtain a moment at which the access network device receives the last packet in the first PDU set from the core network device and an air interface downlink latency of the last packet in the first PDU set, and determine the second time information based on a sum of the moment at which the access network device receives the last packet in the first PDU set from the core network device and the air interface downlink latency of the last packet in the first PDU set; or receive the second time information from the access network device, where the second time information is determined based on a sum of a moment at which the access network device receives the last packet in the first PDU set from the core network device and an air interface downlink latency of the last packet in the first PDU set. The processor 901 is specifically configured to determine a difference between the moment indicated by the second time information and the moment indicated by the first time information as the air interface downlink latency of the first PDU set.

In another example, the transmit end is a terminal device, and the receive end is an access network device; the transmission latency of the first PDU set between the transmit end and the receive end is an air interface uplink latency of the first PDU set; the time information of the first packet at the transmit end includes third time information, and the third time information indicates a moment at which a first protocol layer of the terminal device receives the first packet from an upper layer of the first protocol layer; and the time information of the last packet at the receive end includes fourth time information, and the fourth time information indicates a moment at which a first protocol layer of the access network device uploads the last packet to an upper layer of the first protocol layer.

The communication interface 902 is specifically configured to: receive, from the access network device, the third time information from the terminal device; and receive the fourth time information from the access network device. The processor 901 is specifically configured to determine a difference between the moment indicated by the fourth time information and the moment indicated by the third time information as the air interface uplink latency of the first PDU set.

In a possible implementation, an interface between the transmit end and the receive end is an NG interface. The time information of the first packet at the transmit end indicates the moment at which the transmit end sends the first packet, and the time information of the last packet at the receive end indicates the moment at which the receive end receives the last packet.

In an example, the transmit end is a core network device, and the receive end is an access network device. The transmission latency of the first PDU set between the transmit end and the receive end is an NG interface downlink latency of the first PDU set. The time information of the first packet at the transmit end includes fifth time information, and the fifth time information indicates a moment at which the core network device sends the first packet. The time information of the last packet at the receive end includes sixth time information, and the sixth time information indicates a moment at which the access network device receives the last packet.

The communication interface 902 is specifically configured to receive the sixth time information from the access network device. The processor 901 is specifically configured to: record the fifth time information when the first PDU set is sent, and determine a difference between the moment indicated by the sixth time information and the moment indicated by the fifth time information as the NG interface downlink latency of the first PDU set.

In another example, the transmit end is an access network device, and the receive end is a core network device. The transmission latency of the first PDU set between the transmit end and the receive end is an NG interface uplink latency of the first PDU set. The time information of the first packet at the transmit end includes seventh time information, and the seventh time information indicates a moment at which the access network device sends the first packet. The time information of the last packet at the receive end includes eighth time information, and the eighth time information indicates a moment at which the core network device receives the last packet.

The communication interface 902 is specifically configured to receive the seventh time information from the access network device. The processor 901 is specifically configured to: record the eighth time information when the first PDU set is received, and determine a difference between the moment indicated by the eighth time information and the moment indicated by the seventh time information as the NG interface uplink latency of the first PDU set.

In a possible implementation, the communication interface 902 is further configured to receive identification information of the first PDU set and the air interface downlink latency of the first PDU set from the access network device.

In a possible implementation, the processor 901 is further configured to determine an uplink latency and/or a downlink latency of the first PDU set between the terminal device and the core network device based on the identification information of the first PDU set, the air interface downlink latency of the first PDU set, the air interface uplink latency of the first PDU set, the NG interface downlink latency of the first PDU set, and the NG interface uplink latency of the first PDU set.

In another design, the communication apparatus 90 is configured to perform the method of the core network device in the embodiment corresponding to FIG. 4 or FIG. 5. The communication interface 902 is configured to send first indication information to the access network device, where the first indication information indicates to measure only a first packet and a last packet in a PDU set. It may also be understood as that the first indication information indicates to measure a transmission latency at a PDU set granularity.

In an example, the communication apparatus 90 notifies, by using a control plane, the access network device to enable latency measurement at the PDU set granularity. For example, the processor 901 sends control plane signaling to the access network device, and the control plane signaling carries the first indication information. Optionally, the control plane signaling may be a latency measurement request message, or may be another message. Optionally, the processor 901 further sends identification information of the first PDU set to the access network device to indicate the access network device to perform latency measurement at the PDU set granularity on the first PDU set.

In another example, the communication apparatus 90 notifies, by using a user plane, the access network device to enable latency measurement at the PDU set granularity. For example, the processor 901 separately adds the first indication information to the first packet and the last packet in the first PDU set, and does not add the first indication information to another packet in the first PDU set. Optionally, the first indication information may alternatively be carried in a GTP-U header of a packet. For example, a GTP-U header of the first packet and a GTP-U header of the last packet in the first PDU set each carry the first indication information.

In a possible implementation, the communication interface 902 is specifically configured to receive the sixth time information from the access network device. The processor 901 is specifically configured to: record the fifth time information when the first PDU set is sent, and determine a difference between the moment indicated by the sixth time information and the moment indicated by the fifth time information as the NG interface downlink latency of the first PDU set.

In a possible implementation, the communication interface 902 is specifically configured to receive the seventh time information from the access network device. The processor 901 is specifically configured to: record the eighth time information when the first PDU set is received, and determine a difference between the moment indicated by the eighth time information and the moment indicated by the seventh time information as the NG interface uplink latency of the first PDU set.

In another design, the communication apparatus 90 is configured to perform the method of the core network device in the embodiment corresponding to FIG. 6. The communication interface 902 is configured to obtain time information of two PDU sets. The time information of each PDU set is used to determine a moment at which an association packet in the PDU set arrives at the receive end. The processor 901 is configured to determine synchronization performance information of two PDU sets based on the time information of the two PDU sets. The synchronization performance information indicates a time deviation between a time at which an association packet in one PDU set arrives at the receive end and a time at which an association packet in the other PDU set arrives at the receive end.

In a possible implementation, the two PDU sets include a first PDU set and a second PDU set, the synchronization performance information includes the downlink synchronization deviation, the time information of the first PDU set includes latency measurement information of the association packet in the first PDU set, and the time information of the second PDU set includes latency measurement information of the association packet in the second PDU set.

The processor 901 is specifically configured to: determine, based on the latency measurement information of the association packet in the first PDU set, a moment at which the association packet in the first PDU set arrives at the terminal device; determine, based on the latency measurement information of the association packet in the second PDU set, a moment at which the association packet in the second PDU set arrives at the terminal device; and determine the downlink synchronization deviation based on a difference between the moment at which the association packet in the first PDU set arrives at the terminal device and the moment at which the association packet in the second PDU set arrives at the terminal device.

Optionally, the latency measurement information of the association packet in the first PDU set includes an NG interface downlink latency of the association packet in the first PDU set and an air interface downlink latency of the association packet in the first PDU set. The moment at which the association packet in the first PDU set arrives at the terminal device is equal to a sum of the NG interface downlink latency of the association packet in the first PDU set, the air interface downlink latency of the association packet in the first PDU set, and the moment at which the core network device sends the association packet in the first PDU set. The latency measurement information of the association packet in the second PDU set includes an NG interface downlink latency of the association packet in the second PDU set and an air interface downlink latency of the association packet in the second PDU set. The moment at which the association packet in the second PDU set arrives at the terminal device is equal to a sum of the NG interface downlink latency of the association packet in the second PDU set, the air interface downlink latency of the association packet in the second PDU set, and the moment at which the core network device sends the association packet in the second PDU set. Optionally, the association packet in the second PDU set includes the last packet in the second PDU set, and the association packet in the first PDU set includes the last packet in the first PDU set.

In a possible implementation, the two PDU sets include the first PDU set and the second PDU set, the synchronization performance information includes the uplink synchronization deviation, the time information of the first PDU set includes the moment at which the core network device receives the association packet in the first PDU set, and the time information of the second PDU set includes the moment at which the core network device receives the association packet in the second PDU set.

The processor 901 is specifically configured to determine the uplink synchronization deviation based on a difference between a moment at which the association packet in the first PDU set is received and a moment at which the association packet in the second PDU set is received.

In a possible implementation, the communication interface 902 is configured to send third indication information to the access network device, where the third indication information indicates the access network device to trigger synchronization performance measurement of the two PDU sets.

In another design, the communication apparatus 90 is configured to perform the method of the core network device in the embodiment corresponding to FIG. 7. The communication interface 902 is configured to send the third indication information to the access network device. The processor 901 is configured to determine an association relationship between the two PDU sets. The communication interface 902 is configured to notify the access network device of the association relationship between the two PDU sets.

In an example, the communication apparatus 90 notifies the access network device of the association relationship between the two PDU sets by using the user plane. For example, the processor 901 adds, to an association packet in one PDU set, association information indicating another PDU set, and the association information indicates that one PDU set has an association relationship with another PDU set.

In another example, the communication apparatus 90 notifies the access network device of the association relationship between the two PDU sets by using the control plane. For example, the communication interface 902 sends the identification information of the first PDU set and the identification information of the second PDU set to the access network device to indicate the access network device to measure synchronization performance between the first PDU set and the second PDU set, in other words, the first PDU set has an association relationship with the second PDU set.

It should be noted that for specific implementations and beneficial effects of this embodiment, refer to the methods of the core network device in the foregoing embodiments. Details are not described herein again.

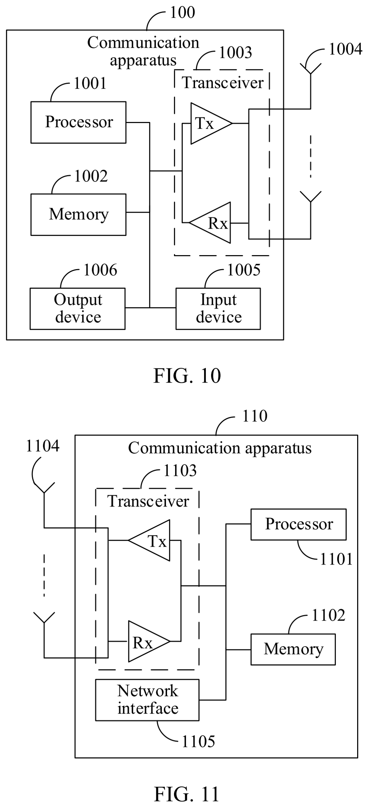

FIG. 10 is a diagram of a structure of another communication apparatus 100 according to this application. It should be understood that the terminal device in the method embodiment corresponding to FIG. 4, FIG. 5, FIG. 7, or FIG. 8 may be based on the structure of the communication apparatus 100 shown in FIG. 10 in this embodiment.

The communication apparatus 100 includes at least one processor 1001, at least one memory 1002, and at least one transceiver 1003. The processor 1001, the memory 1002, and the transceiver 1003 are connected. Optionally, the communication apparatus 100 may further include an input device 1005, an output device 1006, and one or more antennas 1004. The antenna 1004 is connected to the transceiver 1003. The input device 1005 and the output device 1006 are connected to the processor 1001.

In this embodiment, the memory 1002 is mainly configured to store a software program and data. The memory 1002 may exist independently and is connected to the processor 1001. Optionally, the memory 1002 and the processor 1001 may be integrated, for example, integrated into one or more chips. The memory 1002 can store program code for executing the technical solutions in embodiments of this application, and the processor 1001 controls the execution. Various types of executed computer program code may also be considered as drivers of the processor 1001. It should be understood that FIG. 10 in this embodiment shows only one memory and one processor. However, during actual application, the communication apparatus 100 may include a plurality of processors or a plurality of memories. This is not specifically limited herein. In addition, the memory 1002 may also be referred to as a storage medium, a storage device, or the like. The memory 1002 may be a storage element (namely, an on-chip storage element) located on a same chip as the processor, or an independent storage element. This is not limited in this embodiment of this application.

In this embodiment, the transceiver 1003 may be configured to support receiving or sending of a radio frequency signal between the communication apparatus 100 and an access network device. The transceiver 1003 may be connected to the antenna 1004. The transceiver 1003 includes a transmitter Tx and a receiver Rx. Specifically, the one or more antennas 1004 may receive a radio frequency signal. The receiver Rx in the transceiver 1003 is configured to: receive the radio frequency signal from the antenna 1004, convert the radio frequency signal into a digital baseband signal or a digital intermediate frequency signal, and provide the digital baseband signal or the digital intermediate frequency signal for the processor 1001, so that the processor 1001 performs further processing, for example, demodulation processing and decoding processing, on the digital baseband signal or the digital intermediate frequency signal. In addition, the transmitter Tx in the transceiver 1003 is further configured to: receive a modulated digital baseband signal or a modulated digital intermediate frequency signal from the processor 1001, convert the modulated digital baseband signal or the modulated digital intermediate frequency signal into a radio frequency signal, and send the radio frequency signal through the one or more antennas 1004. Specifically, the receiver Rx may selectively perform one or more levels of down-mixing processing and analog-to-digital conversion processing on the radio frequency signal to obtain the digital baseband signal or the digital intermediate frequency signal. A sequence of the down-mixing and the analog-to-digital conversion processing is adjustable. The transmitter Tx may selectively perform one or more levels of up-mixing processing and digital-to-analog conversion processing on the modulated digital baseband signal or digital intermediate frequency signal to obtain the radio frequency signal. A sequence of the up-mixing processing and the digital-to-analog conversion processing is adjustable. The digital baseband signal and the digital intermediate frequency signal may be collectively referred to as a digital signal.

It should be understood that the transceiver 1003 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes the receiving unit and the sending unit. The receiving unit may also be referred to as a receiver, an input port, a receiving circuit, or the like. The sending unit may be referred to as a transmitter machine, a transmitter, a transmission circuit, or the like.

The processor 1001 may be a baseband processor, or may be a central processing unit (central processing unit, CPU). The baseband processor and the CPU may be integrated together or separated from each other. The processor 1001 may be configured to implement various functions for the terminal device, for example, configured to process a communication protocol and communication data; or configured to: control the entire terminal device, execute a software program, and process data of the software program; or configured to assist in completing a computing processing task, for example, graphics and image processing or audio processing. Alternatively, the processor 1001 is configured to implement one or more of the foregoing functions.

In addition, the output device 1006 communicates with the processor 1001, and may display information in a plurality of manners. This is not specifically limited herein.

In a design, the communication apparatus 100 is configured to perform the method of the terminal device in the embodiment corresponding to FIG. 4 or FIG. 5. The transceiver 1003 in the communication apparatus 100 is configured to: receive second indication information from the access network device, where the second indication information indicates to measure a transmission latency at a PDU set granularity; and send latency measurement information of a first PDU set to the access network device. Optionally, the second indication information includes identification information of the first PDU set.

In a possible implementation, the latency measurement information of the first PDU set includes an air interface downlink latency of the first PDU set. The transceiver 1003 is configured to obtain first time information from the access network device, where the first time information indicates a moment at which a first protocol layer of the access network device receives a first packet from an upper layer of the first protocol layer. The processor 1001 is configured to: record second time information, where the second time information indicates a moment at which a first protocol layer of the terminal device uploads a last packet to an upper layer of the first protocol layer; and determine a difference between the moment indicated by the second time information and the moment indicated by the first time information as the air interface downlink latency of the first PDU set.

Optionally, the first time information includes a first timestamp configured by the access network device in the first packet in the first PDU set.

In a possible implementation, the transceiver 1003 is further configured to configure a second timestamp in the first packet in the first PDU set to be sent to the access network device, where the second timestamp indicates a moment at which a first protocol layer of the terminal device receives the first packet from an upper layer of the first protocol layer.

In another design, the communication apparatus 100 is configured to perform the method of the terminal device in the embodiment corresponding to FIG. 7. The transceiver 1003 in the communication apparatus 100 is configured to receive fourth indication information from the access network device, where the fourth indication information indicates the terminal device to trigger synchronization performance measurement of two PDU sets. The processor 1001 is configured to determine synchronization performance information of the two PDU sets based on latency measurement information of the two PDU sets, where the synchronization performance information indicates a time deviation between a time at which an association packet in one PDU set arrives at a receive end and a time at which an association packet in the other PDU set arrives at the receive end. The transceiver 1003 is configured to send the synchronization performance information to the access network device.

In a possible implementation, the transceiver 1003 is further configured to obtain an association relationship between the two PDU sets.

Optionally, an association packet in one PDU set carries association information indicating another PDU set, and the association information indicates that one PDU set has an association relationship with the another PDU set.

Optionally, the two PDU sets includes a first PDU set and a second PDU set. The association information includes first association information of the first PDU set and second association information of the second PDU set. The first association information includes a sequence number of an association packet in the second PDU set. The second association information includes a sequence number of an association packet in the first PDU set.

Optionally, the association packet in the second PDU set includes the last packet in the second PDU set, and the association packet in the first PDU set includes the last packet in the first PDU set.

In a possible implementation, the synchronization performance information includes a downlink synchronization deviation. The downlink synchronization deviation indicates a time deviation between a time at which a packet in one of the two PDU sets arrives at the terminal device and a time at which a packet in the other of the two PDU sets arrives at the terminal device. The latency measurement information of the two PDU sets includes eleventh time information and twelfth time information. The eleventh time information indicates a moment at which a first protocol layer of the terminal device uploads the association packet in the first PDU set to an upper layer of the first protocol layer. The twelfth time information indicates a moment at which the first protocol layer of the terminal device uploads the association packet in the second PDU set to the upper layer of the first protocol layer.

The processor 1001 is specifically configured to determine a difference between the eleventh time information and the twelfth time information as the downlink synchronization deviation.

In another design, the communication apparatus 100 is configured to perform the method of the terminal device in the embodiment corresponding to FIG. 8. The transceiver 1003 is configured to receive an application layer measurement configuration. The processor 1001 is configured to: submit the application layer measurement configuration to the upper layer of the AS of the terminal device, and determine a synchronization performance measurement result of the association packet. The transceiver 1003 is further configured to send the synchronization performance measurement result of the association packet to the access network device.

It should be noted that for a specific implementation and beneficial effects of this embodiment, refer to the method of the terminal device in the foregoing embodiment. Details are not described herein again.

FIG. 11 is a diagram of a structure of another communication apparatus 110 according to an embodiment. It should be understood that the access network device in the method embodiment corresponding to FIG. 4, FIG. 5, FIG. 7, or FIG. 8 may be based on the structure of the communication apparatus 110 shown in FIG. 11 in this embodiment.

The communication apparatus 110 includes at least one processor 1101, at least one memory 1102, at least one transceiver 1103, at least one network interface 1105, and one or more antennas 1104. The processor 1101, the memory 1102, the transceiver 1103, and the network interface 1105 are connected by using a connection apparatus. The antenna 1104 is connected to the transceiver 1103. The connection apparatus may include various types of interfaces, transmission cables, buses, or the like. This is not limited in this embodiment.

The memory 1102 is mainly configured to store a software program and data. The memory 1102 may exist independently and is connected to the processor 1101. Optionally, the memory 1102 and the processor 1101 may be integrated, for example, integrated into one or more chips. The memory 1102 can store program code for executing the technical solutions in embodiments of this application, and the processor 1101 controls the execution. Various types of executed computer program code may also be considered as drivers of the processor 1101. It should be understood that FIG. 11 in this embodiment shows only one memory and one processor. However, during actual application, the communication apparatus 110 may include a plurality of processors or a plurality of memories. This is not specifically limited herein. In addition, the memory 1102 may also be referred to as a storage medium, a storage device, or the like. The memory 1102 may be a storage element (namely, an on-chip storage element) located on a same chip as the processor, or an independent storage element. This is not limited in this embodiment of this application.

In this embodiment, the transceiver 1103 may be configured to support receiving or sending of a radio frequency signal between the communication apparatus 110 and a terminal device. The transceiver 1103 may be connected to the antenna 1104. The transceiver 1103 includes a transmitter Tx and a receiver Rx. Specifically, the one or more antennas 1104 may receive a radio frequency signal. The receiver Rx in the transceiver 1103 is configured to: receive the radio frequency signal from the antenna 1104, convert the radio frequency signal into a digital baseband signal or a digital intermediate frequency signal, and provide the digital baseband signal or the digital intermediate frequency signal for the processor 1101, so that the processor 1101 performs further processing, for example, demodulation processing and decoding processing, on the digital baseband signal or the digital intermediate frequency signal. In addition, the transmitter Tx in the transceiver 1103 is further configured to: receive a modulated digital baseband signal or a modulated digital intermediate frequency signal from the processor 1101, convert the modulated digital baseband signal or the modulated digital intermediate frequency signal into a radio frequency signal, and send the radio frequency signal by using the one or more antennas 1104. Specifically, the receiver Rx may selectively perform one or more levels of down-mixing processing and analog-to-digital conversion processing on the radio frequency signal to obtain the digital baseband signal or the digital intermediate frequency signal. A sequence of the down-mixing and the analog-to-digital conversion processing is adjustable. The transmitter Tx may selectively perform one or more levels of up-mixing processing and digital-to-analog conversion processing on the modulated digital baseband signal or digital intermediate frequency signal to obtain the radio frequency signal. A sequence of the up-mixing processing and the digital-to-analog conversion processing is adjustable. The digital baseband signal and the digital intermediate frequency signal may be collectively referred to as a digital signal.

It should be understood that the transceiver 1103 may also be referred to as a transceiver unit, a transceiver machine, a transceiver apparatus, or the like. Optionally, a component configured to implement a receiving function in the transceiver unit may be considered as a receiving unit, and a component configured to implement a sending function in the transceiver unit may be considered as a sending unit. In other words, the transceiver unit includes the receiving unit and the sending unit. The receiving unit may also be referred to as a receiver, an input port, a receiving circuit, or the like. The sending unit may be referred to as a transmitter machine, a transmitter, a transmission circuit, or the like.

In addition, the processor 1101 is mainly configured to: process a communication protocol and communication data, control the entire network device, execute a software program, and process data of the software program, for example, configured to support the communication apparatus 110 in performing an action described in the foregoing embodiment. The communication apparatus 110 may include a baseband processor and a central processing unit. The baseband processor is mainly configured to process a communication protocol and communication data. The central processing unit is mainly configured to: control the entire communication apparatus 110, execute a software program, and process data of the software program. Functions of the baseband processor and the central processing unit may be integrated into the processor 1101 in FIG. 11. A person skilled in the art may understand that the baseband processor and the central processing unit may be processors independent of each other, and are interconnected by using a technology such as a bus. A person skilled in the art may understand that the communication apparatus 110 may include a plurality of baseband processors to adapt to different network standards, the communication apparatus 110 may include a plurality of central processing units to enhance a processing capability thereof, and various components in the communication apparatus 110 may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the memory in a form of a software program, and the processor executes the software program to implement a baseband processing function.

In addition, the network interface 1105 is configured to enable the communication apparatus 110 to connect to another communication apparatus through a communication link. Specifically, the network interface 1105 may include a network interface between the communication apparatus 110 and a core network element, for example, an S1 interface; or the network interface 1105 may include a network interface between the communication apparatus 110 and another network device (for example, another access network device or core network element), for example, an X2 interface or an Xn interface.

In a design, the communication apparatus 110 is configured to perform the method of the access network device in the embodiment corresponding to FIG. 4 or FIG. 5. The transceiver 1103 is configured to: obtain time information of a first packet in a first PDU set at a transmit end, and obtain time information of a last packet in the first PDU set at a receive end. The processor 1101 is configured to determine a transmission latency of the first PDU set between the transmit end and the receive end based on the time information of the first packet at the transmit end and the time information of the last packet at the receive end

In a possible implementation, the processor 1101 is specifically configured to determine a difference between the time information of the last packet at the receive end and the time information of the first packet at the transmit end as the transmission latency of the first PDU set between the transmit end and the receive end.

In a possible implementation, an interface between the transmit end and the receive end is an air interface. The time information of the first packet at the transmit end indicates a moment at which a first protocol layer at the transmit end receives the first packet from an upper layer of the first protocol layer. The time information of the last packet at the receive end indicates a moment at which a first protocol layer at the receive end uploads the last packet to an upper layer of the first protocol layer.

In an example, the transmit end is an access network device, and the receive end is a terminal device; the transmission latency of the first PDU set between the transmit end and the receive end is an air interface downlink latency of the first PDU set; the time information of the first packet at the transmit end includes first time information, and the first time information indicates a moment at which a first protocol layer of the access network device receives the first packet from an upper layer of the first protocol layer; and the time information of the last packet at the receive end includes second time information, and the second time information indicates a moment at which a first protocol layer of the terminal device uploads the last packet to an upper layer of the first protocol layer.

The transceiver 1103 is specifically configured to receive the second time information from the terminal device. The processor 1101 is specifically configured to: record the first time information, and determine a difference between the moment indicated by the second time information and the moment indicated by the first time information as the air interface downlink latency of the first PDU set.

In another example, the transmit end is a terminal device, and the receive end is an access network device; the transmission latency of the first PDU set between the transmit end and the receive end is an air interface uplink latency of the first PDU set; the time information of the first packet at the transmit end includes third time information, and the third time information indicates a moment at which a first protocol layer of the terminal device receives the first packet from an upper layer of the first protocol layer; and the time information of the last packet at the receive end includes fourth time information, and the fourth time information indicates a moment at which a first protocol layer of the access network device uploads the last packet to an upper layer of the first protocol layer.

The transceiver 1103 is specifically configured to receive the third time information from the terminal device. The processor 1101 is specifically configured to: record the fourth time information when the first PDU set is received, and determine a difference between the moment indicated by the fourth time information and the moment indicated by the third time information as the air interface uplink latency of the first PDU set.

In a possible implementation, the first packet in the first PDU set sent by the transmit end to the receive end includes a timestamp configured by the transmit end, and the timestamp indicates the moment at which the first protocol layer at the transmit end receives the first packet from the upper layer of the first protocol layer.

Optionally, the first packet in the first PDU set further includes identification information of the first PDU set, the last packet in the first PDU set includes the identification information of the first PDU set, and another packet in the first PDU set does not include the identification information of the first PDU set.

Optionally, each packet in the first PDU set includes the identification information of the first PDU set. The first packet in the first PDU set further includes initial packet indication information, and the initial packet indication information indicates that a packet carrying the initial packet indication information is an initial packet in the first PDU set. The last packet in the first PDU set further includes tail packet indication information, and the tail packet indication information indicates that a packet carrying the tail packet indication information is a tail packet in the first PDU set.

Optionally, each packet in the first PDU set further includes a sequence number of each packet in the first PDU set.

Optionally, each packet in the first PDU set carries a timestamp configured by the transmit end, and the timestamp in each packet indicates the moment at which the first protocol layer of the terminal device receives a packet from the upper layer of the first protocol layer.

In a possible implementation, the last packet in the first PDU set sent by the transmit end to the receive end includes a timestamp of the first packet in the first PDU set sent by the transmit end to the receive end, and the timestamp indicates the moment at which the first protocol layer at the transmit end receives the first packet from the upper layer of the first protocol layer. Another packet in the first PDU set does not carry a timestamp.

In a possible implementation, the transceiver 1103 is further configured to send second indication information to the terminal device, where the second indication information indicates to measure a transmission latency at a PDU set granularity. Optionally, the second indication information includes identification information of the first PDU set.

In a possible implementation, the transceiver 1103 is further configured to receive first indication information, where the first indication information indicates to measure only a first packet and a last packet in a PDU set.

In another design, the communication apparatus 110 is configured to perform the method of the access network device in the embodiment corresponding to FIG. 7. The transceiver 1103 in the communication apparatus 110 is used by the access network device to send fourth indication information to the terminal device, where the fourth indication information indicates the terminal device to trigger synchronization performance measurement of two PDU sets. The processor 1101 is configured to determine synchronization performance information of the two PDU sets based on latency measurement information of the two PDU sets, where the synchronization performance information indicates a time deviation between a time at which an association packet in one PDU set arrives at a receive end and a time at which an association packet in the other PDU set arrives at the receive end.

In a possible implementation, the transceiver 1103 is further configured to: obtain an association relationship between the two PDU sets, and notify the terminal device of the association relationship between the two PDU sets.

Optionally, an association packet in one PDU set carries association information indicating another PDU set, and the association information indicates that one PDU set has an association relationship with the another PDU set.

Optionally, the two PDU sets includes a first PDU set and a second PDU set. The association information includes first association information of the first PDU set and second association information of the second PDU set. The first association information includes a sequence number of an association packet in the second PDU set. The second association information includes a sequence number of an association packet in the first PDU set.

Optionally, the association packet in the second PDU set includes the last packet in the second PDU set, and the association packet in the first PDU set includes the last packet in the first PDU set.

In a possible implementation, the synchronization performance information includes an uplink synchronization deviation. The latency measurement information of the two PDU sets includes ninth time information and tenth time information. The ninth time information indicates a moment at which a first protocol layer of the access network device uploads the association packet in the first PDU set to an upper layer of the first protocol layer. The tenth time information indicates a moment at which the first protocol layer of the access network device uploads the association packet in the second PDU set to the upper layer of the first protocol layer.

The processor 1101 is specifically configured to determine a difference between the ninth time information and the tenth time information as the uplink synchronization deviation.

In a possible implementation, the transceiver 1103 is further configured to receive the synchronization performance information, where the synchronization performance information includes a downlink synchronization deviation, and the downlink synchronization deviation indicates a time deviation between a time at which a packet in one of the two PDU sets arrives at the terminal device and a time at which a packet in the other of the two PDU sets arrives at the terminal device.

In a possible implementation, the transceiver 1103 is further configured to receive third indication information from the core network device, where the third indication information indicates the access network device to trigger synchronization performance measurement of the two PDU sets.

In another design, the communication apparatus 110 is configured to perform the method of the access network device in the embodiment corresponding to FIG. 8. The transceiver 1103 is configured to: send an application layer measurement configuration to the terminal device, and receive a synchronization performance measurement result of an association packet from the terminal device.

It should be noted that for specific implementations and beneficial effects of this embodiment, refer to the methods of the access network devices in the foregoing embodiments. Details are not described herein again.

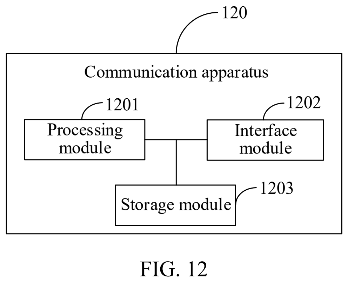

As shown in FIG. 12, this application further provides a communication apparatus 120. The communication apparatus 120 may be a terminal device, an access network device, or a core network device, or may be a component (for example, an integrated circuit or a chip) of a terminal device, an access network device, or a core network device. Alternatively, the communication apparatus 120 may be another communication module configured to implement the methods in the method embodiments of this application.

The communication apparatus 120 may include a processing module 1201 (or referred to as a processing unit), and optionally, may further include an interface module 1202 (or referred to as a transceiver unit or a transceiver module) and a storage module 1203 (or referred to as a storage unit). The interface module 1202 is configured to implement communication with another device. The interface module 1202 may be, for example, a transceiver module or an input/output module.

In a possible design, one or more modules in FIG. 12 may be implemented by one or more processors, or may be implemented by one or more processors and memories, or may be implemented by one or more processors and transceivers, or may be implemented by one or more processors, memories, and transceivers. This is not limited in this embodiment of this application. The processor, the memory, and the transceiver may be disposed separately or may be integrated.

The communication apparatus 120 has a function of implementing the core network device described in embodiments of this application. For example, the communication apparatus 120 includes a corresponding module or unit or corresponding means (means) for the core network device to perform the steps related to the core network device described in embodiments of this application. The function, unit, or means (means) may be implemented by software or hardware, or may be implemented by hardware executing corresponding software, or may be implemented by a combination of software and hardware. For details, refer to the corresponding descriptions in the foregoing corresponding method embodiment. Specifically, refer to the communication apparatus 90 in the embodiment corresponding to FIG. 9.

Alternatively, the communication apparatus 120 has a function of implementing the terminal device described in embodiments of this application. For example, the communication apparatus 120 includes a corresponding module, unit, or means (means) for the terminal device to perform the steps related to the terminal device described in embodiments of this application. The function, unit, or means (means) may be implemented by software or hardware, may be implemented by hardware executing corresponding software, or may be implemented by a combination of software and hardware. For details, refer to the corresponding descriptions in the foregoing corresponding method embodiment. Specifically, refer to the communication apparatus 100 in the embodiment corresponding to FIG. 10.

Alternatively, the communication apparatus 120 has a function of implementing the access network device described in embodiments of this application. For example, the communication apparatus 120 includes a corresponding module, unit, or means (means) for the access network device to perform the steps related to the access network device described in embodiments of this application. The function, unit, or means (means) may be implemented by software or hardware, may be implemented by hardware executing corresponding software, or may be implemented by a combination of software and hardware. For details, refer to the corresponding descriptions in the foregoing corresponding method embodiment. Specifically, refer to the communication apparatus 110 in the embodiment corresponding to FIG. 11.

In addition, this application provides a computer program product. The computer program product includes one or more computer instructions. When the computer program instructions are loaded and executed on a computer, the procedures or functions according to embodiments of this application are all or partially generated. For example, the method related to the access network device in FIG. 3, FIG. 4, FIG. 5, FIG. 7, or FIG. 8 is implemented. For another example, the method related to the terminal device in FIG. 3, FIG. 4, FIG. 5, FIG. 7, or FIG. 8 is implemented. For another example, the method related to the core network device in FIG. 2, FIG. 3, FIG. 4, FIG. 5, FIG. 6, or FIG. 7 is implemented. The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

In addition, this application further provides a computer-readable storage medium. The storage medium stores a computer program. The computer program is executed by a processor to implement the method related to the access network device in FIG. 2, FIG. 3, FIG. 4, FIG. 5, FIG. 6, FIG. 7, or FIG. 8.

In addition, this application further provides a computer-readable storage medium. The storage medium stores a computer program. The computer program is executed by a processor to implement the method related to the terminal device in FIG. 2, FIG. 3, FIG. 4, FIG. 5, FIG. 6, FIG. 7, or FIG. 8.

In addition, this application further provides a computer-readable storage medium. The storage medium stores a computer program. The computer program is executed by a processor to implement the method related to the core network device in FIG. 2, FIG. 3, FIG. 4, FIG. 5, FIG. 6, or FIG. 7.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person skilled in the art can clearly understand that for convenient and brief description, for detailed working processes of the system, apparatus, and unit described above, refer to corresponding processes in the foregoing method embodiments. Details are not described herein again.

## Claims

1. A latency measurement method, comprising:
obtaining, by a core network device, time information of a first packet in a first protocol data unit PDU set at a transmit end;
obtaining, by the core network device, time information of a last packet in the first PDU set at a receive end; and
determining, by the core network device, a transmission latency of the first PDU set between the transmit end and the receive end based on the time information of the first packet at the transmit end and the time information of the last packet at the receive end.

2. The method according to claim 1, wherein determining, by the core network device, the transmission latency of the first PDU set between the transmit end and the receive end based on the time information of the first packet at the transmit end and the time information of the last packet at the receive end comprises:
determining, by the core network device, a difference between the time information of the last packet at the receive end and the time information of the first packet at the transmit end as the transmission latency of the first PDU set between the transmit end and the receive end.

3. The method according to claim 2, wherein an interface between the transmit end and the receive end is an air interface, the time information of the first packet at the transmit end indicates a moment at which a first protocol layer at the transmit end receives the first packet from an upper layer of the first protocol layer, and the time information of the last packet at the receive end indicates a moment at which a first protocol layer at the receive end uploads the last packet to an upper layer of the first protocol layer.

4. The method according to claim 3, wherein the transmit end is an access network device, and the receive end is a terminal device; the transmission latency of the first PDU set between the transmit end and the receive end is an air interface downlink latency of the first PDU set; the time information of the first packet at the transmit end comprises first time information, and the first time information indicates a moment at which a first protocol layer of the access network device receives the first packet from an upper layer of the first protocol layer; and the time information of the last packet at the receive end comprises second time information, and the second time information indicates a moment at which the first protocol layer of the terminal device uploads the last packet to an upper layer of the first protocol layer;
obtaining, by the core network device, the time information of the first packet in the first PDU set at the transmit end comprises:
receiving, by the core network device, the first time information from the access network device; and
obtaining, by the core network device, the time information of the last packet in the first PDU set at the receive end comprises:
obtaining, by the core network device, a moment at which the access network device receives the last packet in the first PDU set from the core network device and an air interface downlink latency of the last packet in the first PDU set, and determining the second time information based on a sum of the moment at which the access network device receives the last packet in the first PDU set from the core network device and the air interface downlink latency of the last packet in the first PDU set; or
receiving, by the core network device, the second time information from the access network device, wherein the second time information is determined based on a sum of a moment at which the access network device receives the last packet in the first PDU set from the core network device and an air interface downlink latency of the last packet in the first PDU set.

5. The method according to claim 3, wherein the transmit end is a terminal device, and the receive end is an access network device; the transmission latency of the first PDU set between the transmit end and the receive end is an air interface uplink latency of the first PDU set; the time information of the first packet at the transmit end comprises third time information, and the third time information indicates a moment at which a first protocol layer of the terminal device receives the first packet from an upper layer of the first protocol layer; and the time information of the last packet at the receive end comprises fourth time information, and the fourth time information indicates a moment at which the first protocol layer of the access network device uploads the last packet to an upper layer of the first protocol layer;
obtaining, by the core network device, the time information of the first packet in the first PDU set at the transmit end comprises:
receiving, by the core network device from the access network device, the third time information from the terminal device; and
obtaining, by the core network device, the time information of the last packet in the first PDU set at the receive end comprises:
receiving, by the core network device, the fourth time information from the access network device.

6. The method according to claim 2, wherein an interface between the transmit end and the receive end is an interface between the core network device and an access network device, the time information of the first packet at the transmit end indicates a moment at which the transmit end sends the first packet, and the time information of the last packet at the receive end indicates a moment at which the receive end receives the last packet.

7. The method according to claim 6, wherein the transmit end is a core network device, and the receive end is an access network device; the transmission latency of the first PDU set between the transmit end and the receive end is a downlink latency of the first PDU set at the interface between the core network device and the access network device; the time information of the first packet at the transmit end comprises fifth time information, and the fifth time information indicates a moment at which the core network device sends the first packet; and the time information of the last packet at the receive end comprises sixth time information, and the sixth time information indicates a moment at which the access network device receives the last packet; and
obtaining, by the core network device, the time information of the last packet in the first PDU set at the receive end comprises:
receiving, by the core network device, the sixth time information from the access network device.

8. The method according to claim 6, wherein the transmit end is an access network device, and the receive end is a core network device; the transmission latency of the first PDU set between the transmit end and the receive end is an uplink latency of the first PDU set at the interface between the core network device and the access network device; the time information of the first packet at the transmit end comprises seventh time information, and the seventh time information indicates a moment at which the access network device sends the first packet; and the time information of the last packet at the receive end comprises eighth time information, and the eighth time information indicates a moment at which the core network device receives the last packet; and
obtaining, by the core network device, the time information of the first packet in the first PDU set at the transmit end comprises:
receiving, by the core network device, the seventh time information from the access network device.

9. The method according to any one of claims 1 to 8, further comprising:
sending, by the core network device, first indication information to the access network device, wherein the first indication information indicates to measure only a first packet and a last packet in a PDU set.

10. The method according to any one of claims 1 to 3 and 5 to 8, further comprising:
receiving, by the core network device, identification information of the first PDU set and an air interface downlink latency of the first PDU set from the access network device.

11. The method according to any one of claims 1 to 10, further comprising:
determining, by the core network device, an uplink latency and/or a downlink latency of the first PDU set between the terminal device and the core network device based on the identification information of the first PDU set, the air interface downlink latency of the first PDU set, the air interface uplink latency of the first PDU set, the downlink latency of the first PDU set at the interface between the core network device and the access network device, and the uplink latency of the first PDU set at the interface between the core network device and the access network device.

12. A latency measurement method, comprising:
obtaining, by an access network device, time information of a first packet in a first PDU set at a transmit end;
obtaining, by the access network device, time information of a last packet in the first PDU set at a receive end; and
determining, by the access network device, a transmission latency of the first PDU set between the transmit end and the receive end based on the time information of the first packet at the transmit end and the time information of the last packet at the receive end.

13. The method according to claim 12, wherein determining, by the access network device, the transmission latency of the first PDU set between the transmit end and the receive end based on the time information of the first packet at the transmit end and the time information of the last packet at the receive end comprises:
determining, by the access network device, a difference between the time information of the last packet at the receive end and the time information of the first packet at the transmit end as the transmission latency of the first PDU set between the transmit end and the receive end.

14. The method according to claim 13, wherein an interface between the transmit end and the receive end is an air interface, the time information of the first packet at the transmit end indicates a moment at which a first protocol layer at the transmit end receives the first packet from an upper layer of the first protocol layer, and the time information of the last packet at the receive end indicates a moment at which a first protocol layer at the receive end uploads the last packet to an upper layer of the first protocol layer.

15. The method according to claim 14, wherein the transmit end is an access network device, and the receive end is a terminal device; the transmission latency of the first PDU set between the transmit end and the receive end is an air interface downlink latency of the first PDU set; the time information of the first packet at the transmit end comprises first time information, and the first time information indicates a moment at which a first protocol layer of the access network device receives the first packet from an upper layer of the first protocol layer; and the time information of the last packet at the receive end comprises second time information, and the second time information indicates a moment at which the first protocol layer of the terminal device uploads the last packet to an upper layer of the first protocol layer; and
obtaining, by the access network device, the time information of the last packet in the first PDU set at the receive end comprises:
receiving, by the access network device, the second time information from the terminal device.

16. The method according to claim 13, further comprising:
configuring, by the access network device, a first timestamp in the first packet in the first PDU set to be sent to the terminal device, wherein the first timestamp indicates a moment at which a first protocol layer of the access network device receives the first packet from an upper layer of the first protocol layer; and
receiving, by the access network device, an air interface downlink latency of the first PDU set from the terminal device.

17. The method according to claim 14, wherein the transmit end is a terminal device, and the receive end is an access network device; the transmission latency of the first PDU set between the transmit end and the receive end is an air interface uplink latency of the first PDU set; the time information of the first packet at the transmit end comprises third time information, and the third time information indicates a moment at which a first protocol layer of the terminal device receives the first packet from an upper layer of the first protocol layer; and the time information of the last packet at the receive end comprises fourth time information, and the fourth time information indicates a moment at which the first protocol layer of the access network device uploads the last packet to an upper layer of the first protocol layer; and
obtaining, by the access network device, the time information of the first packet in the first PDU set at the transmit end comprises:
receiving, by the access network device, the third time information from the terminal device.

18. The method according to claim 17, wherein the third time information comprises a second timestamp configured by the terminal device in the first packet in the first PDU set; and
obtaining, by the access network device, the time information of the first packet in the first PDU set at the transmit end comprises:
obtaining, by the access network device, the second timestamp from the first packet in the first PDU set from the terminal device.

19. The method according to any one of claims 12 to 18, wherein the first packet in the first PDU set sent by the transmit end to the receive end comprises a timestamp configured by the transmit end, and the timestamp indicates the moment at which the first protocol layer at the transmit end receives the first packet from the upper layer of the first protocol layer.

20. The method according to claim 19, wherein the first packet in the first PDU set further comprises identification information of the first PDU set, the last packet in the first PDU set comprises the identification information of the first PDU set, and another packet in the first PDU set does not comprise the identification information of the first PDU set.

21. The method according to claim 19, wherein each packet in the first PDU set comprises identification information of the first PDU set; the first packet in the first PDU set further comprises initial packet indication information, and the initial packet indication information indicates that a packet carrying the initial packet indication information is the initial packet in the first PDU set; and the last packet in the first PDU set further comprises tail packet indication information, and the tail packet indication information indicates that a packet carrying the tail packet indication information is the tail packet in the first PDU set.

22. The method according to claim 20 or 21, wherein each packet in the first PDU set further comprises a sequence number of each packet in the first PDU set.

23. The method according to claim 21 or 22, wherein each packet in the first PDU set carries the timestamp configured by the transmit end, and the timestamp in each packet indicates the moment at which the first protocol layer of the terminal device receives the packet from the upper layer of the first protocol layer.

24. The method according to any one of claims 12 to 18, wherein the last packet in the first PDU set sent by the transmit end to the receive end comprises a timestamp of the first packet in the first PDU set sent by the transmit end to the receive end, the timestamp indicates the moment at which the first protocol layer at the transmit end receives the first packet from the upper layer of the first protocol layer, and another packet in the first PDU set does not carry a timestamp.

25. The method according to any one of claims 12 to 24, further comprising:
sending, by the access network device, second indication information to the terminal device, wherein the second indication information indicates to measure a transmission latency at a PDU set granularity.

26. The method according to claim 25, wherein the second indication information comprises the identification information of the first PDU set.

27. The method according to claim 25 or 26, wherein before sending, by the access network device, the second indication information to the terminal device, the method further comprises:
receiving, by the access network device, first indication information from a core network device, wherein the first indication information indicates to measure only a first packet and a last packet in a PDU set.

28. A latency measurement method, comprising:
receiving, by a terminal device, second indication information from an access network device, wherein the second indication information indicates to measure a transmission latency at a PDU set granularity; and
sending, by the terminal device, latency measurement information of a first PDU set to the access network device.

29. The method according to claim 28, wherein the second indication information comprises identification information of the first PDU set.

30. The method according to claim 28 or 29, wherein the latency measurement information of the first PDU set comprises an air interface downlink latency of the first PDU set; and
the method further comprises:
obtaining, by the terminal device, first time information, wherein the first time information indicates a moment at which a first protocol layer of the access network device receives the first packet from an upper layer of the first protocol layer;
obtaining, by the terminal device, second time information, wherein the second time information indicates a moment at which the first protocol layer of the terminal device uploads the last packet to an upper layer of the first protocol layer; and
determining, by the terminal device, a difference between the moment indicated by the second time information and the moment indicated by the first time information as the air interface downlink latency of the first PDU set.

31. The method according to claim 30, wherein the first time information comprises a first timestamp configured by the access network device in the first packet in the first PDU set.

32. The method according to claim 28 or 29, further comprising:
configuring, by the terminal device, a second timestamp in the first packet in the first PDU set to be sent to the access network device, wherein the second timestamp indicates a moment at which a first protocol layer of the terminal device receives the first packet from an upper layer of the first protocol layer.

33. The method according to claim 28 or 29, wherein the latency measurement information of the first PDU set comprises second time information and/or third time information, the second time information indicates a moment at which the first protocol layer of the terminal device uploads the last packet to an upper layer of the first protocol layer, and the third time information indicates a moment at which the first protocol layer of the terminal device receives the first packet from the upper layer of the first protocol layer.

34. A communication apparatus, comprising a processor and a memory, wherein
the memory stores a computer program; and
the processor invokes the computer program to enable the communication apparatus to perform the method according to any one of claims 1 to 11.

35. A communication apparatus, comprising a processor and a memory, wherein
the memory stores a computer program; and
the processor invokes the computer program to enable the communication apparatus to perform the method according to any one of claims 12 to 27.

36. A communication apparatus, comprising a processor and a memory, wherein
the memory stores a computer program; and
the processor invokes the computer program to enable the communication apparatus to perform the method according to any one of claims 28 to 33.

37. A computer-readable storage medium, storing instructions, wherein when the instructions are run on a computer, the computer is enabled to perform the method according to any one of claims 1 to 11, the method according to any one of claims 12 to 27, or the method according to any one of claims 28 to 33.
